(19) Europäisches Patentamt European Patent Office Office européen des brevets

(11) **EP 4 546 463 A1**

(12) **EUROPEAN PATENT APPLICATION**
published in accordance with Art. 153(4) EPC

(43) Date of publication:
**30.04.2025 Bulletin 2025/18**

(21) Application number: **23826619.1**

(22) Date of filing: **09.06.2023**

(51) International Patent Classification (IPC):
*H01M 4/525* (2010.01)   *C01G 53/00* (2025.01)
*H01M 4/36* (2006.01)

(52) Cooperative Patent Classification (CPC):
**C01G 53/00; H01M 4/36; H01M 4/525**

(86) International application number:
**PCT/IB2023/055955**

(87) International publication number:
**WO 2023/248044 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.06.2022 JP 2022100475**
**15.07.2022 JP 2022113775**
**21.04.2023 JP 2023070128**

(71) Applicant: **Semiconductor Energy Laboratory Co., Ltd.**
**Atsugi-shi, Kanagawa 243-0036 (JP)**

(72) Inventors:
• **MIKAMI, Mayumi**
**Atsugi-shi, Kanagawa 243-0036 (JP)**
• **SAITO, Jo**
**Atsugi-shi, Kanagawa 243-0036 (JP)**
• **TANEMURA, Kazuki**
**Atsugi-shi, Kanagawa 243-0036 (JP)**
• **YAMAZAKI, Shunpei**
**Atsugi-shi, Kanagawa 243-0036 (JP)**

(74) Representative: **Glawe, Delfs, Moll**
**Partnerschaft mbB von**
**Patent- und Rechtsanwälten**
**Postfach 13 03 91**
**20103 Hamburg (DE)**

(54) **POSITIVE ELECTRODE ACTIVE MATERIAL, SECONDARY BATTERY, ELECTRONIC DEVICE, AND VEHICLE**

(57)     A positive electrode active material with a small decrease in discharging capacity in charging and discharging cycles is provided. The positive electrode active material contains cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.526 \pm 0.1°$, $2\theta = 37.391 \pm 0.1°$, $2\theta = 37.628 \pm 0.1°$, $2\theta = 39.015 \pm 0.1°$, $2\theta = 44.947 \pm 0.1°$, $2\theta = 49.029 \pm 0.1°$, and $2\theta = 58.857 \pm 0.1°$.

FIG. 1A
100

EP 4 546 463 A1

## Description

Technical Field

One embodiment of the present invention relates to an object, a method, or a manufacturing method. Alternatively, the present invention relates to a process, a machine, manufacture, or a composition of matter. One embodiment of the present invention relates to a power storage device including a secondary battery, a semiconductor device, a display device, a light-emitting device, a lighting device, an electronic device, or a manufacturing method thereof.

Note that an electronic device in this specification means all devices including power storage devices, and electro-optical devices including power storage devices, information terminal devices including power storage devices, and the like are all electronic devices.

Background Art

In recent years, a variety of power storage devices such as lithium-ion secondary batteries, lithium-ion capacitors, air batteries, and all-solid-state batteries have been actively developed. In particular, demand for lithium-ion secondary batteries with high output and a high capacity has rapidly grown with the development of the semiconductor industry. The lithium-ion secondary batteries are essential as rechargeable energy supply sources for today's information society.

In particular, secondary batteries for mobile electronic devices, for example, are highly demanded to have high discharging capacity per weight and excellent cycle performance. In order to meet such demands, positive electrode active materials in positive electrodes of secondary batteries have been actively improved (e.g., Patent Document 1 to Patent Document 3). In addition, crystal structures of positive electrode active materials have been studied (Non-Patent Document 1 to Non-Patent Document 5).

In addition, X-ray diffraction (XRD) is one of methods used for analysis of the crystal structure of a positive electrode active material. With the use of ICSD (Inorganic Crystal Structure Database) described in Non-Patent Document 6, XRD data can be analyzed. For example, the ICSD can be referred to for the lattice constant of the lithium cobalt oxide described in Non-Patent Document 7. For Rietveld analysis, the analysis program RIETAN-FP (Non-Patent Document 8) can be used, for example.

As image processing software, for example, ImageJ (Non-Patent Document 9 to Non-Patent Document 11) is known. Using this software makes it possible to analyze the shape of a positive electrode active material, for example.

Nanobeam electron diffraction can also be effectively used to identify the crystal structure of a positive electrode active material, in particular, the crystal structure of a surface portion of the positive electrode active material. For analysis of electron diffraction patterns, an analysis program called ReciPro (Non-Patent Document 12) can be used, for example.

A fluoride such as fluorite (calcium fluoride) has been used as flux in iron manufacture or the like for a very long time, and the physical properties have been studied (Non-Patent Document 13).

Various researches and developments have been conducted for the reliability and safety of lithium-ion secondary batteries. For example, Non-Patent Document 14 shows the thermal stability of a positive electrode active material and an electrolyte solution.

[References]

[Patent Documents]

[Patent Document 1] Japanese Published Patent Application No. 2019-179758
[Patent Document 2] International Publication WO 2020/026078 Pamphlet
[Patent Document 3] Japanese Published Patent Application No. 2020-140954

[Non-patent Documents]

[Non-Patent Document 1] Toyoki Okumura et al., "Correlation of lithium ion distribution and X-ray absorption near-edge structure in O3- and O2-lithium cobalt oxides from first-principle calculation", Journal of Materials Chemistry, 2012, 22, pp. 17340-17348
[Non-Patent Document 2] Motohashi, T. et al., "Electronic phase diagram of the layered cobalt oxide system LixCoO2 (0.0 ≤ x ≤ 1.0)", Physical Review B, 80 (16); 165114

[Non-Patent Document 3] Zhaohui Chen et al., "Staging Phase Transitions in LixCoO2", Journal of The Electrochemical Society, 2002, 149 (12), A1604-A1609

[Non-Patent Document 4] G. G. Amatucci et al., "CoO2, The End Member of the LixCoO2 Solid Solution", J. Electrochem. Soc., 143 (3), 1114 (1996).

[Non-Patent Document 5] Atsushi Ueda and Tsutomu Ohzuku, "Solid-State Redox Reactions of LiNi1/2Co1/2O2 (R3m) for 4 Volt Secondary Lithium Cells" Journal of The Electrochemical Society, Vol. 141, No. 8, August 1994.

[Non-Patent Document 6] Belsky, A. et al., "New developments in the Inorganic Crystal Structure Database (ICSD): accessibility in support of materials research and design", Acta Cryst., (2002) B58, 364-369.

[Non-Patent Document 7] Akimoto, J.; Gotoh, Y.; Oosawa, Y. "Synthesis and structure refinement of LiCoO2 single crystals", Journal of Solid State Chemistry (1998) 141, pp. 298-302.

[Non-Patent Document 8] F. Izumi and K. Momma, Solid State Phenom., 130, 15-20 (2007).

[Non-Patent Document 9] Rasband, W. S., ImageJ, U. S. National Institutes of Health, Bethesda, Maryland, USA, http://rsb.info.nih.gov/ij/, 1997-2012.

[Non-Patent Document 10] Schneider, C. A, Rasband, W. S., Eliceiri K. W. "NIH Image to ImageJ: 25 years of image analysis". Nature Methods, 9, pp. 671-675, 2012.

[Non-Patent Document 11] Abramoff, M. D., Magelhaes, P. J., Ram, S. J. "Image Processing with ImageJ", Biophotonics International, volume 11, issue 7, pp. 36-42, 2004.

[Non-Patent Document 12] Seto, Y. & Ohtsuka, M, "ReciPro: free and open-source multipurpose crystallographic software integrating a crystal model database and viewer, diffraction and microscopy simulators, and diffraction data analysis tools" (2022). J. Appl. Cryst., 55.

[Non-Patent Document 13] W. E. Counts, R. Roy, and E. F. Osborn, "Fluoride Model Systems: II, The Binary Systems CaF2-BeF2, MgF2-BeF2, and LiF-MgF2", Journal of the American Ceramic Society, 36 [1] 12-17 (1953).

[Non-Patent Document 14] Shinya Kitano et al., GS Yuasa Technical Report, Vol. 2, No. 2, December, 2015, pp. 18-24.

Summary of the Invention

Problems to be Solved by the Invention

There is room for improvements in a variety of aspects of lithium-ion secondary batteries, such as discharging capacity, cycle performance, reliability, safety, and costs.

Therefore, positive electrode active materials that can improve discharging capacity, cycle performance, reliability, safety, cost, and the like when used in secondary batteries have been needed.

An object of one embodiment of the present invention is to provide a positive electrode active material or a composite oxide which inhibits a decrease in discharging capacity during charging and discharging cycles when used in a lithium-ion secondary battery. Another object is to provide a positive electrode active material or a composite oxide whose crystal structure is not easily broken even when charging and discharging are repeated. Another object is to provide a positive electrode active material or a composite oxide with high discharging capacity. Another object is to provide a positive electrode active material or a composite oxide with high productivity. Another object is to provide a positive electrode active material or a composite oxide with high thermal stability. Another object is to provide a highly safe or highly reliable secondary battery.

Another object of one embodiment of the present invention is to provide a power storage device or a manufacturing method thereof.

Note that the description of these objects does not preclude the presence of other objects. One embodiment of the present invention does not need to achieve all of these objects. Other objects can be derived from the description of the specification, the drawings, and the claims.

Means for Solving the Problems

One embodiment of the present invention is a positive electrode active material including cobalt, nickel, oxygen, and an additive element. The proportion of nickel in the sum of the cobalt and the nickel, Ni/(Co+Ni), is greater than 0.025 and less than or equal to 0.215. The positive electrode active material includes a surface portion and an inner portion. The concentration of the additive element at the surface portion is higher than the concentration of the additive element in the inner portion. The additive element is one or two or more selected from magnesium, fluorine, calcium, aluminum, silicon, vanadium, copper, and gallium.

Another embodiment of the present invention is a positive electrode active material including cobalt, nickel, oxygen, and an additive element. The proportion of nickel in the sum of the cobalt and the nickel, Ni/(Co+Ni), is greater than 0.175 and less than or equal to 0.215. The positive electrode active material includes a surface portion and an inner portion.

The average of the detected amount of the additive element at the surface portion is higher than the average of the detected amount of the additive element in the inner portion. The additive element is one or two or more selected from magnesium, fluorine, calcium, aluminum, silicon, vanadium, copper, and gallium.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.526 \pm 0.1°$, $2\theta = 37.391 \pm 0.1°$, $2\theta = 37.628 \pm 0.1°$, $2\theta = 39.015 \pm 0.1°$, $2\theta = 44.947 \pm 0.1°$, $2\theta = 49.029 \pm 0.1°$, and $2\theta = 58.857 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.351 \pm 0.1°$, $2\theta = 37.412 \pm 0.1°$, $2\theta = 38.974 \pm 0.1°$, $2\theta = 44.865 \pm 0.1°$, $2\theta = 48.864 \pm 0.1°$, and $2\theta = 58.621 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.7 V (vs. Li/Li$^+$) is analyzed by powder X-ray diffraction using CuK$\alpha_1$ radiation, diffraction peaks are observed at at least two or more of $2\theta = 18.382 \pm 0.1°$, $2\theta = 37.391 \pm 0.1°$, and $2\theta = 44.886 \pm 0.1°$.

Another embodiment of the present invention is a positive electrode active material including cobalt, nickel, oxygen, and an additive element. The additive element is magnesium and fluorine. The proportion of nickel in the sum of the cobalt and the nickel, Ni/(Co+Ni), is greater than 0.175 and less than or equal to 0.215. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.516 \pm 0.1°$, $2\theta = 37.391 \pm 0.1°$, $2\theta = 37.586 \pm 0.1°$, $2\theta = 38.995 \pm 0.1°$, $2\theta = 44.947 \pm 0.1°$, $2\theta = 49.039 \pm 0.1°$, and $2\theta = 58.898 \pm 0.1°$.

Another embodiment of the present invention is a positive electrode active material including cobalt, nickel, oxygen, and an additive element. The additive element is magnesium and fluorine. The proportion of nickel in the sum of the cobalt and the nickel, Ni/(Co+Ni), is greater than 0.175 and less than or equal to 0.215. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.608 \pm 0.1°$, $2\theta = 37.381 \pm 0.1°$, $2\theta = 37.792 \pm 0.1°$, $2\theta = 39.015 \pm 0.1°$, $2\theta = 44.999 \pm 0.1°$, $2\theta = 49.101 \pm 0.1°$, and $2\theta = 58.991 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.403 \pm 0.1°$, $2\theta = 37.412 \pm 0.1°$, $2\theta = 38.985 \pm 0.1°$, $2\theta = 44.875 \pm 0.1°$, $2\theta = 48.916 \pm 0.1°$, and $2\theta = 58.662 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.608 \pm 0.1°$, $2\theta = 37.381 \pm 0.1°$, $2\theta = 37.854 \pm 0.1°$, $2\theta = 38.995 \pm 0.1°$, $2\theta = 45.009 \pm 0.1°$, and $2\theta = 59.073 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.175 and less than or equal to 0.215. When the positive electrode active material in a state of being charged to 4.7 V (vs. Li/Li$^+$) is analyzed by powder X-ray diffraction using CuK$\alpha_1$ radiation, diffraction peaks are observed at at least two or more of $2\theta = 18.413 \pm 0.1°$, $2\theta = 36.774 \pm 0.1°$, $2\theta = 37.412 \pm 0.1°$, and $2\theta = 44.958 \pm 0.1°$.

Another embodiment of the present invention is a positive electrode active material including cobalt, nickel, oxygen, and an additive element. The proportion of nickel in the sum of the cobalt and the nickel, Ni/(Co+Ni), is greater than 0.075 and less than or equal to 0.125. The positive electrode active material includes a surface portion and an inner portion. The average of the detected amount of the additive element at the surface portion is higher than the average of the detected amount of the additive element in the inner portion. The additive element is one or more selected from magnesium, fluorine, calcium, aluminum, silicon, vanadium, copper, and gallium.

Another embodiment of the present invention is a positive electrode active material including cobalt, nickel, and oxygen. The proportion of nickel in the sum of the cobalt and the nickel, Ni/(Co+Ni), is greater than 0.075 and less than or equal to 0.125. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.434 \pm 0.1°$, $2\theta = 37.401 \pm 0.1°$, $2\theta = 39.005 \pm 0.1°$, $2\theta = 44.896 \pm 0.1°$, $2\theta = 48.957 \pm 0.1°$, and $2\theta = 58.744 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.075 and less than or equal to 0.125. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.567 \pm 0.1°$, $2\theta = 37.381 \pm 0.1°$, $2\theta = 39.005 \pm 0.1°$, and $2\theta = 44.978 \pm 0.1°$.

Another embodiment of the present invention is a positive electrode active material including cobalt, nickel, oxygen, and an additive element. The additive element is magnesium and fluorine. The proportion of nickel in the sum of the cobalt and the nickel, Ni/(Co+Ni), is greater than 0.075 and less than or equal to 0.125. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.537 \pm 0.1°$, $2\theta = 37.391 \pm 0.1°$, $2\theta = 37.658 \pm 0.1°$, $2\theta = 39.005 \pm 0.1°$, $2\theta = 44.958 \pm 0.1°$, $2\theta = 49.039 \pm 0.1°$, and $2\theta = 58.898 \pm 0.1°$.

Another embodiment of the present invention is a positive electrode active material including cobalt, nickel, oxygen, and an additive element. The additive element is magnesium and fluorine. The proportion of nickel in the sum of the cobalt and the nickel, Ni/(Co+Ni), is greater than 0.075 and less than or equal to 0.125. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.547 \pm 0.1°$, $2\theta = 37.381 \pm 0.1°$, $2\theta = 38.985 \pm 0.1°$, $2\theta = 44.978 \pm 0.1°$, $2\theta = 49.101 \pm 0.1°$, and $2\theta = 59.073 \pm 0.1°$.

Another embodiment of the present invention is a positive electrode active material including cobalt, nickel, oxygen, and an additive element. The proportion of nickel in the sum of the cobalt and the nickel, Ni/(Co+Ni), is greater than 0.025 and less than or equal to 0.075. The positive electrode active material includes a surface portion and an inner portion. The average of the detected amount of the additive element at the surface portion is higher than the average of the detected amount of the additive element in the inner portion. The additive element is one or more selected from magnesium, fluorine, calcium, aluminum, silicon, vanadium, copper, and gallium.

Another embodiment of the present invention is a positive electrode active material including cobalt, nickel, and oxygen. The proportion of nickel in the sum of the cobalt and the nickel, Ni/(Co+Ni), is greater than 0.025 and less than or equal to 0.075. When the positive electrode active material in a state of being charged to 4.5 V (vs. Li/Li$^+$) is analyzed by powder X-ray diffraction using CuK$\alpha_1$ radiation, diffraction peaks are observed at at least two or more of $2\theta = 18.567 \pm 0.1°$, $2\theta = 37.381 \pm 0.1°$, $2\theta = 37.710 \pm 0.1°$, $2\theta = 38.985 \pm 0.1°$, $2\theta = 44.968 \pm 0.1°$, $2\theta = 49.070 \pm 0.1°$, and $2\theta = 58.980 \pm 0.1°$.

Another embodiment of the present invention is a positive electrode active material including cobalt, nickel, and oxygen. The proportion of nickel in the sum of the cobalt and the nickel, Ni/(Co+Ni), is greater than 0.025 and less than or equal to 0.075. When the positive electrode active material in a state of being charged to 4.6 V (vs. Li/Li$^+$) is analyzed by powder X-ray diffraction using CuK$\alpha_1$ radiation, diffraction peaks are observed at at least two or more of $2\theta = 18.866 \pm 0.1°$, $2\theta = 37.319 \pm 0.1°$, $2\theta = 38.337 \pm 0.1°$, $2\theta = 38.985 \pm 0.1°$, $2\theta = 45.143 \pm 0.1°$, $2\theta = 49.368 \pm 0.1°$, and $2\theta = 59.515 \pm 0.1°$.

Another embodiment of the present invention is a secondary battery including the above positive electrode active material.

Another embodiment of the present invention is an electronic device including the above secondary battery.

Another embodiment of the present invention is a vehicle including the above secondary battery.

Effect of the Invention

One embodiment of the present invention can provide a positive electrode active material or a composite oxide which inhibits a decrease in discharging capacity during charging and discharging cycles when used in a lithium-ion secondary battery. A positive electrode active material or a composite oxide whose crystal structure is not easily broken even when charging and discharging are repeated can be provided. A positive electrode active material or a composite oxide with high discharging capacity can be provided. Another object is to provide a positive electrode active material or a composite oxide with high productivity. A positive electrode active material or a composite oxide with high thermal stability can be provided. A highly safe or highly reliable secondary battery can be provided.

One embodiment of the present invention can provide a power storage device or a manufacturing method thereof.

Note that the description of these effects does not preclude the presence of other effects. Note that one embodiment of the present invention does not need to have all the effects. Note that other effects will be apparent from the description of the specification, the drawings, the claims, and the like, and other effects can be derived from the description of the specification, the drawings, the claims, and the like.

Brief Description of the Drawings

FIG. 1A and FIG. 1B are cross-sectional views of a positive electrode active material.
FIG. 2 is an example of a TEM image showing crystal orientations substantially aligned with each other.

FIG. 3A is an example of a STEM image showing crystal orientations substantially aligned with each other. FIG. 3B shows an FFT pattern of a region of a rock-salt crystal RS, and FIG. 3C shows an FFT pattern of a region of a layered rock-salt crystal LRS.

FIG. 4A to FIG. 4C are diagrams showing formation methods of a positive electrode active material.

FIG. 5A and FIG. 5B are cross-sectional views of a positive electrode active material.

FIG. 6 is a diagram illustrating the appearance of a secondary battery.

FIG. 7A to FIG. 7C are diagrams illustrating a method for manufacturing a secondary battery.

FIG. 8A to FIG. 8H are diagrams illustrating examples of electronic devices.

FIG. 9A to FIG. 9D are diagrams illustrating examples of electronic devices.

FIG. 10A to FIG. 10C are diagrams illustrating examples of electronic devices.

FIG. 11A to FIG. 11C are diagrams illustrating examples of vehicles.

FIG. 12 shows XRD patterns of positive electrode active materials.

FIG. 13A and FIG. 13B show XRD patterns of positive electrode active materials.

FIG. 14A and FIG. 14B show XRD patterns of positive electrode active materials.

FIG. 15 shows XRD patterns of a positive electrode active material.

FIG. 16A and FIG. 16B show XRD patterns of a positive electrode active material.

FIG. 17A and FIG. 17B show XRD patterns of a positive electrode active material.

FIG. 18 shows XRD patterns of a positive electrode active material.

FIG. 19A and FIG. 19B show XRD patterns of a positive electrode active material.

FIG. 20A and FIG. 20B show XRD patterns of a positive electrode active material.

FIG. 21 shows XRD patterns of a positive electrode active material.

FIG. 22A and FIG. 22B show XRD patterns of a positive electrode active material.

FIG. 23A and FIG. 23B show XRD patterns of a positive electrode active material.

FIG. 24 shows XRD patterns of a positive electrode active material.

FIG. 25A and FIG. 25B show XRD patterns of a positive electrode active material.

FIG. 26A and FIG. 26B show XRD patterns of a positive electrode active material.

FIG. 27 shows XRD patterns of a positive electrode active material.

FIG. 28A and FIG. 28B show XRD patterns of a positive electrode active material.

FIG. 29A and FIG. 29B show XRD patterns of a positive electrode active material.

FIG. 30 shows XRD patterns of a positive electrode active material.

FIG. 31A and FIG. 31B show XRD patterns of a positive electrode active material.

FIG. 32A and FIG. 32B show XRD patterns of a positive electrode active material.

FIG. 33 shows XRD patterns of a positive electrode active material.

FIG. 34A and FIG. 34B show XRD patterns of a positive electrode active material.

FIG. 35A and FIG. 35B show XRD patterns of a positive electrode active material.

FIG. 36 shows XRD patterns of a positive electrode active material.

FIG. 37A and FIG. 37B show XRD patterns of a positive electrode active material.

FIG. 38A and FIG. 38B show XRD patterns of a positive electrode active material.

Mode for Carrying Out the Invention

Embodiment examples for carrying out the present invention will be described below with reference to the drawings and the like. Note that the present invention should not be interpreted as being limited to the embodiment examples given below. Embodiments for carrying out the invention can be changed unless they deviates from the spirit of the present invention.

In this specification and the like, a space group is represented using the short notation of the international notation (or the Hermann-Mauguin notation). In addition, the Miller index is used for the expression of crystal planes and crystal orientations. In the crystallography, a bar is placed over a number in the expression of space groups, crystal planes, and crystal orientations; in this specification and the like, because of format limitations, space groups, crystal planes, and crystal orientations are sometimes expressed by placing a minus sign (-) in front of a number instead of placing a bar over the number. Furthermore, an individual direction which shows an orientation in a crystal is denoted with "[ ]", a set direction which shows all of the equivalent orientations is denoted with "< >", an individual plane which shows a crystal plane is denoted with "( )", and a set plane having equivalent symmetry is denoted with "{ }". A trigonal system represented by the space group R-3m is generally represented by a composite hexagonal lattice for easy understanding of the structure and is also represented by a composite hexagonal lattice in this specification and the like unless otherwise specified. In some cases, not only $(hkl)$ but also $(hkil)$ is used as the Miller index. Here, $i$ is $-(h+k)$. In this specification and the like, a crystal plane or the like in the space group R-3m is represented with use of a composite hexagonal lattice, unless otherwise specified.

In this specification and the like, particles are not necessarily spherical (with a circular cross section). Other examples of the cross-sectional shapes of particles include an ellipse, a rectangle, a trapezoid, a triangle, a quadrilateral with rounded corners, and an asymmetrical shape, and a particle may have an indefinite shape.

A theoretical capacity of a positive electrode active material refers to the amount of electricity obtained when all lithium that can be inserted and extracted and is contained in the positive electrode active material is extracted. For example, the theoretical capacity of $LiCoO_2$ is 274 mAh/g, the theoretical capacity of $LiNiO_2$ is 274 mAh/g, and the theoretical capacity of $LiMn_2O_4$ is 148 mAh/g.

The remaining amount of lithium in a positive electrode active material, which is compared to the theoretical capacity, is represented by $x$ in a compositional formula, e.g., $x$ in $Li_xMO_2$. Note that $M$ represents a transition metal and $M$ is the sum of cobalt and nickel unless otherwise specified in this specification and the like. In the case of a positive electrode active material in a secondary battery, x = (theoretical capacity - charging capacity)/theoretical capacity can be satisfied. For example, in the case where a secondary battery using $LiMO_2$ as a positive electrode active material is charged to 219.2 mAh/g, it can be said that the positive electrode active material is represented by $Li_{0.2}MO_2$ or $x = 0.2$. Note that "x in $Li_xMO_2$ is small" means, for example, $0.1 < x \leq 0.24$. The amount of lithium extracted from a positive electrode active material with respect to the theoretical capacity is sometimes referred to as a charge depth. In this specification and the like, the charge depth is $1-x$.

In the case where lithium cobalt nickel oxide substantially satisfies the stoichiometric composition, the lithium cobalt nickel oxide is $LiMO_2$ and the occupancy rate of Li in lithium sites is x = 1. For a secondary battery after its discharging ends, it can be said that lithium cobalt nickel oxide is $LiMO_2$ and x = 1. Here, "discharging ends" means that a voltage becomes lower than or equal to 2.5 V (lithium counter electrode) at a current of 100 mA/g, for example. In a lithium ion secondary battery, the voltage rapidly decreases when the occupancy rate of lithium in the lithium sites becomes x = 1 and no more lithium can enter the lithium ion secondary battery. At this time, it can be said that discharging ends. In general, in a lithium ion secondary battery using $LiMO_2$, the discharging voltage rapidly decreases before discharging voltage reaches 2.5 V; thus, discharging ends under the above-described conditions. When the positive electrode after discharging ends is analyzed by an XRD or the like, a general crystal structure of $LiMO_2$ can be observed.

Charging capacity and/or discharging capacity used for calculation of $x$ in $Li_xMO_2$ is preferably measured under the condition of no influence or small influence of a short circuit and/or decomposition of an electrolyte solution, for example. For example, data of a secondary battery, suffering from a sudden change of capacity that seems to result from a short circuit, should not be used for calculation of $x$.

The space group of a crystal structure is identified by XRD, electron diffraction, neutron diffraction, or the like. Thus, in this specification and the like, belonging to a space group, being attributed to a space group, or being a space group can be rephrased as being identified as a space group.

Furthermore, when the arrangement of anions is close to a cubic close-packed structure, the arrangement can be regarded as the cubic close-packed structure. The arrangement of anions forming the cubic close-packed structure refers to a state where anions in a second layer are positioned above voids between anions packed in a first layer, and anions in a third layer are placed at the positions that are positioned right above voids between the anions in the second layer and are not positioned right above the anions in the first layer. Accordingly, anions do not necessarily form a cubic lattice structure. At the same time, actual crystals always have a defect and thus, analysis results are not necessarily consistent with the theory. For example, in an electron diffraction pattern or an FFT (fast Fourier transform) pattern of a TEM image or the like, a spot may appear in a position slightly different from a theoretical position. For example, anions may be regarded as forming a cubic close-packed structure when a difference in orientation from a theoretical position is 5° or less or 2.5° or less.

The distribution of an element indicates a region where the element is successively detected by a successive analysis method to the extent that the detection value is no longer on the noise level. The region where the element is successively detected to the extent that the detection value is no longer on the noise level can also be regarded as a region where the element is surely detected when analysis is performed a plurality of times, for example.

A positive electrode active material to which an additive element is added is sometimes referred to as a composite oxide, a positive electrode member, a positive electrode material, a secondary battery positive electrode member, or the like. In this specification and the like, the positive electrode active material of one embodiment of the present invention preferably contains a compound. In this specification and the like, the positive electrode active material of one embodiment of the present invention preferably contains a composition. In this specification and the like, the positive electrode active material of one embodiment of the present invention preferably contains a composite. The positive electrode active material refers to a group of particles of lithium cobalt nickel oxide, for example.

In the case where the features of individual particles of a positive electrode active material are described in the following embodiment and the like, not all the particles necessarily have the features. When 50 % or more, preferably 70 % or more, further preferably 90 % or more of three or more randomly selected particles of a positive electrode active material have the features, for example, it can be said that an effect of improving the characteristics of the positive electrode active material and a secondary battery including the positive electrode active material is sufficiently obtained.

The voltage of a positive electrode generally increases with increasing charging voltage of a secondary battery.

The positive electrode active material of one embodiment of the present invention has a stable crystal structure even at a high voltage. The stable crystal structure of the positive electrode active material in a charged state can inhibit a charge and discharge capacity decrease due to repeated charging and discharging.

A short circuit of a secondary battery might cause not only a malfunction in charging operation and/or discharging operation of the secondary battery but also heat generation and ignition. In order to obtain a safe secondary battery, a short-circuit current is preferably inhibited even at a high charging voltage. In the positive electrode active material of one embodiment of the present invention, a short-circuit current is inhibited even at a high charging voltage. Thus, a secondary battery having a high discharging capacity and a high level of safety can be obtained.

Note that the description is made on the assumption that materials (such as a positive electrode active material, a negative electrode active material, an electrolyte, and a separator) of a secondary battery have not deteriorated unless otherwise specified. A decrease in discharging capacity due to aging treatment and burn-in treatment during the manufacturing process of a secondary battery is not regarded as deterioration. For example, the case where discharging capacity is higher than or equal to 97 % of the rated capacity of a lithium-ion secondary battery cell and an assembled lithium-ion secondary battery (hereinafter, referred to as a lithium-ion secondary battery) can be regarded as a non-deteriorated state. The rated capacity conforms to JIS C 8711:2019 in the case of a lithium-ion secondary battery for a portable device. The rated capacities of other lithium-ion secondary batteries conform to JIS described above, JIS for electric vehicle propulsion, industrial use, and the like, standards defined by IEC, and the like.

Note that in this specification and the like, in some cases, materials included in a secondary battery that have not deteriorated are referred to as initial products or materials in an initial state, and materials that have deteriorated (have discharging capacity lower than 97 % of the rated capacity of the secondary battery) are referred to as products in use, materials in a used state, products that are already used, or materials in an already-used state.

Note that in this specification and the like, the ignition in a nail penetration test refers to a state where fire is observed outside an exterior body. In addition, the ignition refers to a state where thermal runaway has occurred in a secondary battery. For example, a state where a pyrolysate(s) of a positive electrode and/or a negative electrode are/is observed at a position more than or equal to 2 cm away from a penetration point after a nail penetration test is finished can also be referred to as a state where the ignition has occurred.

For example, in the case where $LiMO_2$ having a layered rock-salt structure is used as a positive electrode active material, theoretically, the $O/M$ (atomic ratio) is 2. Meanwhile, the $O/M$ (atomic ratio) decreases when oxygen is released from $LiMO_2$ owing to thermal runaway. Therefore, for example, in the case where the $O/M$ (atomic ratio) in the EDX analysis is lower than 1.3 at a position more than or equal to 2 cm away from a penetration point after a nail penetration test is finished can be referred to as a state where thermal runaway has occurred, that is, the ignition has occurred.

The pyrolysate(s) of the positive electrode and/or the negative electrode also contains, for example, aluminum oxide formed by oxidation of aluminum of a positive electrode current collector or copper oxide formed by oxidation of copper of a negative electrode current collector.

Meanwhile, a state where a spark and/or smoke that are/is observed but do/does not spread, that is, thermal runaway of the entire secondary battery does not occur, is not referred to as ignition. For example, a secondary battery that does not suffer from the above ignition even after undergoing a nail penetration test can be regarded as a secondary battery that does not ignite.

(Embodiment 1)

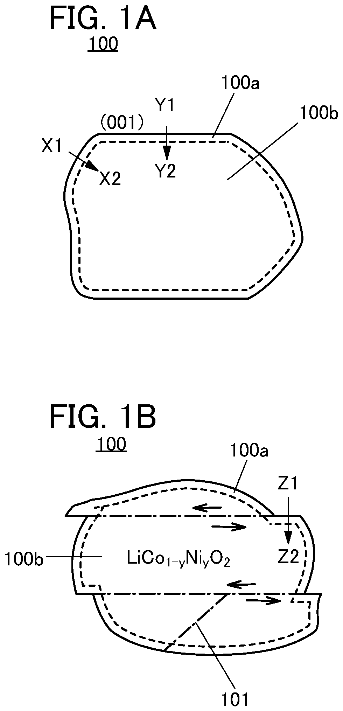

In this embodiment, a positive electrode active material 100 of one embodiment of the present invention will be described with reference to FIG. 1A and FIG. 1B.

FIG. 1A and FIG. 1B are each a cross-sectional view of the positive electrode active material 100 of one embodiment of the present invention. As illustrated in FIG. 1A, the positive electrode active material 100 includes a surface portion 100a and an inner portion 100b. In each drawing, a dashed line denotes a boundary between the surface portion 100a and the inner portion 100b. In FIG. 1B, a dashed-dotted line represents part of a crystal grain boundary 101. In the drawing, (001) refers to a (001) plane of lithium cobalt nickel oxide. $LiCo_{1-y}Ni_yO_2$ belongs to a space group R-3m.

The positive electrode active material 100 preferably has high crystallinity. The positive electrode active material 100 is preferably a single-particle (also referred to as a primary particle) rather than a secondary particle. A particle of the positive electrode active material 100 is further preferably a single crystal.

In this specification and the like, the surface portion 100a of the positive electrode active material 100 refers to a region that is within 50 nm, preferably within 35 nm, further preferably within 20 nm in depth from the surface toward the inner portion, and most preferably a region positioned within 10 nm in depth from the surface toward the inner portion in a direction perpendicular or substantially perpendicular to the surface. Note that substantially perpendicular refers to a state where an angle is greater than or equal to 80° and less than or equal to 100°. A plane generated by a fissure and/or a crack can be considered as a surface. The surface portion 100a can be rephrased as the vicinity of a surface, a region in the vicinity of a surface, or a shell.

The inner portion 100b refers to a region deeper than the surface portion 100a of the positive electrode active material. The inner portion 100b can be rephrased as an inner region or a core.

A surface of the positive electrode active material 100 refers to a surface of a composite oxide including the surface portion 100a and the inner portion 100b. Thus, the positive electrode active material 100 does not contain a material to which a metal oxide that does not contain a lithium site contributing to charging and discharging, such as aluminum oxide ($Al_2O_3$), is attached, or a carbonate, a hydroxy group, or the like which is chemically adsorbed after formation of the positive electrode active material. The attached metal oxide refers to, for example, a metal oxide having a crystal structure different from that of the inner portion 100b.

Furthermore, an electrolyte, an organic solvent, a binder, a conductive material, and a compound originating from any of these that are attached to the positive electrode active material 100 are not included either.

The crystal grain boundary 101 refers to, for example, a portion where particles of the positive electrode active material 100 adhere to each other or a portion where a crystal orientation changes inside the positive electrode active material 100, i.e., a portion where repetition of bright lines and dark lines is discontinuous in a STEM image or the like, a portion including a large number of crystal defects, a portion with a disordered crystal structure, or the like. A crystal defect refers to a defect that can be observed with a cross-sectional TEM (transmission electron microscope), a cross-sectional STEM image, or the like, i.e., a structure containing atoms between lattices, a hollow, or the like. The crystal grain boundary 101 is one of plane defects. The vicinity of the crystal grain boundary 101 refers to a region positioned within 10 nm from the crystal grain boundary 101.

[Main component]

A positive electrode active material of a lithium-ion secondary battery needs to contain a transition metal which can take part in an oxidation-reduction reaction in order to maintain a neutrally charged state even when lithium ions are inserted and extracted. It is preferable that the positive electrode active material 100 of one embodiment of the present invention mainly contain cobalt as a main component of the transition metal $M$ taking part in an oxidation-reduction reaction. In this specification and the like, the main component of the transition metal $M$ refers to the component having the highest atomic ratio among the transition metal $M$. Note that in the case where a plurality of transition metals $M$ have the highest atomic ratio, any of these can be referred to as a main component. The positive electrode active material 100 preferably contains nickel in addition to cobalt. When nickel is contained, the positive electrode active material can have high thermal stability at a temperature higher than room temperature, e.g., higher than or equal to 45 °C, preferably higher than or equal to 65 °C.

The positive electrode active material 100 of one embodiment of the present invention contains lithium, cobalt, nickel, and oxygen. The positive electrode active material 100 preferably contains an additive element in addition to them. The positive electrode active material 100 preferably contains a material where an additive element is added to lithium cobalt nickel oxide ($LiCo_{1-y}Ni_yO_2$). Note that the positive electrode active material 100 of one embodiment of the present invention has a crystal structure described later. Thus, the composition of the lithium cobalt nickel oxide is not strictly limited to Li: (Co+Ni): O = 1: 1:2.

The proportion of nickel in the sum of cobalt and nickel, Ni/(Co+Ni), i.e., $y$ in $LiCo_{1-y}Ni_yO_2$, is preferably greater than 0 and less than 0.5. It is further preferably greater than or equal to 0.1 and less than or equal to 0.3. It is still further preferably greater than 0.025 and less than or equal to 0.215.

When Ni/(Co+Ni) is greater than 0.025 and less than or equal to 0.215, $CoO_2$ (O1) is unlikely to be generated when charging is performed at a high voltage, e.g., 4.7 V (vs Li/Li+). Thus, even when charging and discharging are repeated, a shift in the $MO_2$ layers is unlikely to occur, which probably increases the stability of the crystal structure.

Examples of the case where $y$ in $LiCo_{1-y}Ni_yO_2$ is greater than or equal to 0.1 and less than or equal to 0.3 include the case where Co: Ni = 90:10 (atomic ratio), Co: Ni = 80:20 (atomic ratio), or Co: Ni = 70:30 (atomic ratio).

In the case where the positive electrode active material 100 contains an additive element, one or two or more selected from magnesium, fluorine, calcium, aluminum, silicon, vanadium, copper, and gallium can be used as an additive element $A$.

When the amount of the additive element $A$ is too small, an effect of chemically stabilizing the positive electrode active material 100 cannot be sufficiently exhibited; however, when the amount of the additive element A is too large, charging and discharging capacity and the like might be adversely affected. Therefore, when the composition of the positive electrode active material 100 is represented by $LiCo_{1-y-z}Ni_yA_zO_2F_n$ in which fluorine to be anions is represented by F and the others are representatively denoted by $A$, $z+n$ is preferably greater than 0 and less than or equal to 0.1.

The additive element is preferably dissolved in the positive electrode active material 100. Thus, when STEM-EDX line analysis is performed, for example, the depth at which the amount of the detected additive element increases is preferably positioned at a deeper level, i.e., on the inner portion side of the positive electrode active material 100, than the depth at which the amount of the detected transition metal $M$ increases.

Note that in this specification and the like, the depth at which the amount of detected element increases in STEM-EDX line analysis refers to the depth at which a measured value, which can be determined not to be a noise in terms of intensity, spatial resolution, and the like, is successively obtained.

These additive elements further stabilize the crystal structure of the positive electrode active material 100. In this specification and the like, the additive element can be rephrased as part of a raw material or a mixture.

Note that as the additive element, magnesium, fluorine, calcium, aluminum, silicon, vanadium, copper, or gallium is not necessarily contained.

[Crystal structure]

The positive electrode active material 100 of one embodiment of the present invention preferably has a layered rock-salt crystal structure belonging to the space group R-3m in a discharged state, i.e., a state where x in $Li_xMoO_2$ is 1. A composite oxide having a layered rock-salt structure excels as a positive electrode active material of a secondary battery because it has high discharging capacity and a two-dimensional diffusion path for lithium ions and is thus suitable for an insertion/extraction reaction of lithium ions. For this reason, it is particularly preferable that the inner portion 100b, which accounts for the majority of the volume of the positive electrode active material 100, have a layered rock-salt crystal structure.

Meanwhile, the surface portion 100a of the positive electrode active material 100 of one embodiment of the present invention preferably has a function of reinforcing the layered structure, which is formed of octahedrons of the transition metal $M$ and oxygen, of the inner portion 100b so that the layered structure does not break even when lithium is extracted from the positive electrode active material 100 by charging. Alternatively, the surface portion 100a preferably functions as a barrier film of the positive electrode active material 100. Alternatively, the surface portion 100a, which is the outer portion of the positive electrode active material 100, preferably reinforces the positive electrode active material 100. Here, the term "reinforce" means inhibition of a change in the structures of the surface portion 100a and the inner portion 100b of the positive electrode active material 100 such as extraction of oxygen and/or a shift in the layered structure formed of octahedrons of the transition metal $M$ and oxygen. The term "reinforce" also means inhibition of oxidative decomposition of an electrolyte on the surface of the positive electrode active material 100.

Accordingly, the surface portion 100a preferably has a crystal structure different from that of the inner portion 100b. The surface portion 100a preferably has a more stable composition and a more stable crystal structure than those of the inner portion 100b at room temperature (25 °C). For example, at least part of the surface portion 100a of the positive electrode active material 100 of one embodiment of the present invention preferably has the rock-salt crystal structure. Alternatively, the surface portion 100a preferably has both a layered rock-salt crystal structure and a rock-salt crystal structure. Alternatively, the surface portion 100a preferably has features of both a layered rock-salt crystal structure and a rock-salt crystal structure.

The surface portion 100a is a region from which lithium ions are extracted initially in charging, and is a region that tends to have a lower concentration of lithium than the inner portion 100b. It can be said that bonds between atoms are partly cut on the surface of the particle of the positive electrode active material 100 included in the surface portion 100a. Thus, the surface portion 100a is regarded as a region that tends to be unstable and easily starts deterioration of the crystal structure. For example, it is presumable that a shift in the crystal structure of the layered structure formed of octahedrons of the transition metal $M$ and oxygen in the surface portion 100a has an influence on the inner portion 100b to cause a shift in the crystal structure of the layered structure in the inner portion 100b, leading to degradation of the crystal structure in the whole positive electrode active material 100. Meanwhile, when the surface portion 100a can be made sufficiently stable, the layered structure, which is formed of octahedrons of the transition metal $M$ and oxygen, of the inner portion 100b is unlikely to be broken even with small x in $Li_xMO_2$. Furthermore, a shift in layers, which are formed of octahedrons of the transition metal $M$ and oxygen, of the inner portion 100b can be inhibited. Small x in $Li_xMO_2$ means, for example, x is less than or equal to 0.24.

[Distribution of additive element]

In order that the surface portion 100a can have a chemically stable composition and a chemically stable crystal structure, the surface portion 100a preferably contains an additive element, further preferably contains a plurality of additive elements. The surface portion 100a preferably has a larger average value of the detected amounts of one or two or more selected from the additive elements than the inner portion 100b. The one or two or more selected from the additive elements contained in the positive electrode active material 100 preferably have a concentration gradient. In addition, it is further preferable that the additive elements in the positive electrode active material 100 be differently distributed. For example, it is further preferable that peaks of the detected amounts of the additive elements in the surface portion be exhibited at different depths from the surface or the reference point in EDX line analysis described later. The peak of the detected amount here refers to the local maximum value of the detected amount in the surface portion 100a or a region ranging from the surface to 50 nm or less. The detected amount refers to counts in EDX line analysis, for example.

It is preferable that the surface portion 100a and the inner portion 100b contain the same main component (here, cobalt), and the surface portion 100a and the inner portion 100b be connected to each other. Since the surface portion 100a protects the inner portion 100b, this structure has an excellent effect on an internal short circuit when used for a secondary battery. This structure includes the surface portion 100a, and thus can be regarded as a structure of the positive electrode active material, which does not ignite or is less likely to ignite when penetrated by a nail or the like from the outside of a secondary battery, for example.

For example, when the average of the detected amount of one selected from the additive elements, e.g., fluorine, in the surface portion 100a is larger than that in the inner portion 100b, an excessive reaction between the positive electrode active material 100 and an electrolyte solution can be inhibited. Thus, when the positive electrode active material 100 is used in a secondary battery, safety of the secondary battery against an internal short circuit or the like is expected to be increased. In addition, the corrosion resistance to hydrofluoric acid can be effectively increased.

It is further preferable that the average of the detected amounts of one or two or more selected from the additive elements in the surface portion 100a be higher than that in the inner portion 100b, in which case the conductivity of the surface of the positive electrode active material 100 is changed. For example, the powder resistivity of the positive electrode active material 100 is preferably increased. When the positive electrode active material 100 having a high powder resistivity is used in a secondary battery, safety of the secondary battery against an internal short circuit or the like is expected to be increased.

[Difference in distribution of additive element by crystal plane]

Note that the additive elements do not necessarily have similar concentration gradients and similar distributions throughout the surface portion 100a of the positive electrode active material 100. An arrow X1-X2 is shown in FIG. 1A as a depth direction example of a crystal plane, which is not the (001) plane, of lithium cobalt nickel oxide of the positive electrode active material 100 of one embodiment of the present invention. An arrow Y1-Y2 is shown as a depth direction example of the (001) plane.

The distribution of the additive element at the surface parallel to the (001) may be different from that at other surfaces in the positive electrode active material 100. For example, the average of the detected amounts of one or two or more selected from the additive elements may be lower at the surface parallel to the (001) indicated by the arrow Y1-Y2 and the surface portion 100a thereof than at a surface having an orientation other than the (001) orientation indicated by the arrow X1-X2. Alternatively, at the surface parallel to the (001) and the surface portion 100a thereof, the concentration of one or two or more selected from the additive elements may be lower than 1 atomic%. Alternatively, the peaks of the detected amounts of one or two or more selected from the additive elements at the surface parallel to the (001) and the surface portion 100a thereof may be positioned at portions shallower from the surface than the peaks of the detected amounts of the one or two or more selected from the additive elements at the surface having an orientation other than the (001) orientation.

In a layered rock-salt crystal structure belonging to R-3m, cations are arranged parallel to the (001) plane. In other words, an $MO_2$ layer and a lithium layer are alternately stacked parallel to the (001) plane. Accordingly, a diffusion path of lithium ions also exists parallel to the (001) plane.

Since the $MO_2$ layer is relatively stable, a surface of the positive electrode active material 100 is more stable when having a (001) orientation. A main diffusion path of lithium ions in charging and discharging is not exposed at the (001) plane.

By contrast, a diffusion path of lithium ions is exposed at a surface having an orientation other than a (001) orientation. Thus, the surface with an orientation other than a (001) orientation and the surface portion 100a thereof easily lose stability because they are regions where extraction of lithium ions starts as well as important regions for maintaining a diffusion path of lithium ions. It is thus extremely important to reinforce the surface having an orientation other than a (001) orientation and the surface portion 100a thereof so that the crystal structure of the whole positive electrode active material 100 is maintained.

In the formation method, as described in the following embodiment, in which high-purity $LiCo_{1-y}Ni_yO_2$ is formed, the additive element is mixed afterwards, and heating is performed, the additive element spreads mainly through a diffusion path of lithium ions. Thus, distribution of the additive element at the surface having an orientation other than a (001) orientation and the surface portion 100a thereof can easily fall within a preferred range.

As a depth direction example of the (001) plane generated when the positive electrode active material 100 slips in a direction parallel to the (001) plane, an arrow Z1-Z2 is shown in FIG. 1B. The arrow Z1-Z2 is similar to the plane parallel to the (001) plane indicated by the arrow Y1-Y2. That is, the average of the detected amounts of one or two or more selected from the additive elements may be lower than that at the surface having an orientation other than the

(001) orientation. Alternatively, the concentration of one or two or more selected from the additive elements may be lower than 1 atomic%.

When a plurality of the additive elements are contained as described above, the effects of the additive elements contribute synergistically to further stabilization of the surface portion 100a.

Note that the surface portion 100a occupied by only a compound of an additive element and oxygen is not preferred because this surface portion 100a would make insertion and extraction of lithium difficult. Thus, the surface portion 100a should contain at least cobalt or nickel, also contain lithium in a discharged state, and have the path through which lithium is inserted and extracted.

To ensure the sufficient path through which lithium is inserted and extracted, the sum of the detected amounts of cobalt and nickel is preferably larger than that of the additive element in the surface portion 100a.

[Substantially aligned]

It is preferable that the crystal structure continuously change from the inner portion 100b toward the surface owing to the above-described concentration gradient of the additive element. Alternatively, the crystal orientations of the surface portion 100a and the inner portion 100b are preferably substantially aligned with each other.

For example, a crystal structure preferably changes continuously from the layered rock-salt inner portion 100b toward the surface and the surface portion 100a that have a rock-salt structure or have features of both a rock-salt structure and a layered rock-salt structure. Alternatively, the orientation of the surface portion 100a that has a rock-salt structure or has the features of both a rock-salt structure and a layered rock-salt structure and the orientation of the inner portion 100b having the layered rock-salt structure are preferably substantially aligned with each other.

In this specification and the like, a layered rock-salt crystal structure, which belongs to the space group R-3m, of a composite oxide containing lithium and the transition metal $M$ refers to a crystal structure in which a rock-salt ion arrangement where cations and anions are alternately arranged is included and lithium and the transition metal $M$ are regularly arranged to form a two-dimensional plane, so that lithium can be diffused two-dimensionally. Note that a defect such as a cation or anion vacancy may exist. Moreover, in the layered rock-salt crystal structure, strictly, a lattice of a rock-salt crystal is distorted in some cases.

A rock-salt crystal structure refers to a structure in which a cubic crystal structure with the space group Fm-3m or the like is included and cations and anions are alternately arranged. Note that a cation or anion vacancy may be included.

Having features of both a layered rock-salt crystal structure and a rock-salt crystal structure can be determined by electron diffraction, a TEM image, a cross-sectional STEM image, and the like.

There is no distinction among cation sites in a rock-salt structure. Meanwhile, a layered rock-salt crystal structure has two types of cation sites: one type is mostly occupied by lithium, and the other is occupied by the transition metal $M$. A stacked-layer structure where two-dimensional planes of cations and two-dimensional planes of anions are alternately arranged is the same in a rock-salt structure and a layered rock-salt structure. Given that the center spot (transmission spot) among bright spots in an electron diffraction pattern corresponding to crystal planes that form the two-dimensional planes is at the origin point 000, the bright spot nearest to the center spot is on the (111) plane in an ideal rock-salt crystal structure, for instance, and on the

(003) plane in a layered rock-salt crystal structure, for instance. For example, when electron diffraction patterns of rock-salt MgO and layered rock-salt $LiCoO_2$ are compared to each other, the distance between the bright spots on the (003) plane of $LiCoO_2$ is observed at a distance approximately half the distance between the bright spots on the (111) plane of MgO. Thus, for instance, when two phases of rock-salt MgO and layered rock-salt $LiCoO_2$ are included in a region to be analyzed, a plane orientation in which bright spots with high luminance and bright spots with low luminance are alternately arranged is seen in an electron diffraction pattern. A bright spot common between the rock-salt structure and the layered rock-salt structure has high luminance, whereas a bright spot caused only in the layered rock-salt structure has low luminance.

When a layered rock-salt crystal structure is observed from a direction perpendicular to the c-axis in a cross-sectional STEM image and the like, layers observed with high luminance and layers observed with low luminance are alternately observed. Such a feature is not observed in a rock-salt crystal structure because there is no distinction among cation sites therein. When a crystal structure having the features of both a rock-salt crystal structure and a layered rock-salt crystal structure is observed from a given crystal orientation, layers observed with high luminance and layers observed with low luminance are alternately observed in a cross-sectional STEM image and the like, and a metal that has a larger atomic number than lithium is present in part of the layers with low luminance, i.e., the lithium layers.

Anions of a layered rock-salt crystal and anions of a rock-salt crystal form a cubic close-packed structure (face-centered cubic lattice structure). Thus, when a layered rock-salt crystal and a rock-salt crystal are in contact with each other, there is a crystal plane at which orientations of cubic closest packed structures composed of anions are aligned with each other.

The description can also be made as follows. Anions on the (111) plane of a cubic crystal structure have a triangle lattice. A layered rock-salt structure, which belongs to the space group R-3m and is a rhombohedral structure, is generally represented by a composite hexagonal lattice for easy understanding of the structure, and the (0001) plane of the layered rock-salt structure has a hexagonal lattice. The triangle lattice on the (111) plane of the cubic crystal has atomic arrangement similar to that of the hexagonal lattice on the (0001) plane of the layered rock-salt structure. These lattices being consistent with each other can be expressed as "orientations of the cubic close-packed structures are aligned with each other".

Note that a space group of the layered rock-salt crystal is R-3m, which is different from the space group Fm-3m of a rock-salt crystal (a space group of a general rock-salt crystal); thus, the Miller index of the crystal plane satisfying the above conditions in the layered rock-salt crystal is different from that in the rock-salt crystal. In this specification, a state where the orientations of the cubic close-packed structures composed of anions in the layered rock-salt crystal and the rock-salt crystal are aligned with each other is referred to as a state where crystal orientations are substantially aligned with each other in some cases. In addition, topotaxy refers to having similarity in a three-dimensional structure such that crystal orientations are substantially aligned with each other, or to having the same orientations crystallographically.

The crystal orientations in two regions being substantially aligned with each other can be determined, for example, from a TEM (Transmission Electron Microscope) image, a STEM (Scanning Transmission Electron Microscope) image, a HAADF-STEM (High-angle Annular Dark Field Scanning TEM) image, an ABF-STEM (Annular Bright-Field Scanning Transmission Electron microscope) image, and an electron diffraction pattern. It can be judged also from an FFT pattern of a TEM image or an FFT pattern of a STEM image or the like. Furthermore, XRD (X-ray Diffraction), neutron diffraction, and the like can also be used for judging.

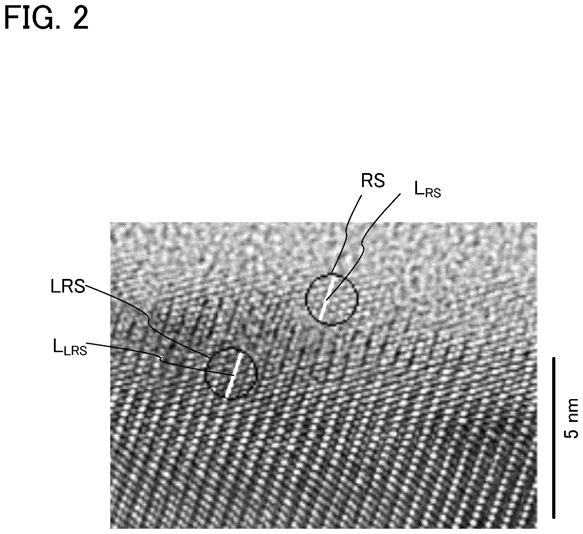

FIG. 2 shows an example of a TEM image in which orientations of a layered rock-salt crystal LRS and a rock-salt crystal RS are substantially aligned with each other. In a TEM image, a STEM image, a HAADF-STEM image, an ABF-STEM image, and the like, an image reflecting a crystal structure is obtained.

For example, in a high-resolution TEM image, a contrast derived from a crystal plane is obtained. When an electron beam is incident perpendicularly to the c-axis of a layered rock-salt type composite hexagonal lattice, for example, a contrast derived from the (0003) plane is obtained as repetition of bright bands (bright strips) and dark bands (dark strips) because of diffraction and interference of the electron beam. Thus, when repetition of bright lines and dark lines is observed and the angle between the bright lines (e.g., $L_{RS}$ and $L_{LRS}$ in FIG. 2) is less than or equal to 5° or less than or equal to 2.5° in the TEM image, it can be determined that the crystal planes are substantially aligned with each other, that is, crystal orientations are substantially aligned with each other. Similarly, when the angle between the dark lines is less than or equal to 5° or less than or equal to 2.5°, it can be judged that crystal orientations are substantially aligned with each other.

In a HAADF-STEM image, a contrast proportional to the atomic number is obtained, and an element having a larger atomic number is observed to be brighter. For example, in the case of lithium cobalt nickel oxide that has a layered rock-salt structure belonging to the space group R-3m, cobalt (atomic number: 27) and nickel (atomic number: 28) have the large atomic number; hence, an electron beam is strongly scattered at the positions of cobalt and nickel atoms, and arrangement of the cobalt and nickel atoms is observed as bright lines or arrangement of high-luminance dots. Thus, when the lithium cobalt nickel oxide having a layered rock-salt crystal structure is observed in the direction perpendicular to the c-axis, arrangement of the cobalt and nickel atoms is observed as bright lines or arrangement of high-luminance dots, and arrangement of lithium atoms and oxygen atoms is observed as dark lines or a low-luminance region in the direction perpendicular to the c-axis. The same applies to the case where fluorine (atomic number: 9) and magnesium (atomic number: 12) are included as the additive elements of the lithium cobalt nickel oxide.

Consequently, in the case where repetition of bright lines and dark lines is observed in two regions having different crystal structures and the angle between the bright lines is 5° or less or 2.5° or less in a HAADF-STEM image, it can be judged that arrangements of the atoms are substantially aligned with each other, that is, orientations of the crystals are substantially aligned with each other. Similarly, when the angle between the dark lines is 5° or less or 2.5° or less, it can be judged that orientations of the crystals are substantially aligned with each other.

With an ABF-STEM, an element having a smaller atomic number is observed to be brighter, but a contrast corresponding to the atomic number is obtained as with a HAADF-STEM; hence, in an ABF-STEM image, crystal orientations can be judged as in a HAADF-STEM image.

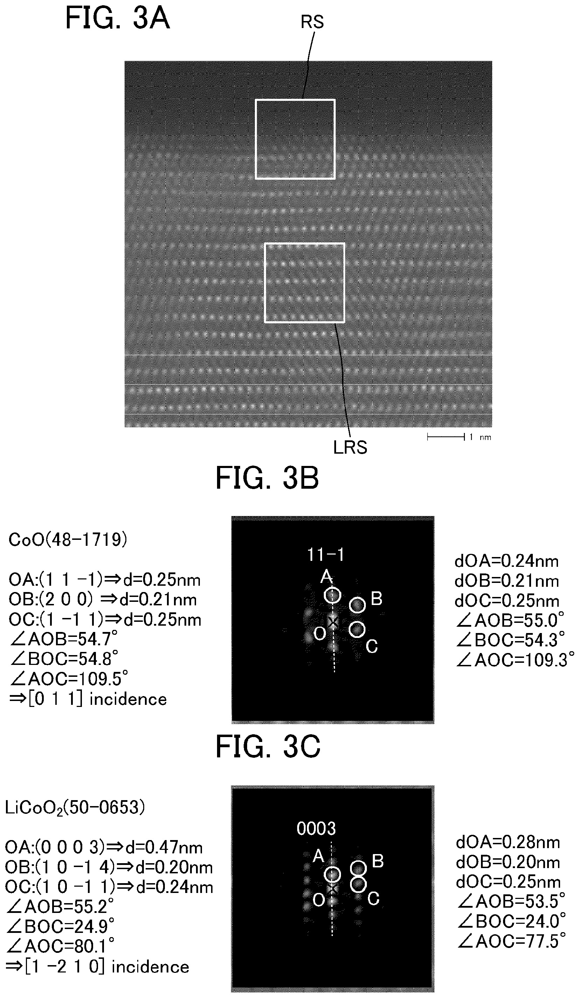

FIG. 3A shows an example of a STEM image in which orientations of the layered rock-salt crystal LRS and the rock-salt crystal RS are substantially aligned with each other. FIG. 3B shows an FFT pattern of a region of the rock-salt crystal RS, and FIG. 3C shows an FFT pattern of a region of the layered rock-salt crystal LRS. In FIG. 3B and FIG. 3C, the composition, the JCPDS card number, and d values and angles to be calculated are shown on the left. The measured values are shown on the right. A spot denoted by O is zero-order diffraction.

A spot denoted by A in FIG. 3B is derived from 11-1 reflection of a cubic structure. A spot denoted by A in FIG. 3C is derived from 0003 reflection of a layered rock-salt structure. It is found from FIG. 3B and FIG. 3C that the direction of the 11-1 reflection of the cubic structure and the direction of the 0003 reflection of the layered rock-salt structure are substantially aligned with each other. That is, a straight line that passes through AO in FIG. 3B is substantially parallel to a straight line that passes through AO in FIG. 3C. Here, the terms "substantially aligned" and "substantially parallel" mean that the angle is less than or equal to 5° or less than or equal to 2.5°.

When the orientations of the layered rock-salt crystal and the rock-salt crystal are substantially aligned with each other in the above manner in FFT pattern and electron diffraction pattern, the <0003> orientation of the layered rock-salt crystal and the <11-1> orientation of the rock-salt crystal may be substantially aligned with each other. In that case, it is preferable that these reciprocal lattice points be spot-shaped, that is, they be not connected to other reciprocal lattice points. The state where reciprocal lattice points are spot-shaped and not connected to other reciprocal lattice points means high crystallinity.

When the direction of the 11-1 reflection of the cubic structure and the direction of the 0003 reflection of the layered rock-salt structure are substantially aligned with each other as described above, a spot that is not derived from the 0003 reflection of the layered rock-salt structure may be observed, depending on the incident direction of the electron beam, on a reciprocal lattice space different from the direction of the 0003 reflection of the layered rock-salt structure. For example, a spot denoted by B in FIG. 3C is derived from 1014 reflection of the layered rock-salt structure. This is sometimes observed at a position where the difference in orientation from the reciprocal lattice point derived from the 0003 reflection of the layered rock-salt structure (A in FIG. 3C) is greater than or equal to 52° and less than or equal to 56° (i.e., $\angle$AOB is 52° to 56°) and d is greater than or equal to 0.19 nm and less than or equal to 0.21 nm. Note that these indices are just an example, and the spot does not necessarily correspond with them. For example, the spot may be a reciprocal lattice point equivalent to 0003 and 1014.

Similarly, a spot that is not derived from the 11-1 reflection of the cubic structure may be observed on a reciprocal lattice space different from the direction where the 11-1 reflection of the cubic structure is observed. For example, a spot denoted by B in FIG. 3B is derived from 200 reflection of the cubic structure. This diffraction spot is sometimes observed at a position where the difference in orientation of reflection derived from the 11-1 reflection of the cubic structure (A in FIG. 3B) is greater than or equal to 54° and less than or equal to 56° (i.e., $\angle$AOB is greater than or equal to 54° and less than or equal to 56°). Note that these indices are just an example, and the spot does not necessarily correspond with them. For example, the spot may be a reciprocal lattice point equivalent to 11-1 and 200.

It is known that in a layered rock-salt positive electrode active material, such as lithium cobalt nickel oxide, the (0003) plane and a plane equivalent thereto and the (10-14) plane and a plane equivalent thereto are likely to be crystal planes. Thus, a sample to be observed can be processed to be thin by FIB or the like such that an electron beam of a TEM, for example, enters in [1-210] (incidence), in order to easily observe the (0003) plane in careful observation of the shape of the positive electrode active material with a SEM or the like. To judge whether crystal orientations are aligned, a sample is preferably processed to be thin so that the (0003) plane of the layered rock-salt structure is easily observed.

[Crystal grain boundary]

It is further preferable that the additive element contained in the positive electrode active material 100 of one embodiment of the present invention have the above-described distribution and be at least partly unevenly distributed at the crystal grain boundary 101 and the vicinity thereof.

Note that in this specification and the like, uneven distribution means that the concentration of an element in a certain region differs from that in another region. This may be rephrased as segregation, precipitation, unevenness, deviation, or a mixture of a high-concentration portion and a low-concentration portion.

For example, the average of the detected amounts of the additive elements at the crystal grain boundary 101 and the vicinity thereof in the positive electrode active material 100 is preferably higher than that in the crystal grain boundary 101 and the vicinity thereof in the inner portion 100b.

The crystal grain boundary 101 is a type of plane defect. Thus, the crystal grain boundary tends to be unstable and the crystal structure easily starts to change like the surface of the particle. Thus, the higher the concentration of the additive element in the crystal grain boundary 101 and its vicinity is, the more effectively the change in the crystal structure can be inhibited.

[Crystal structure in the state where x in Li$_x$MO$_2$ is small]

The crystal structure of the positive electrode active material 100 of one embodiment of the present invention in the charged state, i.e., in the state where x in Li$_x$MO$_2$ is small, is preferably as follows.

When the positive electrode active material 100 in which Ni/(Co+Ni) is greater than 0.175 and less than or equal to 0.215, typically 0.2, is analyzed by powder X-ray diffraction using CuK$\alpha_1$ radiation in the state where charging has been performed to 4.5 V (vs. Li/Li$^+$), diffraction peaks are preferably observed at at least two or more of $2\theta = 18.526 \pm 0.1°$, $2\theta = 37.391 \pm 0.1°$, $2\theta = 37.628 \pm 0.1°$, $2\theta = 39.015 \pm 0.1°$, $2\theta = 44.947 \pm 0.1°$, $2\theta = 49.029 \pm 0.1°$, and $2\theta = 58.857 \pm 0.1°$. In addition, the positive electrode active material 100 preferably has a crystal structure belonging to the space group R-3m, the lattice constants of the crystal structure are preferably a = 2.813 $\pm$ 0.02 (Å) and c = 14.33 $\pm$ 0.02 (Å), and the unit cell volume is preferably 98.17 $\pm$ 1.6 (Å$^3$). The lattice constants are further preferably a = 2.813 $\pm$ 0.01 (Å) and c = 14.33 $\pm$ 0.01 (Å), and the unit cell volume is further preferably 98.17 $\pm$ 1.4 (Å$^3$). The crystallite size is preferably greater than or equal to 100 nm, further preferably greater than or equal to 150 nm. Note that in this specification and the like, A $\pm$ B means greater than or equal to (A - B) and less than or equal to (A + B).

When the positive electrode active material 100 in which Ni/(Co+Ni) is greater than 0.175 and less than or equal to 0.215, typically 0.2, is analyzed by powder X-ray diffraction using CuK$\alpha_1$ radiation in the state where charging has been performed to 4.6 V (vs. Li/Li$^+$), diffraction peaks are preferably observed at at least two or more of $2\theta$ = 18.351 $\pm$ 0.1°, $2\theta$ = 37.412 $\pm$ 0.1°, $2\theta$= 38.974 $\pm$ 0.1°, $2\theta$= 44.865 $\pm$ 0.1°, $2\theta$= 48.864 $\pm$ 0.1°, and $2\theta$= 58.621 $\pm$ 0.1°. In addition, the positive electrode active material 100 preferably has a crystal structure belonging to the space group R-3m, the lattice constants of the crystal structure are preferably a = 2.808 $\pm$ 0.02 (Å) and c = 14.43 $\pm$ 0.02 (Å), and the unit cell volume is preferably 98.55 $\pm$ 1.6 (Å$^3$). The lattice constants are further preferably a = 2.808 $\pm$ 0.01 (Å) and c = 14.43 $\pm$ 0.01 (Å), and the unit cell volume is further preferably 98.55 $\pm$ 1.4 (Å$^3$). The crystallite size is preferably greater than or equal to 70 nm, further preferably greater than or equal to 90 nm.

When the positive electrode active material 100 in which Ni/(Co+Ni) is greater than 0.175 and less than or equal to 0.215, typically 0.2, is analyzed by powder X-ray diffraction using CuK$\alpha_1$ radiation in the state where charging has been performed to 4.7 V (vs. Li/Li$^+$), diffraction peaks are preferably observed at at least two or more of $2\theta$ = 18.382 $\pm$ 0.1°, $2\theta$= 37.391 $\pm$ 0.1°, and $2\theta$= 44.886 $\pm$ 0.1°. In addition, the positive electrode active material 100 preferably has a crystal structure belonging to the space group R-3m, the lattice constants of the crystal structure are preferably a = 2.808 $\pm$ 0.02 (Å) and c = 14.40 $\pm$ 0.02 (Å), and the unit cell volume is preferably 98.32 $\pm$ 1.6 (Å$^3$). The lattice constants are further preferably a = 2.808 $\pm$ 0.01 (Å) and c = 14.40 $\pm$ 0.01 (Å), and the unit cell volume is further preferably 98.32 $\pm$ 1.4 (Å$^3$). The crystallite size is preferably greater than or equal to 80 nm, further preferably greater than or equal to 100 nm.

When the positive electrode active material 100 in which Ni/(Co+Ni) is greater than 0.175 and less than or equal to 0.215, typically 0.2, and magnesium that is 0.5 atomic% of the transition metal $M$ and fluorine that is 1.5 atomic% of the transition metal $M$ are contained as additive elements, is analyzed by powder X-ray diffraction using CuK$\alpha_1$ radiation in the state where charging has been performed to 4.5 V (vs. Li/Li$^+$), diffraction peaks are preferably observed at at least two or more of $2\theta$= 18.516 $\pm$ 0.1°, $2\theta$= 37.391 $\pm$ 0.1°, $2\theta$= 37.586 $\pm$ 0.1°, $2\theta$= 38.995 $\pm$ 0.1°, $2\theta$= 44.947 $\pm$ 0.1°, $2\theta$= 49.039 $\pm$ 0.1°, and $2\theta$= 58.898 $\pm$ 0.1°. In addition, the positive electrode active material 100 preferably has a crystal structure belonging to the space group R-3m, the lattice constants of the crystal structure are preferably a = 2.812 $\pm$ 0.02 (Å) and c = 14.32 $\pm$ 0.02 (Å), and the unit cell volume is preferably 98.02 $\pm$ 1.6 (Å$^3$). The lattice constants are further preferably a = 2.812 $\pm$ 0.01 (Å) and c = 14.32 $\pm$ 0.01 (Å), and the unit cell volume is further preferably 98.02 $\pm$ 1.4 (Å$^3$). The crystallite size is preferably greater than or equal to 100 nm, further preferably greater than or equal to 150 nm.

When the positive electrode active material 100 in which Ni/(Co+Ni) is greater than 0.175 and less than or equal to 0.215, typically 0.2, and magnesium that is 0.5 atomic% of the transition metal $M$ and fluorine that is 1.5 atomic% of the transition metal $M$ are contained as additive elements, is analyzed by powder X-ray diffraction using CuK$\alpha_1$ radiation in the state where charging has been performed to 4.6 V (vs. Li/Li$^+$), diffraction peaks are preferably observed at at least two or more of $2\theta$= 18.608 $\pm$ 0.1°, $2\theta$= 37.381 $\pm$ 0.1°, $2\theta$= 37.792 $\pm$ 0.1°, $2\theta$= 39.015 $\pm$ 0.1°, $2\theta$= 44.999 $\pm$ 0.1°, $2\theta$= 49.101 $\pm$ 0.1°, and $2\theta$= 58.991 $\pm$ 0.1°. In addition, the positive electrode active material 100 preferably has a crystal structure belonging to the space group R-3m, the lattice constants of the crystal structure are preferably a = 2.812 $\pm$ 0.02 (Å) and c = 14.25 $\pm$ 0.02 (Å), and the unit cell volume is preferably 97.61 $\pm$ 1.6 (Å$^3$). The lattice constants are further preferably a = 2.812 $\pm$ 0.01 (Å) and c = 14.25 $\pm$ 0.01 (Å), and the unit cell volume is further preferably 97.61 $\pm$ 1.4 (Å$^3$). The crystallite size is preferably greater than or equal to 50 nm, further preferably greater than or equal to 70 nm.

When the positive electrode active material 100 in which Ni/(Co+Ni) is greater than 0.175 and less than or equal to 0.215, typically 0.2, and which is formed by performing annealing after synthesis of lithium cobalt nickel oxide, is analyzed by powder X-ray diffraction using CuK$\alpha_1$ radiation in the state where charging has been performed to 4.5 V (vs. Li/Li$^+$), diffraction peaks are preferably observed at at least two or more of $2\theta$ = 18.403 $\pm$ 0.1°, $2\theta$= 37.412 $\pm$ 0.1°, $2\theta$= 38.985 $\pm$ 0.1°, $2\theta$= 44.875 $\pm$ 0.1°, $2\theta$= 48.916 $\pm$ 0.1°, and $2\theta$= 58.662 $\pm$ 0.1°. In addition, the positive electrode active material 100 preferably has a crystal structure belonging to the space group R-3m, the lattice constants of the crystal structure are preferably a = 2.809 $\pm$ 0.02 (Å) and c = 14.39 $\pm$ 0.02 (Å), and the unit cell volume is preferably 98.35 $\pm$ 1.6 (Å$^3$). The lattice constants are further preferably a = 2.809 $\pm$ 0.01 (Å) and c = 14.39 $\pm$ 0.01 (Å), and the unit cell volume is further preferably 98.35 $\pm$ 1.4 (Å$^3$). The crystallite size is preferably greater than or equal to 100 nm, further preferably greater than or equal to 130 nm.

When the positive electrode active material 100 in which Ni/(Co+Ni) is greater than 0.175 and less than or equal to 0.215, typically 0.2, and which is formed by performing annealing after synthesis of lithium cobalt nickel oxide, is analyzed by powder X-ray diffraction using CuK$\alpha_1$ radiation in the state where charging has been performed to 4.6 V (vs. Li/Li$^+$), diffraction peaks are preferably observed at at least two or more of $2\theta$= 18.608 $\pm$ 0.1°, $2\theta$= 37.381 $\pm$ 0.1°, $2\theta$= 37.854 $\pm$ 0.1°, $2\theta$= 38.995 $\pm$ 0.1°, $2\theta$= 45.009 $\pm$ 0.1°, and $2\theta$= 59.073 $\pm$ 0.1°. In addition, the positive electrode active material 100 preferably has a crystal structure belonging to the space group R-3m, the lattice constants of the crystal structure are preferably a = 2.812 $\pm$ 0.02 (Å) and c = 14.24 $\pm$ 0.02 (Å), and the unit cell volume is preferably 97.52 $\pm$ 1.6 (Å$^3$). The lattice constants are further preferably a = 2.812 $\pm$ 0.01 (Å) and c = 14.24 $\pm$ 0.01 (Å), and the unit cell volume is further preferably 97.52 $\pm$ 1.4 (Å$^3$). The crystallite size is preferably greater than or equal to 50 nm, further preferably greater than or equal to 75 nm.

When the positive electrode active material 100 in which Ni/(Co+Ni) is greater than 0.175 and less than or equal to 0.215, typically 0.2, and which is formed by performing annealing after synthesis of lithium cobalt nickel oxide, is analyzed by powder X-ray diffraction using $CuK\alpha_1$ radiation in the state where charging has been performed to 4.7 V (vs. Li/Li$^+$), diffraction peaks are preferably observed at at least two or more of $2\theta = 18.413 \pm 0.1°$, $2\theta = 36.774 \pm 0.1°$, $2\theta = 37.412 \pm 0.1°$, and $2\theta = 44.958 \pm 0.1°$. In addition, the positive electrode active material 100 preferably has a crystal structure belonging to the space group R-3m, the lattice constants of the crystal structure are preferably a = 2.809 $\pm$ 0.02 (Å) and c = 14.36 $\pm$ 0.02 (Å), and the unit cell volume is preferably 98.13 $\pm$ 1.6 (Å$^3$). The lattice constants are further preferably a = 2.809 $\pm$ 0.01 (Å) and c = 14.36 $\pm$ 0.01 (Å), and the unit cell volume is further preferably 98.13 $\pm$ 1.4 (Å$^3$). The crystallite size is preferably greater than or equal to 50 nm, further preferably greater than or equal to 75 nm.

When the positive electrode active material 100 in which Ni/(Co+Ni) is greater than 0.075 and less than or equal to 0.125, typically 0.1, is analyzed by powder X-ray diffraction using $CuK\alpha_1$ radiation in the state where charging has been performed to 4.5 V (vs. Li/Li$^+$), diffraction peaks are preferably observed at at least two or more of $2\theta = 18.434 \pm 0.1°$, $2\theta = 37.401 \pm 0.1°$, $2\theta = 39.005 \pm 0.1°$, $2\theta = 44.896 \pm 0.1°$, $2\theta = 48.957 \pm 0.1°$, and $2\theta = 58.744 \pm 0.1°$. In addition, the positive electrode active material 100 preferably has a crystal structure belonging to the space group R-3m, the lattice constants of the crystal structure are preferably a = 2.810 $\pm$ 0.02 (Å) and c = 14.39 $\pm$ 0.02 (Å), and the unit cell volume is preferably 98.42 $\pm$ 1.6 (Å$^3$). The lattice constants are further preferably a = 2.810 $\pm$ 0.01 (Å) and c = 14.39 $\pm$ 0.01 (Å), and the unit cell volume is further preferably 98.42 $\pm$ 1.4 (Å$^3$). The crystallite size is preferably greater than or equal to 100 nm, further preferably greater than or equal to 130 nm.

When the positive electrode active material 100 in which Ni/(Co+Ni) is greater than 0.075 and less than or equal to 0.125, typically 0.1, is analyzed by powder X-ray diffraction using $CuK\alpha_1$ radiation in the state where charging has been performed to 4.6 V (vs. Li/Li$^+$), diffraction peaks are preferably observed at at least two or more of $2\theta = 18.567 \pm 0.1°$, $2\theta = 37.381 \pm 0.1°$, $2\theta = 39.005 \pm 0.1°$, and $2\theta = 44.978 \pm 0.1°$. In addition, the positive electrode active material 100 preferably has a crystal structure belonging to the space group R-3m, the lattice constants of the crystal structure are preferably a = 2.811 $\pm$ 0.02 (Å) and c = 14.26 $\pm$ 0.02 (Å), and the unit cell volume is preferably 97.56 $\pm$ 1.6 (Å$^3$). The lattice constants are further preferably a = 2.811 $\pm$ 0.01 (Å) and c = 14.26 $\pm$ 0.01 (Å), and the unit cell volume is further preferably 97.56 $\pm$ 1.4 (Å$^3$). The crystallite size is preferably greater than or equal to 30 nm, further preferably greater than or equal to 45 nm.

When the positive electrode active material 100 in which Ni/(Co+Ni) is greater than 0.075 and less than or equal to 0.125, typically 0.1, and magnesium that is 0.5 atomic% of the transition metal $M$ and fluorine that is 1.5 atomic% of the transition metal $M$ are contained as additive elements, is analyzed by powder X-ray diffraction using $CuK\alpha_1$ radiation in the state where charging has been performed to 4.5 V (vs. Li/Li$^+$), diffraction peaks are preferably observed at at least two or more of $2\theta = 18.537 \pm 0.1°$, $2\theta = 37.391 \pm 0.1°$, $2\theta = 37.658 \pm 0.1°$, $2\theta = 39.005 \pm 0.1°$, $2\theta = 44.958 \pm 0.1°$, $2\theta = 49.039 \pm 0.1°$, and $2\theta = 58.898 \pm 0.1°$. In addition, the positive electrode active material 100 preferably has a crystal structure belonging to the space group R-3m, the lattice constants of the crystal structure are preferably a = 2.812 $\pm$ 0.02 (Å) and c = 14.31 $\pm$ 0.02 (Å), and the unit cell volume is preferably 98.02 $\pm$ 1.6 (Å$^3$). The lattice constants are further preferably a = 2.812 $\pm$ 0.01 (Å) and c = 14.31 $\pm$ 0.01 (Å), and the unit cell volume is further preferably 98.02 $\pm$ 1.4 (Å$^3$). The crystallite size is preferably greater than or equal to 100 nm, further preferably greater than or equal to 150 nm.

When the positive electrode active material 100 in which Ni/(Co+Ni) is greater than 0.075 and less than or equal to 0.125, typically 0.1, and magnesium that is 0.5 atomic% of the transition metal $M$ and fluorine that is 1.5 atomic% of the transition metal $M$ are contained as additive elements, is analyzed by powder X-ray diffraction using $CuK\alpha_1$ radiation in the state where charging has been performed to 4.6 V (vs. Li/Li$^+$), diffraction peaks are preferably observed at at least two or more of $2\theta = 18.547 \pm 0.1°$, $2\theta = 37.381 \pm 0.1°$, $2\theta = 38.985 \pm 0.1°$, $2\theta = 44.978 \pm 0.1°$, $2\theta = 49.101 \pm 0.1°$, and $2\theta = 59.073 \pm 0.1°$. In addition, the positive electrode active material 100 preferably has a crystal structure belonging to the space group R-3m, the lattice constants of the crystal structure are preferably a = 2.810 $\pm$ 0.02 (Å) and c = 14.26 $\pm$ 0.02 (Å), and the unit cell volume is preferably 97.58 $\pm$ 1.6 (Å$^3$). The lattice constants are further preferably a = 2.810 $\pm$ 0.01 (Å) and c = 14.26 $\pm$ 0.01 (Å), and the unit cell volume is further preferably 97.58 $\pm$ 1.4 (Å$^3$). The crystallite size is preferably greater than or equal to 50 nm, further preferably greater than or equal to 75 nm.

When the positive electrode active material 100 in which Ni/(Co+Ni) is greater than 0.025 and less than or equal to 0.075, typically 0.05, is analyzed by powder X-ray diffraction using $CuK\alpha_1$ radiation in the state where charging has been performed to 4.5 V (vs. Li/Li$^+$), diffraction peaks are preferably observed at at least two or more of $2\theta = 18.567 \pm 0.1°$, $2\theta = 37.381 \pm 0.1°$, $2\theta = 37.710 \pm 0.1°$, $2\theta = 38.985 \pm 0.1°$, $2\theta = 44.968 \pm 0.1°$, $2\theta = 49.070 \pm 0.1°$, and $2\theta = 58.980 \pm 0.1°$. In addition, the positive electrode active material 100 preferably has a crystal structure belonging to the space group R-3m, the lattice constants of the crystal structure are preferably a = 2.814 $\pm$ 0.02 (Å) and c = 14.30 $\pm$ 0.02 (Å), and the unit cell volume is preferably 98.07 $\pm$ 1.6 (Å$^3$). The lattice constants are further preferably a = 2.814 $\pm$ 0.01 (Å) and c = 14.30 $\pm$ 0.01 (Å), and the unit cell volume is further preferably 98.07 $\pm$ 1.4 (Å$^3$). The crystallite size is preferably greater than or equal to 100 nm, further preferably greater than or equal to 150 nm.

When the positive electrode active material 100 in which Ni/(Co+Ni) is greater than 0.025 and less than or equal to 0.075, typically 0.05, is analyzed by powder X-ray diffraction using $CuK\alpha_1$ radiation in the state where charging has been performed to 4.6 V (vs. Li/Li$^+$), diffraction peaks are preferably observed at at least two or more of $2\theta = 18.866 \pm 0.1°$, $2\theta = 37.319 \pm 0.1°$, $2\theta = 38.337 \pm 0.1°$, $2\theta = 38.985 \pm 0.1°$, $2\theta = 45.143 \pm 0.1°$, $2\theta = 49.368 \pm 0.1°$, and $2\theta = 59.515 \pm 0.1°$. In

addition, the positive electrode active material 100 preferably has a crystal structure belonging to the space group R-3m, the lattice constants of the crystal structure are preferably a = 2.819 $\pm$ 0.02 (Å) and c = 14.06 $\pm$ 0.02 (Å), and the unit cell volume is preferably 96.74 $\pm$ 1.6 (Å$^3$). The lattice constants are further preferably a = 2.819 $\pm$ 0.01 (Å) and c = 14.06 $\pm$ 0.01 (Å), and the unit cell volume is further preferably 96.74 $\pm$ 1.4 (Å$^3$). The crystallite size is preferably greater than or equal to 150 nm, further preferably greater than or equal to 200 nm.

<Analysis method>

Whether or not a given positive electrode active material is the positive electrode active material 100 of one embodiment of the present invention, which has the above-described crystal structure in the charged state, can be judged by analyzing a positive electrode including the positive electrode active material in the charged state by XRD, electron diffraction, neutron diffraction, electron spin resonance (ESR), nuclear magnetic resonance (NMR), or the like.

XRD is particularly preferable because the symmetry of the transition metal such as cobalt contained in the positive electrode active material can be analyzed with high resolution, the degrees of crystallinity and the crystal orientations can be compared, the distortion of lattice periodicity and the crystallite size can be analyzed, and a positive electrode obtained by disassembling a secondary battery can be measured without any change with sufficient accuracy, for example. A diffraction peak reflecting the crystal structure of the inner portion 100b of the positive electrode active material 100, which accounts for the majority of the volume of the positive electrode active material 100, is obtained through XRD, in particular, powder XRD.

In the case where the crystallite size is measured by powder XRD, the measurement is preferably performed while the influence of orientation due to pressure or the like is preferably removed. For example, it is preferable that the positive electrode active material be taken out from a positive electrode obtained by disassembling a secondary battery, the positive electrode active material be made into a powder sample, and then the measurement be performed.

Note that a positive electrode active material in the charged state sometimes causes a change in the crystal structure when exposed to the air. For that reason, all samples subjected to analysis of crystal structures are preferably handled in an inert atmosphere such as an argon atmosphere.

Whether the distribution of the additive element contained in a given positive electrode active material is in the above-described state can be judged by, for example, analysis using XPS, energy dispersive X-ray spectroscopy (EDX), EPMA (electron probe microanalysis), or the like.

The crystal structure of the surface portion 100a, the crystal grain boundary 101, or the like can be analyzed by electron diffraction of a cross section of the positive electrode active material 100, for example.

<<Charging method>>

To determine whether or not a positive electrode active material or a composite oxide is the positive electrode active material 100 of one embodiment of the present invention, the positive electrode active material needs to be charged to have a predetermined potential (vs. Li/Li$^+$). Therefore, for example, a reference battery, a coin cell (CR2032 type, with a diameter of 20 mm and a height of 3.2 mm), or the like is formed using the lithium counter electrode, and charging is performed.

More specifically, a positive electrode can be formed by application of a slurry in which the positive electrode active material, a conductive material, and a binder are mixed to a positive electrode current collector made of aluminum foil.

As an electrolyte contained in the electrolyte solution, 1 mol/L lithium hexafluorophosphate (LiPF$_6$) can be used. As the electrolyte solution, an electrolyte solution in which ethylene carbonate (EC) and diethyl carbonate (DEC) at EC: DEC = 3:7 (volume ratio) and vinylene carbonate (VC) at 2 wt% are mixed can be used.

The coin cell formed under the above conditions is charged at a given voltage (e.g., 4.5 V, 4.6 V, or 4.7 V). The charging method is not particularly limited as long as charging with a given voltage can be performed for sufficient time. In the case of CCCV charging, for example, CC charging can be performed with a current higher than or equal to 20 mA/g and lower than or equal to 100 mA/g. The CV charging can be ended with a current higher than or equal to 2 mA/g and lower than or equal to 10 mA/g. To observe a phase change of the positive electrode active material, charging with such a small current value is preferably performed. Meanwhile, in the case where a current does not reach higher than or equal to 2 mA/g and lower than or equal to 10 mA/g even when CV charging is performed for a long time, the CV charging may be ended after the sufficient time passes from the start because the current is probably consumed not for charging the positive electrode active material but for decomposing the electrolyte solution. The sufficient time in this case can be longer than or equal to 1.5 hours and shorter than or equal to 3 hours, for example. The temperature is set to 25 °C or 45 °C. After charging is performed in this manner, the coin cell is disassembled in a glove box with an argon atmosphere to take out the positive electrode, whereby the positive electrode active material with predetermined charging capacity can be obtained. In order to inhibit a reaction with components in the external environment, the positive electrode is preferably enclosed in an argon atmosphere in performing various analyses later. For example, XRD can be performed on the positive electrode enclosed in an airtight container with an argon atmosphere. After charging is completed, the positive electrode is preferably taken out immediately and subjected to the analysis. Specifically, the positive electrode is preferably subjected to analysis within an hour, further preferably within 30 minutes after the completion of charging.

<<XRD>>

The apparatus and conditions of the XRD measurement are not particularly limited when the apparatus is adjusted appropriately and calibration is performed. The measurement can be performed with the apparatus and conditions as described below, for example.

XRD apparatus: D8 ADVANCE produced by Bruker AXS
X-ray source: Cu
Output: 40 kV, 40 mA
Angle of divergence: Div. Slit, 0.5°
Detector: LynxEye
Scanning method: $2\theta/\theta$ continuous scan
Measurement range ($2\theta$): from 15° to 90°
Step width ($2\theta$): 0.01°
Counting time: 1 second/step
Rotation of sample stage: 15 rpm
As a standard sample used for the adjustment and calibration, a standard sintered alumina plate SRM 1976 from NIST (National Institute of Standards and Technology) can be used, for example.

In the case where the measurement sample is a powder, the sample can be set by, for example, being put in a glass sample holder or being sprinkled on a reflection-free silicon plate to which grease is applied. In the case where the measurement sample is a positive electrode, the positive electrode can be set by being attached to a substrate with a double-sided adhesive tape such that the position of the positive electrode active material layer can be adjusted to the measurement plane required by the apparatus.

Characteristic X-rays may be monochromatized with the use of a filter or the like or may be monochromatized with XRD data analysis software after an XRD pattern is obtained. For example, a peak due to $CuK\alpha_2$ radiation can be eliminated and only a peak due to $CuK\alpha_1$ radiation can be extracted by using DEFFRAC.EVA (XRD data analysis software produced by Bruker Corporation). This software can also be used to eliminate the background, for example.

In this specification and the like, the value of $2\theta$ of a diffraction peak refers to the value of $2\theta$ at which the peak top of the diffraction peak appears in an XRD pattern after the calculation model is fitted. There is no particular limitation on the crystal structure analysis software used for the fitting; for example, it is possible to use TOPAS ver. 3 (crystal structure analysis software produced by Bruker Corporation).

<<EDX>>

The one or two or more selected from the additive elements contained in the positive electrode active material 100 preferably have a concentration gradient. It is further preferable that the additive elements contained in the positive electrode active material 100 exhibit the peak of the detection amount at different depths from the surface. The concentration gradient of the additive element can be evaluated by exposing a cross section of the positive electrode active material 100 using FIB (Focused Ion Beam) or the like and analyzing the cross section using energy dispersive X-ray spectroscopy (EDX), EPMA (electron probe microanalysis), or the like.

In the EDX measurement, to measure a region while scanning is performed and evaluate the region two-dimensionally is referred to as EDX area analysis. The measurement by line scan, which is performed to evaluate the atomic concentration distribution in a positive electrode active material, is referred to as line analysis. Furthermore, extracting data of a linear region from EDX area analysis is referred to as line analysis in some cases. The measurement of a region without scanning is referred to as point analysis.

By EDX area analysis (e.g., element mapping), the concentrations and the detection amounts of the additive element in the surface portion 100a, the inner portion 100b, the vicinity of the crystal grain boundary 101, and the like of the positive electrode active material 100 can be quantitatively analyzed. By EDX line analysis, the concentration distribution and the highest concentration of the additive element can be analyzed. An analysis method in which a thinned sample is used, such as STEM-EDX, is preferred because the method makes it possible to analyze the concentration distribution in the depth direction from the surface toward the center in a specific region of the positive electrode active material regardless of the distribution in the front-back direction.

Since the positive electrode active material 100 is a compound containing oxygen and a transition metal into and from which lithium can be inserted and extracted, an interface between a region where oxygen and the transition metal M (Co, Ni, Mn, Fe, or the like) that is oxidized or reduced due to insertion and extraction of lithium are present and a region where oxygen and the transition metal M are absent is considered as the surface of the positive electrode active material. When the positive electrode active material is analyzed, a protective film is attached on its surface in some cases; however, the protective film is not included in the positive electrode active material. As the protective film, a single-layer film or a multilayer film of carbon, a metal, an oxide, a resin, or the like is sometimes used.

In a STEM-EDX line analysis or the like, it is sometimes difficult to precisely determine the surface because a steep change in a profile of an element is not seen in principle or due to a measurement error. Therefore, when the depth direction in a STEM-EDX line analysis or the like is mentioned, a reference point is a point where a value of the amount of the detected transition metal $M$ is equal to 50 % of the sum of the average value $M_{AVE}$ of the amount of the detected transition metal $M$ in the inner portion and the average value $M_{BG}$ of the amount of the background transition metal M and a point where a value of the amount of the detected oxygen is equal to 50 % of the sum of the average value $O_{AVE}$ of the amount of detected oxygen in the inner portion and the average value $O_{BG}$ of the amount of background oxygen. Note that in the case where the positions of the points differ between the transition metal $M$ and oxygen, the difference is probably due to the influence of a carbonate, a metal oxide containing oxygen, or the like, which is attached to the surface. Thus, the point that is equal to 50 % of the sum of the average value $M_{AVE}$ of the amount of the detected transition metal $M$ in the inner portion and the average value $M_{BG}$ of the amount of the background transition metal $M$ can be used. In the case of a positive electrode active material containing the plurality of transition metals $M$, the reference point can be determined using $M_{AVE}$ and $M_{BG}$ of an element whose count number is the largest in the inner portion 100b.

The average value $M_{BG}$ of the amount of the background transition metal $M$ can be calculated by averaging the amount in the range greater than or equal to 2 nm, preferably greater than or equal to 3 nm on the outer side of the positive electrode active material, other than a portion in the vicinity of the portion at which the amount of the detected transition metal M begins to increase, for example. The average value $M_{AVE}$ of the amount of the detected transition metal $M$ in the inner portion can be calculated by averaging the amount in the range greater than or equal to 2 nm, preferably greater than or equal to 3 nm in a region where the count numbers of the transition metals $M$ and oxygen atoms are saturated and stabilized, e.g., a portion that is greater than or equal to 30 nm, preferably greater than 50 nm in depth from the region where the amount of the detected transition metal $M$ begins to increase, for example. The average value $O_{BG}$ of the amount of background oxygen and the average value $O_{AVE}$ of the amount of detected oxygen in the inner portion can be calculated in a similar manner.

The surface of the positive electrode active material 100 in, for example, a cross-sectional STEM (scanning transmission electron microscope) image is a boundary between a region where an image derived from the crystal structure of the positive electrode active material is observed and a region where the image is not observed, and is determined as the outermost surface of a region where an atomic column derived from an atomic nucleus of a metal element that has a greater atomic number than lithium among the metal elements constituting the positive electrode active material is confirmed. Alternatively, the surface refers to an intersection of a tangent drawn at a luminance profile from the surface toward the bulk and an axis in the depth direction in a STEM image. The surface in a STEM image or the like may be judged in combination with analysis with higher spatial resolution.

The spatial resolution of STEM-EDX is approximately 1 nm. Thus, the maximum value of an additive element profile may be shifted by approximately 1 nm. For example, even when the maximum value of the profile of an additive element such as magnesium is outside the surface determined in the above-described manner, it can be said that a difference between the maximum value and the surface can be referred to as within the margin of error as long as the difference is less than 1 nm.

A peak in STEM-EDX line analysis refers to the maximum value of the detection intensity in each element profile or the maximum value of the characteristic X-ray of each element. As a noise in STEM-EDX line analysis, a measured value having a half width smaller than or equal to spatial resolution (R), for example, smaller than or equal to R/2 can be given.

The adverse effect of a noise can be reduced by scanning the same portion a plurality of times under the same conditions. For example, an integrated value obtained by measurement by scanning six times can be used as the profile of each element. The number of scanning is not limited to six and an average obtained by performing scanning seven or more times can be used as the profile of each element.

STEM-EDX line analysis can be performed as follows, for example. First, a protective film is deposited over a surface of a positive electrode active material. For example, carbon can be deposited with an ion sputter apparatus (MC1000, produced by Hitachi High-Tech Corporation).

Next, the positive electrode active material is thinned to form a cross-section sample to be subjected to STEM analysis. For example, the positive electrode active material can be thinned with an FIB-SEM apparatus (XVision 200TBS, produced by Hitachi High-Tech Corporation). Here, picking up can be performed by an MPS (micro probing system), and an accelerating voltage at final processing condition can be, for example, 10 kV.

The STEM-EDX line analysis can be performed using (HD-2700 produced by Hitachi High-Tech Corporation) as a STEM apparatus and Octane T Ultra W (with two detectors) produced by EDAX Inc as EDX detectors. In the EDX line analysis, the emission current of the STEM apparatus is set to be higher than or equal to 6 $\mu$A and lower than or equal to 10 $\mu$A, and a portion of the thinned sample, which is not positioned at a deep level and has little unevenness, is measured. The magnification is 150,000 times, for example. The EDX line analysis can be performed under conditions where drift correction is performed, the line width is 42 nm, the pitch is 0.2 nm, and the number of frames is six or more.

EDX area analysis or EDX point analysis of the positive electrode active material 100 of one embodiment of the present invention preferably reveals that the average of the detected amounts of additive elements, in particular, the additive element $X$ in the surface portion 100a is higher than that in the inner portion 100b.

<Additional feature>

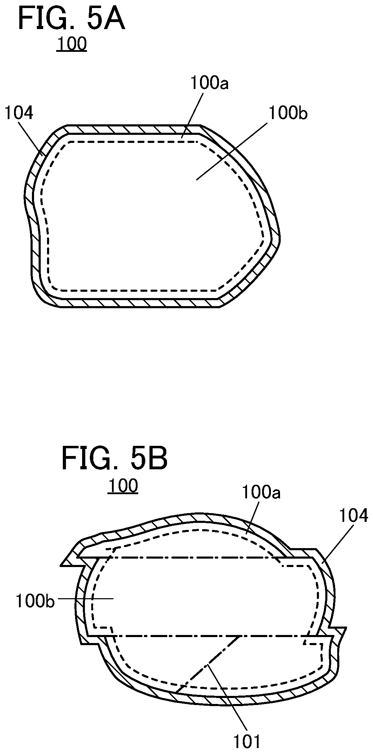

A coating portion may be attached to at least part of the surface of the positive electrode active material 100. FIG. 5A and FIG. 5B illustrate examples of the positive electrode active material 100 to which a coating portion 104 is attached.

The coating portion 104 is preferably formed by deposition of a decomposition product of an electrolyte and an organic electrolytic solution due to charging and discharging, for example. A coating portion originating from an electrolyte solution, which is formed on the surface of the positive electrode active material 100, is expected to improve charging and discharging cycle performance particularly when charging that makes $x$ in Li$_x$MO$_2$ be small is repeated. This is because an increase in impedance of the surface of the positive electrode active material is inhibited or dissolution of cobalt is inhibited, for example. The coating portion 104 preferably contains carbon, oxygen, and fluorine, for example. The coating portion can have high quality easily when the electrolyte solution includes LiBOB and/or SUN (suberonitrile), for example. Accordingly, the coating portion 104 containing one or two or more selected from boron, nitrogen, sulfur, and fluorine is preferable because it can be a high-quality coating portion in some cases. The coating portion 104 does not necessarily cover the positive electrode active material 100 entirely. For example, the coating portion 104 covers greater than or equal to 50 %, preferably greater than or equal to 70 %, further preferably greater than or equal to 90 % of the surface of the positive electrode active material 100.

This embodiment can be used in combination with the other embodiments.

(Embodiment 2)

In this embodiment, an example of a method for forming the positive electrode active material 100 of one embodiment of the present invention will be described.

<<Formation method 1 of positive electrode active material>>

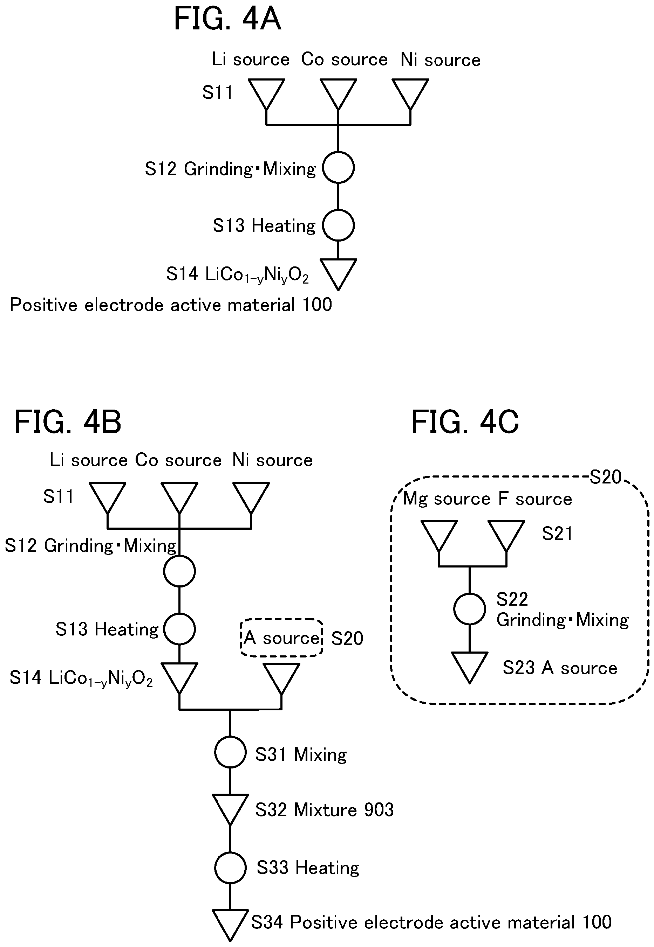

A formation method 1 of the positive electrode active material 100 is described with reference to FIG. 4A.

<Step S11>

In Step S11 shown in FIG. 4A, a lithium source (Li source), a cobalt source (Co source), and a nickel source (Ni source) are prepared as materials for lithium and a transition metal which are starting materials.

The proportion of nickel in the sum of cobalt and nickel, Ni/(Co+Ni), i.e., $y$ in LiCo$_{1-y}$Ni$_y$O$_2$, is preferably greater than 0.001 and less than 0.5. In addition, $y$ in LiCo$_{1-y}$Ni$_y$O$_2$ is further preferably greater than 0.025 and less than or equal to 0.215.

As the lithium source, a lithium-containing compound is preferably used and for example, lithium carbonate, lithium hydroxide, lithium nitrate, lithium fluoride, or the like can be used. The lithium source preferably has a high purity and is preferably a material having a purity higher than or equal to 99.99 %, for example.

As the cobalt source, a cobalt-containing compound is preferably used, and for example, cobalt oxide, cobalt hydroxide, or the like can be used.

As the nickel source, a nickel-containing compound is preferably used, and for example, nickel oxide, nickel hydroxide, or the like can be used.

The cobalt source and the nickel source preferably have a high purity and is preferably a material having a purity of higher than or equal to 3N (99.9 %), further preferably higher than or equal to 4N (99.99 %), still further preferably higher than or equal to 4N5 (99.995 %), yet further preferably higher than or equal to 5N (99.999 %), for example. Impurities of the positive electrode active material can be controlled by using such a high-purity material. As a result, a secondary battery with an increased capacity and/or increased reliability can be obtained.

<Step S12>

Next, in Step S12 shown in FIG. 4A, the lithium source, the cobalt source, and the nickel source are ground and mixed to form a mixed material. The grinding and mixing can be performed by a dry method or a wet method. A wet method is preferable because particles can ground and mixed into a smaller size. When the grinding and mixing are performed by a wet method, a solvent is prepared. As the solvent, ketone such as acetone, alcohol such as ethanol or isopropanol, ether, dioxane, acetonitrile, *N*-methyl-2-pyrrolidone (NMP), or the like can be used. An aprotic solvent, which is unlikely to react with lithium, is preferably used. In this embodiment, dehydrated acetone with a purity higher than or equal to 99.5 % is used. It is preferable that the lithium source and the cobalt source be ground and mixed into dehydrated acetone whose moisture content is less than or equal to 10 ppm and which has a purity higher than or equal to 99.5 % in the crushing and mixing. With the use of dehydrated acetone with the above-described purity, impurities that might be mixed can be reduced.

A ball mill, a bead mill, or the like can be used for the grinding and mixing. When a ball mill is used, aluminum oxide balls or zirconium oxide balls are preferably used as a grinding medium. Zirconium oxide balls are preferable because they release fewer impurities. When a ball mill, a bead mill, or the like is used, the peripheral speed is preferably higher than or equal to 100 mm/s and lower than or equal to 2000 mm/s in order to inhibit contamination from the medium. In this embodiment, the peripheral speed is set to 628 mm/s (the rotational frequency is 300 rpm, and the diameter of the ball mill is 40 mm).

<Step S13>

Next, in Step S13 shown in FIG. 4A, the above mixed material is heated. The heating is preferably performed at higher than or equal to 800 °C and lower than or equal to 1100 °C, further preferably at higher than or equal to 900 °C and lower than or equal to 1000 °C, still further preferably at approximately 950 °C. An excessively low temperature might lead to insufficient decomposition and melting of the lithium source and the cobalt source. An excessively high temperature might lead to a defect due to evaporation of lithium from the lithium source and/or excessive reduction of the transition metal $M$, for example. An oxygen vacancy or the like may be induced by a change of trivalent cobalt and/or nickel into divalent cobalt and/or nickel, for example.

When the heating time is too short, lithium cobalt nickel oxide is not synthesized, but when the heating time is too long, the productivity is lowered. For example, the heating time is preferably longer than or equal to 1 hour and shorter than or equal to 100 hours, further preferably longer than or equal to 2 hours and shorter than or equal to 20 hours.

A temperature rising rate is preferably higher than or equal to 80 °C/h and lower than or equal to 250 °C/h, although depending on the end-point temperature of the heating. For example, in the case of heating at 1000 °C for 10 hours, the temperature rising rate is preferably 200 °C/h.

The heating is preferably performed in an atmosphere with little water such as a dry-air atmosphere and for example, the dew point of the atmosphere is preferably lower than or equal to -50 °C, further preferably lower than or equal to -80 °C. In this embodiment, the heating is performed in an atmosphere with a dew point of -93 °C. To reduce impurities that might enter the material, the concentrations of impurities such as $CH_4$, CO, $CO_2$, and $H_2$ in the heating atmosphere are each preferably lower than or equal to 5 ppb (parts per billion).

The heating atmosphere is preferably an oxygen-containing atmosphere. For example, a method in which a dry air is continuously introduced into a reaction chamber is employed. The flow rate of a dry air in this case is preferably 10 L/min. Continuously introducing oxygen into a reaction chamber to make oxygen flow therein is referred to as flowing.

In the case where the heating atmosphere is an oxygen-containing atmosphere, flowing is not necessarily performed. For example, the following method may be employed: the pressure in the reaction chamber is reduced, then the reaction chamber is filled with oxygen (can also be referred to as purging), and the oxygen is prevented from entering or exiting from the reaction chamber. For example, the pressure in the reaction chamber may be reduced to -970 hPa and then, the reaction chamber may be filled with oxygen until the pressure becomes 50 hPa.

Cooling after the heating can be performed by letting the mixed material stand to cool, and the time it takes for the temperature to decrease to room temperature from a predetermined temperature is preferably longer than or equal to 10 hours and shorter than or equal to 50 hours. Note that the temperature does not necessarily need to decrease to room temperature as long as it decreases to a temperature acceptable to the next step.

In this embodiment, the heating temperature is 900 °C, the heating condition is 10 hours, and the heating atmosphere is dry air with a flow rate of 10 L/min. A temperature rising rate was 200 °C/h.

The heating in this step may be performed with a rotary kiln or a roller hearth kiln. Heating with stirring can be performed in either case of a sequential rotary kiln or a batch-type rotary kiln.

As a crucible used at the time of the heating, a crucible made of aluminum oxide is preferable. A crucible made of aluminum oxide has a material property that hardly releases impurities. In this embodiment, a crucible made of aluminum oxide with a purity of 99.9 % is used. The heating is preferably performed with the crucible covered with a lid. Volatilization of the materials can be prevented.

A crucible that has been used a plurality of times is preferred to a new crucible. In this specification and the like, a new crucible refers to a crucible that is subjected to two or less heating step while a material containing lithium, the transition metal $M$, and/or the additive element is contained therein. A crucible that has been used a plurality of times refers to a crucible that is subjected to a heating step of three or more times while a material containing lithium, the transition metal $M$, and/or the additive element is contained therein. In the case where a new crucible is used, some materials such as lithium fluoride might be absorbed by, diffused in, transferred to, and/or attached to a sagger. Loss of some materials due to such phenomena increases a concern that an element distribution is not in a preferable range particularly in the surface portion of the positive electrode active material. In contrast, such a risk is low in the case of a crucible that has been used a plurality of times.

The heated material is ground as needed and may be made to pass through a sieve. Before collection of the heated material, the material may be moved from the crucible to a mortar. As the mortar, an agate mortar or a partially stabilized zirconium oxide mortar is preferably used. An agate mortar or a partially stabilized zirconium oxide mortar is made of a material that hardly releases impurities. Specifically, an agate mortar or a partially stabilized zirconium oxide mortar with a purity higher than or equal to 90 %, preferably higher than or equal to 99 % is used. Note that heating conditions equivalent to those in Step S13 can be employed in a later-described heating step other than Step S13.

<Step S14>

Through the above steps, lithium cobalt nickel oxide ($LiCo_{1-y}Ni_yO_2$) can be synthesized in Step S14 in FIG. 4A.

<<Formation method 2 of positive electrode active material>>

Next, as one embodiment of the present invention, a formation method 2 of the positive electrode active material different from the formation method 1 of the positive electrode active material will be described with reference to FIG. 4B and FIG. 4C. The formation method 2 of the positive electrode active material is different from the formation method 1 of the positive electrode active material in the presence of an additive element. The addition of the additive element can chemically stabilize the surface of the positive electrode active material and inhibit deterioration of the crystal structure in charging and discharging cycles. For the other descriptions, the description of the formation method 1 can be referred to.

Although the additive element may be mixed together with the lithium source, the cobalt source, and the nickel source, it is further preferable that lithium cobalt nickel oxide not containing the additive element be synthesized, and then the additive element source be mixed and heat treatment be performed.

In a method of synthesizing lithium cobalt nickel oxide containing an additive element by mixing an additive element source concurrently with a lithium source, a cobalt source, and a lithium source, it is sometimes difficult to increase the concentration of the additive element in the surface portion 100a. In addition, after lithium cobalt nickel oxide is synthesized, only mixing an additive element source without performing heating causes the additive element to be just attached to, not solid-soluted in, the lithium cobalt nickel oxide. It is difficult to distribute the additive element favorably without sufficient heating. Therefore, it is preferable that lithium cobalt nickel oxide be synthesized, and then an additive element source be mixed and heat treatment be performed. The heat treatment after mixing of the additive element source may be referred to as annealing.

However, annealing at an excessively high temperature may cause cation mixing, which increases the possibility of entry of the additive element $A$ such as magnesium into transition metal $M$ sites. Furthermore, heat treatment at an excessively high temperature might have an adverse effect; for example, cobalt and nickel might be reduced to have a valence of two or lithium might be evaporated.

Here, a material functioning as a fusing agent (also referred to as a flux agent) is preferably mixed together with the additive element source. The material can be regarded as functioning as a fusing agent when having a melting point lower than that of the lithium cobalt nickel oxide. For example, a fluorine compound such as lithium fluoride is preferably used. Adding the fusing agent decreases the melting points of the additive element source and the lithium cobalt nickel oxide. The decrease in the melting points makes it easier to favorably distribute the additive element at a temperature at which the cation mixing is unlikely to occur.

In the case where the fluoride contains LiF and $MgF_2$, according to Non-Patent Document 13, the eutectic point of LiF and $MgF_2$ is around 742 °C; thus, the heating temperature in the heating step following the mixing of the additive element is preferably set higher than or equal to 742 °C.

<Step S11 to Step S14>

First, as in the formation method 1 of the positive electrode active material, lithium cobalt nickel oxide is synthesized through Step S11 to Step S14.

<Step S20>

Next, as shown in Step S20 shown in FIG. 4C, the additive element A is prepared in the lithium cobalt nickel oxide. A lithium source may be prepared together with the additive element source (A source).

As the additive element $A$, the additive element described in the above embodiment can be used. Specifically, one or two or more selected from magnesium, fluorine, calcium, aluminum, silicon, vanadium, copper, and gallium can be used. FIG. 4C illustrates an example in which magnesium and fluorine are selected as the additive elements $A$.

When magnesium is selected as the additive element, the additive element source can be referred to as a magnesium source. As the magnesium source, magnesium fluoride, magnesium oxide, magnesium hydroxide, magnesium carbonate, or the like can be used. Two or more of these magnesium sources may be used.

When fluorine is selected as the additive element, the additive element source can be referred to as a fluorine source (F source). As the fluorine source, for example, lithium fluoride (LiF), magnesium fluoride ($MgF_2$), aluminum fluoride ($ALF_3$), titanium fluoride ($TiF_4$), cobalt fluoride ($CoF_2$ and $CoF_3$), nickel fluoride ($NiF_2$), zirconium fluoride ($ZrF_4$), vanadium fluoride ($VF_5$), manganese fluoride, iron fluoride, chromium fluoride, niobium fluoride, zinc fluoride ($ZnF_2$), calcium fluoride ($CaF_2$), sodium fluoride (NaF), potassium fluoride (KF), barium fluoride ($BaF_2$), cerium fluoride ($CeF_3$ and $CeF_4$), lanthanum fluoride ($LaF_3$), sodium aluminum hexafluoride ($Na_3AlF_6$), or the like can be used. In particular, lithium fluoride is preferable because it is easily melted in a heating step described later owing to its relatively low melting point of 848 °C.

Magnesium fluoride can be used as both the fluorine source and the magnesium source. Lithium fluoride can be used as the lithium source. Another example of the lithium source that can be used in Step S21 is lithium carbonate.

The fluorine source may be a gas, and fluorine ($F_2$), carbon fluoride, sulfur fluoride, oxygen fluoride ($OF_2$, $O_2F_2$, $O_3F_2$, $O_4F_2$, $O_5F_2$, $O_6F_2$, and $O_2F$), or the like may be used and mixed in the atmosphere in a heating step described later. Two or more of these fluorine sources may be used.

In this embodiment, lithium fluoride (LiF) is prepared as the fluorine source, and magnesium fluoride ($MgF_2$) is prepared as the fluorine source and the magnesium source. When lithium fluoride and magnesium fluoride are mixed such that LiF: $MgF_2$ is approximately 65:35 (molar ratio), the effect of lowering the melting point is maximized. Meanwhile, when the proportion of lithium fluoride increases, the cycle performance might be degraded because of an excessive amount of lithium. Therefore, the molar ratio of lithium fluoride to magnesium fluoride is preferably LiF: $MgF_2 = x$:1 ($0 \le x \le 1.9$), further preferably LiF: $MgF_2 = x$:1 ($0.1 \le x \le 0.5$), still further preferably LiF: $MgF_2 = x$:1 ($x = 0.33$ or an approximate value thereof). Note that in this specification and the like, "an approximate value of a given value" means a value greater than 0.9 times and less than 1.1 times the given value.

<Step S22>

Next, in Step S22 shown in FIG. 4C, the magnesium source and the fluorine source are ground and mixed. Any of the conditions for grinding and mixing that are described for Step S12 can be selected to perform this step.

<Step S23>

Next, in Step S23 shown in FIG. 4B, the materials ground and mixed in the above step are collected to give an additive element $A$ source (A source). Note that the additive element $A$ source in Step S23 contains a plurality of starting materials and can be referred to as a mixture.

As for the particle diameter of the mixture, the D50 (median diameter) is preferably greater than or equal to 600 nm and less than or equal to 10 $\mu$m, further preferably greater than or equal to 1 $\mu$m and less than or equal to 5 $\mu$m. Also when one kind of material is used as the additive element source, the D50 (median diameter) is preferably greater than or equal to 600 nm and less than or equal to 10 $\mu$m, further preferably greater than or equal to 1 $\mu$m and less than or equal to 5 $\mu$m.

Such a pulverized mixture (which may contain only one kind of the additive element) is easily attached to the surface of a lithium cobalt nickel oxide particle uniformly in a later step of mixing with the lithium cobalt nickel oxide. The mixture is preferably attached uniformly to the surface of the lithium cobalt nickel oxide particle, in which case the additive element easily distributed or dispersed uniformly in a surface portion 100a of the composite oxide after heating.

<Step S31>

Next, in Step S31 shown in FIG. 4B, the lithium cobalt nickel oxide and the additive element $A$ source ($A$ source) are mixed. The ratio of the sum $M$ of the number of cobalt atoms and nickel atoms contained in the lithium cobalt oxide to the number of magnesium atoms Mg contained in the additive element $A$ source is preferably $M$: Mg = 100:y ($0.1 \le y \le 6$), further preferably $M$: Mg = 100:y ($0.3 \le y \le 3$).

The conditions of the mixing in Step S31 are preferably milder than those of the mixing in Step S12 in order not to damage the shape of the lithium cobalt nickel oxide particle. For example, conditions with a lower rotation frequency or shorter time than those for the mixing in Step S12 are preferable. In addition, it can be said that a dry method has a milder condition than a wet method. For example, a ball mill or a bead mill can be used for the mixing. When a ball mill is used, zirconium oxide balls are preferably used as a medium, for example.

In this embodiment, the mixing is performed with a ball mill using zirconium oxide balls with a diameter of 1 mm by a dry method at 150 rpm for 1 hour. The mixing is performed in a dry room the dew point of which is higher than or equal to -100 °C and lower than or equal to -10 °C.

<Step S32>

Next, in Step S32 in FIG. 4B, the materials mixed in the above step are collected, whereby a mixture 903 is obtained. At the time of the collection, the materials may be crushed as needed and made to pass through a sieve.

<Step S33>

Then, in Step S33 shown in FIG. 4B, the mixture 903 is heated. Any of the heating conditions described for Step S13 can be selected. The heating time is preferably longer than or equal to 2 hours.

Here, a supplementary explanation of the heating temperature is provided. The lower limit of the heating temperature in Step S33 needs to be higher than or equal to the temperature at which a reaction between the lithium cobalt nickel oxide and the additive element source proceeds. The temperature at which the reaction proceeds is the temperature at which interdiffusion of the elements included in lithium cobalt nickel oxide and the additive element source occurs, and may be lower than the melting temperatures of these materials. It is known that in the case of an oxide as an example, solid phase diffusion occurs at the Tamman temperature $T_d$ (0.757 times the melting temperature $T_m$). Accordingly, it is only required that the heating temperature in Step S33 be higher than or equal to 650 °C.

Needless to say, the reaction more easily proceeds at a temperature higher than or equal to the temperature at which one or two or more selected from the materials contained in the mixture 903 is melted. For example, in the case where LiF and $MgF_2$ are included in the additive element source, the lower limit of the heating temperature in Step S33 is preferably higher than or equal to 742 °C because the eutectic point of LiF and $MgF_2$ is around 742 °C.

The mixture 903 obtained by mixing such that $LiCoO_2$: LiF: $MgF_2$ = 100:0.33:1 (molar ratio) exhibits an endothermic peak at around 830 °C in differential scanning calorimetry (DSC). Thus, the lower limit of the heating temperature is further preferably higher than or equal to 830 °C.

A higher heating temperature is preferable because it facilitates the reaction, shortens the heating time, and enables high productivity.

The upper limit of the heating temperature is lower than the decomposition temperature of lithium cobalt nickel oxide. At around the decomposition temperature, a slight amount of lithium cobalt nickel oxide might be decomposed. Thus, the upper limit of the heating temperature is preferably lower than or equal to 1000 °C, further preferably lower than or equal to 950 °C, still further preferably lower than or equal to 900 °C.

In view of the above, the heating temperature in Step S33 is preferably higher than or equal to 650 °C and lower than or equal to 1130 °C, further preferably higher than or equal to 650 °C and lower than or equal to 1000 °C, still further preferably higher than or equal to 650 °C and lower than or equal to 950 °C, yet still further preferably higher than or equal to 650 °C and lower than or equal to 900 °C. Furthermore, the heating temperature is preferably higher than or equal to 742 °C and lower than or equal to 1130 °C, further preferably higher than or equal to 742 °C and lower than or equal to 1000 °C, still further preferably higher than or equal to 742 °C and lower than or equal to 950 °C, yet still further preferably higher than or equal to 742 °C and lower than or equal to 900 °C. Furthermore, the heating temperature is preferably higher than or equal to 800 °C and lower than or equal to 1100 °C, further preferably higher than or equal to 830 °C and lower than or equal to 1130 °C, still further preferably higher than or equal to 830 °C and lower than or equal to 1000 °C, yet still further preferably higher than or equal to 830 °C and lower than or equal to 950 °C, yet still further preferably higher than or equal to 830 °C and lower than or equal to 900 °C.

In addition, at the time of heating the mixture 903, the partial pressure of fluorine or a fluoride originating from the fluorine source or the like is preferably controlled to be within an appropriate range.

In the formation method described in this embodiment, some of the materials, e.g., LiF as the fluorine source, function as a flux in some cases. Owing to this function, the heating temperature can be lower than the decomposition temperature of the lithium cobalt nickel oxide, e.g., a temperature higher than or equal to 742 °C and lower than or equal to 950 °C, which allows distribution of the additive element in the surface portion and formation of the positive electrode active material having favorable characteristics.

However, since LiF in a gas phase has a specific gravity less than that of oxygen, heating might volatilize LiF and in that case, LiF in the mixture 903 decreases. As a result, the function of a fusing agent deteriorates. Thus, heating needs to be performed while volatilization of LiF is inhibited. Note that even when LiF is not used as the fluorine source or the like, Li at the surface of $LiCoO_2$ and F of the fluorine source might react to produce LiF, which might be volatilized. Thus, such inhibition of volatilization is needed also when a fluoride having a higher melting point than LiF is used.

In view of this, the mixture 903 is preferably heated in an atmosphere containing LiF, i.e., the mixture 903 is preferably heated in a state where the partial pressure of LiF in the heating furnace is high. Such heating can inhibit volatilization of LiF in the mixture 903.

The heating in this step is preferably performed such that the particles of the mixture 903 are not adhered to each other. Adhesion of the particles of the mixture 903 during the heating might decrease the area of contact with oxygen in the atmosphere and inhibit a path of diffusion of the additive element (e.g., fluorine), thereby hindering distribution of the additive element (e.g., magnesium and fluorine) in the surface portion.

It is considered that uniform distribution of the additive element (e.g., fluorine) in the surface portion leads to a smooth positive electrode active material with little unevenness. Thus, it is preferable that the particles of the mixture 903 not be adhered to each other in order to allow the smooth surface obtained through the heating in Step S15 to be maintained or to be smoother in this step.

In the case of using a rotary kiln for the heating, the heating is preferably performed while the flow rate of an oxygen-containing atmosphere in the kiln is preferably controlled. For example, the flow rate of an oxygen-containing atmosphere is preferably set low, or no flowing of an atmosphere is preferably performed after an atmosphere is purged first and an oxygen atmosphere is introduced into the kiln. Flowing of oxygen is not preferable because it might cause evaporation of the fluorine source, which prevents maintaining the smoothness of the surface.

In the case of using a roller hearth kiln for the heating, the mixture 903 can be heated in an atmosphere containing LiF with the container containing the mixture 903 covered with a lid, for example.

A supplementary explanation of the heating time is provided. The heating time is changed depending on conditions such as the heating temperature and the size and composition of lithium cobalt nickel oxide in Step S14. In the case where the size of lithium cobalt nickel oxide is small, the heating is preferably performed at a lower temperature or for a shorter time than heating in the case where the size is large, in some cases.

Although the formation method in which the additive element A source is mixed and then heating is performed described with reference to FIG. 4B and FIG. 4C, one embodiment of the present invention is not limited thereto. The heating in Step S33 may be performed without mixing the additive element A source. The heating in Step S33 performed on the lithium cobalt nickel oxide in Step S14 is expected to increase the crystallinity of the lithium cobalt nickel oxide. In addition, an effect of reducing distortion, deviation, or the like due to differential shrinkage or the like of lithium cobalt nickel oxide is expected.

<Step S34>

Next, the heated material is collected in Step S34 shown in FIG. 4B, in which crushing is performed as needed; thus, the positive electrode active material 100 is obtained. Here, the collected particles are preferably made to pass through a sieve. Through the above process, the positive electrode active material 100 of one embodiment of the present invention can be formed. The positive electrode active material of one embodiment of the present invention has a smooth surface.

This embodiment can be used in combination with the other embodiments.

(Embodiment 3)

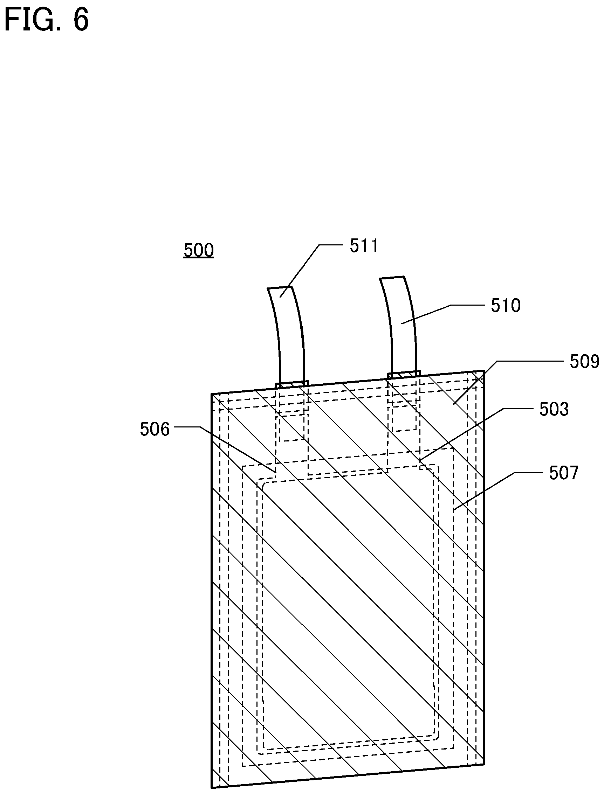

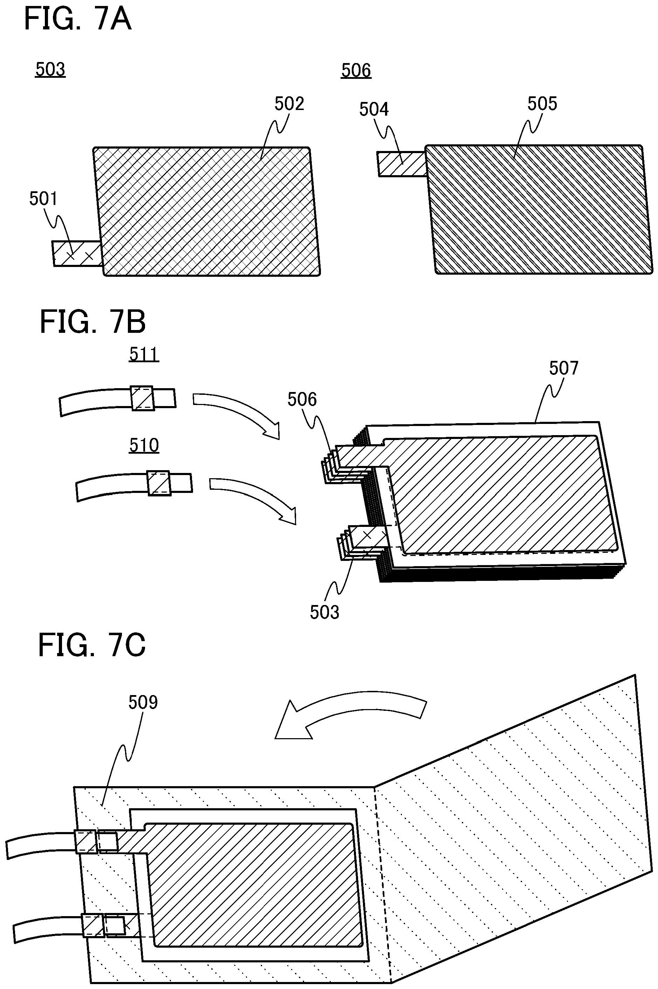

In this embodiment, examples of a secondary battery of one embodiment of the present invention will be described with reference to FIG. 6 and FIG. 7.

<Structure example of secondary battery>

Hereinafter, a secondary battery in which a positive electrode, a negative electrode, and an electrolyte solution are wrapped in an exterior body, which is illustrated in FIG. 6, is described as an example.

[Positive electrode]

The positive electrode includes a positive electrode active material layer and a positive electrode current collector. The positive electrode active material layer includes a positive electrode active material, and may include a conductive material (can be rephrased as a conductive additive) and a binder. As the positive electrode active material, the positive electrode active material described in the above embodiments is used.

The positive electrode active material described in the above embodiments and another positive electrode active material may be mixed to be used.

Examples of the another positive electrode active material include a composite oxide with an olivine crystal structure, a composite oxide with a layered rock-salt crystal structure, and a composite oxide with a spinel crystal structure. For example, a compound such as $LiFePO_4$, $LiFeO_2$, $LiNiO_2$, $LiMn_2O_4$, $V_2O_5$, $Cr_2O_5$, or $MnO_2$ is given.

As another positive electrode active material, it is preferable to add lithium nickel oxide ($LiNiO_2$ or $LiNi_{1-x}M_xO_2$ ($0 < x < 1$) ($M$ = Co, Al, or the like)) to a lithium-containing material with a spinel crystal structure which contains manganese, such as $LiMn_2O_4$. With this structure, the characteristics of the secondary battery can be improved.

As the conductive material, a carbon-based material such as acetylene black can be used. In addition, carbon nanotube, graphene, or a graphene compound can be used as the conductive material.

The graphene compound in this specification and the like refers to multilayer graphene, multi graphene, graphene oxide, multilayer graphene oxide, multi graphene oxide, reduced graphene oxide, reduced multilayer graphene oxide, reduced multi graphene oxide, graphene quantum dots, and the like. A graphene compound contains carbon, has a plate-like shape, a sheet-like shape, or the like, and has a two-dimensional structure formed of a six-membered ring composed of carbon atoms. The two-dimensional structure formed of the six-membered ring composed of carbon atoms may be referred to as a carbon sheet. A graphene compound may include a functional group. The graphene compound preferably has a bent shape. The graphene compound may be rounded like a carbon nanofiber.

In this specification and the like, graphene oxide contains carbon and oxygen, has a sheet-like shape, and includes a functional group, in particular, an epoxy group, a carboxy group, or a hydroxy group.

In this specification and the like, reduced graphene oxide contains carbon and oxygen, has a sheet-like shape, and has a two-dimensional structure formed of a six-membered ring composed of carbon atoms. The reduced graphene oxide functions by itself and may have a stacked-layer structure of multiple sheets. The reduced graphene oxide preferably includes a portion where the carbon concentration is higher than 80 atomic% and the oxygen concentration is higher than or equal to 2 atomic% and lower than or equal to 15 atomic%. With such a carbon concentration and such an oxygen concentration, the reduced graphene oxide can function as a conductive material with high conductivity even with a small amount. In addition, the intensity ratio G/D of a G band to a D band of the Raman spectrum of the reduced graphene oxide is preferably 1 or more. The reduced graphene oxide with such an intensity ratio can function as a conductive material with high conductivity even with a small amount.

A graphene compound sometimes has excellent electrical characteristics of high conductivity and excellent physical properties of high flexibility and high mechanical strength. A graphene compound has a sheet-like shape. A graphene compound has a curved surface in some cases, thereby enabling low-resistant surface contact. Furthermore, a graphene compound sometimes has extremely high conductivity even with a small thickness, and thus a small amount of a graphene compound efficiently allows a conductive path to be formed in an active material layer. Hence, when a graphene compound is used as the conductive material, the area where the active material and the conductive material are in contact with each other can be increased. The graphene compound preferably covers 80 % or more of the active material. Note that the graphene compound preferably clings to at least part of an active material particle. The graphene compound preferably overlays at least part of the active material particle. The shape of the graphene compound preferably conforms to at least part of the shape of the active material particle. The shape of an active material particle means, for example, unevenness of a single active material particle or unevenness formed by a plurality of active material particles. The graphene compound preferably surrounds at least part of an active material particle. The graphene compound may have a hole.

In the case where active material particles with a small diameter (e.g., 1 μm or less) are used, the specific surface area of the active material particles is large and thus more conductive paths for the active material particles are needed. In such a case, it is preferable to use a graphene compound that can efficiently form a conductive path even with a small amount.

It is particularly effective to use a graphene compound, which has the above-described properties, as a conductive material of a secondary battery that needs to be rapidly charged and discharged. For example, a secondary battery for a two- or four-wheeled vehicle, a secondary battery for a drone, or the like is required to have rapid charge and rapid discharge characteristics in some cases. In addition, a mobile electronic device or the like is required to have rapid charge characteristics in some cases. Rapid charging and discharging are referred to as charging and discharging at, for example, 200 mA/g, 400 mA/g, or 1000 mA/g or more.

A plurality of sheets of graphenes or a plurality of graphene compounds are formed to partly cover or adhere to the surfaces of the plurality of particles of the positive electrode active material, so that the plurality of sheets of graphenes or the plurality of graphene compounds preferably make surface contact with the particles of the positive electrode active material.

Here, the plurality of sheets of graphenes or the plurality of graphene compounds can be bonded to each other to form a net-like graphene compound sheet (hereinafter, referred to as a graphene compound net or a graphene net). A graphene net that covers the active material can function as a binder for bonding the active material particles. Accordingly, the amount of the binder can be reduced, or the binder does not have to be used. This can increase the proportion of the active material in the electrode volume and the electrode weight. That is to say, the discharging capacity of the secondary battery can be increased.

A material used in formation of the graphene compound may be mixed with the graphene compound to be used for the active material layer. For example, particles used as a catalyst in formation of the graphene compound may be mixed with the graphene compound. As an example of the catalyst in formation of the graphene compound, particles containing any of silicon oxide ($SiO_2$ or $SiO_x$ ($x < 2$)), aluminum oxide, iron, nickel, ruthenium, iridium, platinum, copper, germanium, and the like can be given. The median diameter (D50) of the particles is preferably less than or equal to 1 $\mu$m, further preferably less than or equal to 100 nm.

[Binder]

As the binder, a rubber material such as styrene-butadiene rubber (SBR), styreneisoprene-styrene rubber, acrylonitrile-butadiene rubber, butadiene rubber, or ethylene-propylene-diene copolymer is preferably used, for example. Fluororubber can also be used as the binder.

As the binder, for example, water-soluble polymers are preferably used. As the water-soluble polymers, a polysaccharide can be used, for example. As the polysaccharide, one or more of starch, a cellulose derivative such as carboxymethyl cellulose (CMC), methyl cellulose, ethyl cellulose, hydroxypropyl cellulose, diacetyl cellulose, or regenerated cellulose, or the like can be used. It is further preferable that such a water-soluble polymer be used in combination with any of the above rubber materials.

Alternatively, as the binder, a material such as polystyrene, poly(methyl acrylate), poly(methyl methacrylate) (PMMA), sodium polyacrylate, polyvinyl alcohol (PVA), polyethylene oxide (PEO), polypropylene oxide, polyimide, polyvinyl chloride, polytetrafluoroethylene, polyethylene, polypropylene, polyisobutylene, polyethylene terephthalate, nylon, polyvinylidene fluoride (PVDF), polyacrylonitrile (PAN), ethylene-propylene-diene polymer, polyvinyl acetate, or nitrocellulose is preferably used.

A plurality of the above-described materials may be used in combination for the binder.

[Current collector]

The current collector can be formed using a material that has high conductivity, such as a metal like stainless steel, gold, platinum, aluminum, or titanium, or an alloy thereof. It is preferable that a material used for the positive electrode current collector not be eluted at the potential of the positive electrode. Alternatively, it is possible to use an aluminum alloy to which an element that improves heat resistance, such as silicon, titanium, neodymium, scandium, or molybdenum, is added. A metal element that forms silicide by reacting with silicon may be used. Examples of the metal element that forms silicide by reacting with silicon include zirconium, titanium, hafnium, vanadium, niobium, tantalum, chromium, molybdenum, tungsten, cobalt, and nickel. The current collector can have a foil-like shape, a plate-like shape, a sheet-like shape, a net-like shape, a punching-metal shape, an expanded-metal shape, or the like as appropriate. The current collector preferably has a thickness greater than or equal to 5 $\mu$m and less than or equal to 30 $\mu$m.

[Negative electrode]

The negative electrode includes a negative electrode active material layer and a negative electrode current collector. The negative electrode active material layer may include a conductive material and a binder.

[Negative electrode active material]

As the negative electrode active material, an alloy-based material and/or a carbon-based material can be used, for example.

For the negative electrode active material, an element that enables charge and discharge reactions by an alloying reaction and a dealloying reaction with lithium can be used. For example, a material containing one or two or more selected from silicon, tin, gallium, aluminum, germanium, lead, antimony, bismuth, silver, zinc, cadmium, indium, and the like can be used. Such elements have higher charging and discharging capacity than carbon; in particular, silicon has a high theoretical capacity of 4200 mAh/g. For this reason, silicon is preferably used as the negative electrode active material. Alternatively, a compound containing any of the above elements may be used. Examples of the compound include $SiO$, $Mg_2Si$, $Mg_2Ge$, $SnO$, $SnO_2$, $Mg_2Sn$, $SnS_2$, $V_2Sn_3$, $FeSn_2$, $CoSn_2$, $Ni_3Sn_2$, $Cu_6Sn_5$, $Ag_3Sn$, $Ag_3Sb$, $Ni_2MnSb$, $CeSb_3$, $LaSn_3$, $La_3Co_2Sn_7$, $CoSb_3$, $InSb$, and $SbSn$. Here, an element that enables charge and discharge reactions by an alloying reaction and a dealloying reaction with lithium, a compound containing the element, and the like may be referred to as an alloy-based material.

In this specification and the like, SiO refers, for example, to silicon monoxide. Alternatively, SiO can be expressed

as $SiO_x$. Here, x is preferably an approximate value of 1. For example, x is preferably greater than or equal to 0.2 and less than or equal to 1.5, further preferably greater than or equal to 0.3 and less than or equal to 1.2. Alternatively, x is preferably greater than or equal to 0.2 and less than or equal to 1.2. Still alternatively, x is preferably greater than or equal to 0.3 and less than or equal to 1.5.

As the carbon-based material, graphite, graphitizing carbon (soft carbon), non-graphitizing carbon (hard carbon), carbon nanotube, graphene, carbon black, or the like is used.

Examples of graphite include artificial graphite and natural graphite. Examples of artificial graphite include mesocarbon microbeads (MCMB), coke-based artificial graphite, and pitch-based artificial graphite. As artificial graphite, spherical graphite having a spherical shape can be used. For example, MCMB is preferably used because it may have a spherical shape. Moreover, MCMB may preferably be used because it can relatively easily have a small surface area. Examples of natural graphite include flake graphite and spherical natural graphite.

Graphite has a low potential substantially equal to that of a lithium metal (higher than or equal to 0.05 V and lower than or equal to 0.3 V vs. Li/Li$^+$) when lithium ions are inserted into graphite (while a lithium-graphite intercalation compound is formed). For this reason, a lithium-ion secondary battery can have a high operating voltage. In addition, graphite is preferred because of its advantages such as a relatively high charging and discharging capacity per unit volume, relatively small volume expansion, low cost, and a higher level of safety than that of a lithium metal.

As the negative electrode active material, an oxide such as titanium dioxide ($TiO_2$), lithium titanium oxide ($Li_4Ti_5O_{12}$), a lithium-graphite intercalation compound ($Li_xC_6$), niobium pentoxide ($Nb_2O_5$), tungsten oxide ($WO_2$), or molybdenum oxide ($MoO_2$) can be used.

Alternatively, as the negative electrode active material, $Li_{3-x}M_xN$ ($M$ = Co, Ni, or Cu) with a $Li_3N$ structure, which is a composite nitride of lithium and a transition metal, can be used. For example, $Li_{2.6}Co_{0.4}N_3$ is preferable because of its high charging and discharging capacity (900 mAh/g and 1890 mAh/cm$^3$).

A composite nitride of lithium and a transition metal is preferably used, in which case lithium ions are contained in the negative electrode active material and thus the negative electrode active material can be used in combination with a material for a positive electrode active material that does not contain lithium ions, such as $V_2O_5$ or $Cr_3O_8$. Note that even in the case of using a material containing lithium ions as a positive electrode active material, the composite nitride of lithium and a transition metal can be used as the negative electrode active material by extracting the lithium ions contained in the positive electrode active material in advance.

Alternatively, a material that causes a conversion reaction can be used as the negative electrode active material. For example, a transition metal oxide that does not form an alloy with lithium, such as cobalt oxide (CoO), nickel oxide (NiO), or iron oxide (FeO), may be used as the negative electrode active material. Other examples of the material that causes a conversion reaction include oxides such as $Fe_2O_3$, CuO, $Cu_2O$, $RuO_2$, and $Cr_2O_3$, sulfides such as $CoS_{0.89}$, NiS, and CuS, nitrides such as $Zn_3N_2$, $Cu_3N$, and $Ge_3N_4$, phosphides such as $NiP_2$, $FeP_2$, and $CoP_3$, and fluorides such as $FeF_3$ and $BiF_3$.

For the conductive material and the binder that can be included in the negative electrode active material layer, materials similar to those for the conductive material and the binder that can be included in the positive electrode active material layer can be used.

[Negative electrode current collector]

For the negative electrode current collector, a material similar to that for the positive electrode current collector can be used. Note that a material does not alloy with carrier ions of lithium or the like is preferably used for the negative electrode current collector.

[Electrolyte solution]

The electrolyte solution contains a solvent and an electrolyte. As the solvent of the electrolyte solution, an aprotic organic solvent is preferable. For example, one of ethylene carbonate (EC), propylene carbonate (PC), butylene carbonate, chloroethylene carbonate, vinylene carbonate, $\gamma$-butyrolactone, $\gamma$-valerolactone, dimethyl carbonate (DMC), diethyl carbonate (DEC), ethyl methyl carbonate (EMC), methyl formate, methyl acetate, ethyl acetate, methyl propionate, ethyl propionate, propyl propionate, methyl butyrate, 1,3-dioxane, 1,4-dioxane, dimethoxyethane (DME), dimethyl sulfoxide, diethyl ether, methyl diglyme, acetonitrile, benzonitrile, tetrahydrofuran, sulfolane, and sultone can be used, or two or more of these solvents can be used in an appropriate combination in an appropriate ratio.

Alternatively, the use of one or more ionic liquids (room temperature molten salts) that are unlikely to burn and volatilize as the solvent of the electrolyte solution can prevent a secondary battery from exploding and/or igniting, for example, even when the internal temperature increases due to an internal short circuit or overcharging of the secondary battery, for example. An ionic liquid contains a cation and an anion, specifically, an organic cation and an anion. Examples of the organic cation used for the electrolyte solution include aliphatic onium cations such as a quaternary ammonium cation, a tertiary sulfonium cation, and a quaternary phosphonium cation, and aromatic cations such as an imidazolium cation and a pyridinium cation. Examples of the anion used for the electrolyte solution include a monovalent amide-based anion, a monovalent methide-based anion, a fluorosulfonate anion, a perfluoroalkylsulfonate anion, a tetrafluoroborate anion, a perfluoroalkylborate anion, a hexafluorophosphate anion, and a perfluoroalkylphosphate anion.

As the electrolyte dissolved in the above-described solvent, one of lithium salts such as $LiPF_6$, $LiClO_4$, $LiAsF_6$, $LiBF_4$, $LiAlCl_4$, LiSCN, LiBr, LiI, $Li_2SO_4$, $Li_2B_{10}Cl_{10}$, $Li_2B_{12}Cl_{12}$, $LiCF_3SO_3$, $LiC_4F_9SO_3$, $LiC(CF_3SO_2)_3$, $LiC(C_2F_5SO_2)_3$, $LiN(CF_3SO_2)_2$, $LiN(C_4F_9SO_2)(CF_3SO_2)$, and $LiN(C_2F_5SO_2)_2$ can be used, or two or more of these lithium salts can be used in an appropriate combination at an appropriate ratio.

The electrolyte solution used for a secondary battery is preferably highly purified and contains a small number of dust particles or elements other than the constituent elements of the electrolyte solution (hereinafter, also simply referred to as "impurities"). Specifically, the weight ratio of impurities to the electrolyte solution is preferably less than or equal to 1 %, further preferably less than or equal to 0.1 %, still further preferably less than or equal to 0.01 %.

Furthermore, an additive agent such as vinylene carbonate, propane sultone (PS), *tert*-butylbenzene (TBB), fluoroethylene carbonate (FEC), lithium bis(oxalate)borate (LiBOB), a dinitrile compound such as succinonitrile or adiponitrile, fluorobenzene, or ethylene glycol bis(propionitrile) ether may be added to the electrolyte solution. The concentration of each of the materials to be added in the whole solvent is, for example, higher than or equal to 0.1 wt% and lower than or equal to 5 wt%. VC or LiBOB is particularly preferable because it facilitates formation of a favorable coating portion.

A polymer gel electrolyte in which a polymer is swelled with an electrolyte solution may be used.

When a polymer gel electrolyte is used, safety against liquid leakage and the like is improved. Moreover, the secondary battery can be thinner and more lightweight.

As a polymer that undergoes gelation, a silicone gel, an acrylic gel, an acrylonitrile gel, a polyethylene oxide-based gel, a polypropylene oxide-based gel, a fluorine-based polymer gel, or the like can be used.

Examples of the polymer include a polymer having a polyalkylene oxide structure, such as polyethylene oxide (PEO); PVDF; polyacrylonitrile; and a copolymer containing any of them. For example, PVDF-HFP, which is a copolymer of PVDF and hexafluoropropylene (HFP), can be used. The formed polymer may be porous.

Instead of the electrolyte solution, a solid electrolyte including an inorganic material such as a sulfide-based inorganic material or an oxide-based inorganic material, a solid electrolyte including a polymer material such as a PEO (polyethylene oxide)-based polymer material, and the like may alternatively be used. When the solid electrolyte is used, provision of a separator and/or a spacer are/is not necessary. Furthermore, the battery can be entirely solidified; thus, there is no possibility of liquid leakage and thus the safety of the battery is dramatically improved.

[Separator]

The secondary battery preferably includes a separator. The separator can be formed using, for example, paper, nonwoven fabric, glass fiber, ceramics, or synthetic fiber containing nylon (polyamide), vinylon (polyvinyl alcohol-based fiber), polyester, acrylic, polyolefin, or polyurethane. The separator is preferably formed to have an envelope-like shape to wrap one of the positive electrode and the negative electrode.

The separator may have a multilayer structure. For example, an organic material film of polypropylene, polyethylene, or the like can be coated with a ceramic-based material, a fluorine-based material, a polyamide-based material, a mixture thereof, or the like. Examples of the ceramic-based material include aluminum oxide particles and silicon oxide particles. Examples of the fluorine-based material include PVDF and polytetrafluoroethylene. Examples of the polyamide-based material include nylon and aramid (meta-based aramid and para-based aramid).

When the separator is coated with the ceramic-based material, the oxidation resistance is improved; hence, degradation of the separator during high-voltage charging and discharging can be inhibited and thus the reliability of the secondary battery can be improved. When the separator is coated with the fluorine-based material, the separator is easily brought into close contact with an electrode, resulting in high output characteristics. When the separator is coated with the polyamide-based material, in particular, aramid, the heat resistance is improved; thus, the safety of the secondary battery can be improved.

For example, both surfaces of a polypropylene film may be coated with a mixed material of aluminum oxide and aramid. Alternatively, a surface of a polypropylene film that is to be in contact with the positive electrode may be coated with the mixed material of aluminum oxide and aramid, and a surface of the polypropylene film that is to be in contact with the negative electrode may be coated with the fluorine-based material.

With the use of a separator having a multilayer structure, the discharging capacity per volume of the secondary battery can be increased because the safety of the secondary battery can be maintained even when the total thickness of the separator is small.

[Exterior body]

For an exterior body included in the secondary battery, a metal material such as aluminum and/or a resin material can be used, for example. A film-like exterior body can also be used. As the film, for example, it is possible to use a film having a three-layer structure in which a highly flexible metal thin film of aluminum, stainless steel, copper, nickel, or the like is provided over a film formed of a material such as polyethylene, polypropylene, polycarbonate, ionomer, or polyamide, and an insulating synthetic resin film of a polyamide-based resin, a polyester-based resin, or the like is provided over the metal thin film as the outer surface of the exterior body.

<Laminated secondary battery and manufacturing method thereof>

FIG. 6 and FIG. 7 each illustrate an example of the external view of a laminated secondary battery 500. As illustrated in FIG. 6 and FIG. 7, the secondary battery 500 includes a positive electrode 503 including a positive electrode current collector 501 and a positive electrode active material layer 502, a negative electrode 506 including a negative electrode current collector 504 and a negative electrode active material layer 505, a separator 507, an exterior body 509, a positive electrode lead electrode 510, and a negative electrode lead electrode 511. When the laminated secondary battery has flexibility and is used in an electronic device at least part of which is flexible, the secondary battery can be bent as the electronic device is bent. An example of a method for manufacturing the laminated secondary battery will be described with reference to FIG. 7A to FIG. 7C.

First, the negative electrode 506, the separator 507, and the positive electrode 503 are stacked. FIG. 7B illustrates the negative electrodes 506, the separators 507, and the positive electrodes 503 that are stacked. Here, an example in which five negative electrodes and four positive electrodes are used is shown. Next, the tab regions of the positive electrodes 503 are bonded to each other, and the positive electrode lead electrode 510 is bonded to the tab region of the positive electrode on the outermost surface. The bonding is performed by ultrasonic welding, for example. In a similar manner, the tab regions of the negative electrodes 506 are bonded to each other, and the negative electrode lead electrode 511 is bonded to the tab region of the negative electrode on the outermost surface.

After that, the negative electrodes 506, the separators 507, and the positive electrodes 503 are placed over the exterior body 509.

Subsequently, the exterior body 509 is folded along a portion shown by a dashed line, as illustrated in FIG. 7C. Then, the outer edges of the exterior body 509 are bonded to each other. The bonding can be performed by thermocompression, for example. At this time, an unbonded region (hereinafter, referred to as an inlet) is provided for part (or one side) of the exterior body 509 so that an electrolyte solution can be introduced later.

Next, the electrolyte solution (not illustrated) is introduced into the exterior body 509 from the inlet of the exterior body 509. The electrolyte solution is preferably introduced in a reduced pressure atmosphere or in an inert atmosphere. Lastly, the inlet is sealed by bonding. In this manner, the laminated secondary battery 500 can be manufactured.

When the positive electrode active material described in the above embodiment is used in the positive electrode 503, the secondary battery 500 with high discharging capacity and excellent cycle performance can be obtained.

This embodiment can be used in appropriate combination with any of the other embodiments.

(Embodiment 4)

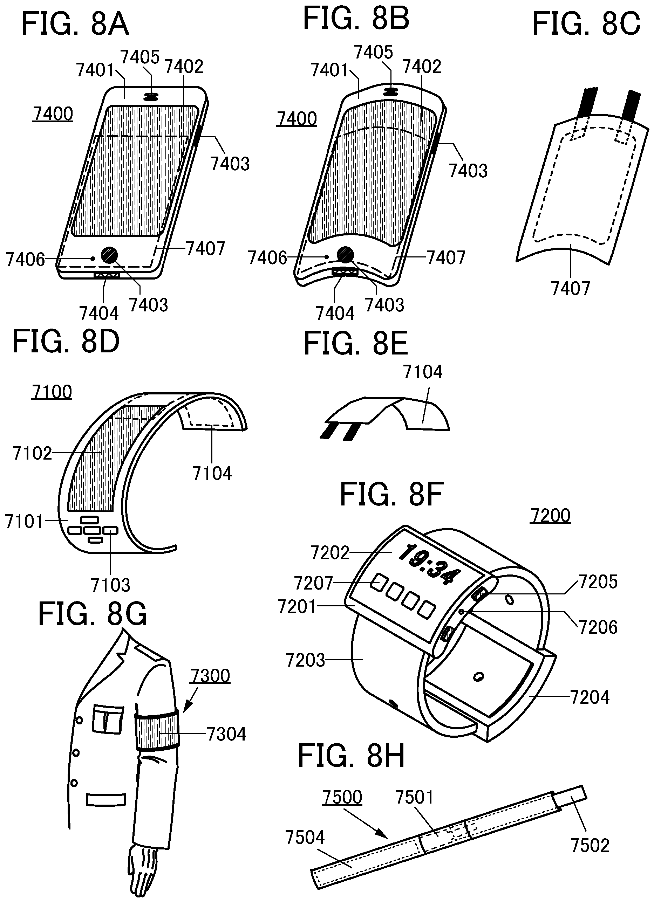

In this embodiment, examples of electronic devices each including the secondary battery of one embodiment of the present invention will be described with reference to FIG. 8A to FIG. 8C.

FIG. 8A to FIG. 8G illustrate examples of electronic devices each including the secondary battery containing a positive electrode active material described in the above embodiment. Examples of the electronic devices each including a secondary battery include television devices (also referred to as televisions or television receivers), monitors of computers or the like, digital cameras, digital video cameras, digital photo frames, mobile phones (also referred to as cellular phones or mobile phone devices), portable game machines, portable information terminals, audio reproducing devices, and large game machines such as pachinko machines.

Furthermore, a flexible secondary battery can be incorporated along a curved inside or outside wall surface of a house, a building, or the like or a curved interior or exterior surface of an automobile.

FIG. 8A illustrates an example of a mobile phone. A mobile phone 7400 is provided with a display portion 7402 incorporated in a housing 7401, operation buttons 7403, an external connection port 7404, a speaker 7405, a microphone 7406, and the like. Note that the mobile phone 7400 includes a secondary battery 7407. When the secondary battery of one embodiment of the present invention is used as the secondary battery 7407, a lightweight mobile phone with a long lifetime can be provided.

FIG. 8B illustrates the state where the mobile phone 7400 is bent. When the whole mobile phone 7400 is curved by external force, the secondary battery 7407 provided therein is also curved. FIG. 8C illustrates the bent secondary battery 7407. The secondary battery 7407 is a thin storage battery. The secondary battery 7407 is fixed in a state of being bent. Note that the secondary battery 7407 includes a lead electrode electrically connected to a current collector. The current collector is, for example, copper foil, and partly alloyed with gallium; thus, adhesion between the current collector and an active material layer in contact with the current collector is improved and the secondary battery 7407 can have high reliability even in a state of being bent.

FIG. 8D illustrates an example of a bangle-type display device. A portable display device 7100 includes a housing 7101, a display portion 7102, operation buttons 7103, and a secondary battery 7104. FIG. 8E illustrates the bent secondary battery 7104. When the display device is worn on a user's arm while the secondary battery 7104 is bent, the housing changes its shape and the curvature of part or the whole of the secondary battery 7104 is changed. Note that the bending condition of a curve at a given point that is represented by a value of the radius of a corresponding circle is referred to as the radius of curvature, and the reciprocal of the radius of curvature is referred to as curvature. Specifically, part or the whole of the housing or the main surface of the secondary battery 7104 is changed in the range of radius of curvature from 40 mm or more to 150 mm or less. When the radius of curvature at the main surface of the secondary battery 7104 is in the range from 40 mm or more to 150 mm or less, the reliability can be kept high. When the secondary battery of one embodiment of the present invention is used as the secondary battery 7104, a lightweight portable display device with a long lifetime can be provided.

FIG. 8F illustrates an example of a watch-type portable information terminal. A portable information terminal 7200 includes a housing 7201, a display portion 7202, a band 7203, a buckle 7204, an operation button 7205, an input/output terminal 7206, and the like.

The portable information terminal 7200 is capable of executing a variety of applications such as mobile phone calls, e-mailing, viewing and editing texts, music reproduction, Internet communication, and a computer game.

The display surface of the display portion 7202 is curved, and images can be displayed on the curved display surface. In addition, the display portion 7202 includes a touch sensor, and operation can be performed by touching the screen with a finger, a stylus, or the like. For example, by touching an icon 7207 displayed on the display portion 7202, application can be started.

With the operation button 7205, a variety of functions such as time setting, power on/off, on/off of wireless communication, setting and cancellation of a silent mode, and setting and cancellation of a power saving mode can be performed. For example, the functions of the operation button 7205 can be set freely by setting the operating system incorporated in the portable information terminal 7200.

The portable information terminal 7200 can perform near field communication that is standardized communication. For example, mutual communication between the portable information terminal 7200 and a headset capable of wireless communication enables hands-free calling.

The portable information terminal 7200 includes the input/output terminal 7206, and data can be directly transmitted to and received from another information terminal via a connector. In addition, charging via the input/output terminal 7206 is possible. Note that the charging operation may be performed by wireless power feeding without using the input/output terminal 7206.

The display portion 7202 of the portable information terminal 7200 includes the secondary battery of one embodiment of the present invention. When the secondary battery of one embodiment of the present invention is used, a lightweight portable information terminal with a long lifetime can be provided. For example, the secondary battery 7104 illustrated in FIG. 8E can be provided in the housing 7201 while being curved, or can be provided in the band 7203 such that it can be curved.

The portable information terminal 7200 preferably includes a sensor. As the sensor, for example, a human body sensor such as a fingerprint sensor, a pulse sensor, or a temperature sensor, a touch sensor, a pressure sensitive sensor, or an acceleration sensor is preferably mounted.

FIG. 8G illustrates an example of an armband display device. A display device 7300 includes a display portion 7304 and the secondary battery of one embodiment of the present invention. The display device 7300 can include a touch sensor in the display portion 7304 and can serve as a portable information terminal.

The display surface of the display portion 7304 is curved, and images can be displayed on the curved display surface. A display state of the display device 7300 can be changed by, for example, near field communication that is standardized communication.

The display device 7300 includes an input/output terminal, and data can be directly transmitted to and received from another information terminal via a connector. In addition, charging via the input/output terminal is possible. Note that the charging operation may be performed by wireless power feeding without using the input/output terminal.

When the secondary battery of one embodiment of the present invention is used as the secondary battery included in the display device 7300, a lightweight display device with a long lifetime can be provided.

In addition, examples of electronic devices each including the secondary battery with excellent cycle performance described in the above embodiment are described with reference to FIG. 8H, FIG. 9, and FIG. 10.

When the secondary battery of one embodiment of the present invention is used as a secondary battery of a daily electronic device, a lightweight product with a long lifetime can be provided. Examples of the daily electronic device include an electric toothbrush, an electric shaver, and electric beauty equipment. As secondary batteries of these products, small and lightweight stick type secondary batteries with high discharging capacity are desired in consideration of handling ease for users.

FIG. 8H is a perspective view of a device called a cigarette smoking device (electronic cigarette). In FIG. 8H, an electronic cigarette 7500 includes an atomizer 7501 including a heating element, a secondary battery 7504 that supplies electric power to the atomizer, and a cartridge 7502 including a liquid supply bottle, a sensor, and the like. To improve safety, a protection circuit that prevents overcharging and/or overdischarging of the secondary battery 7504 may be electrically connected to the secondary battery 7504. The secondary battery 7504 illustrated in FIG. 8H includes an external terminal for connection to a charger. When the electronic cigarette 7500 is held, the secondary battery 7504 is a tip portion; thus, it is preferred that the secondary battery 7504 have a short total length and be lightweight. With the secondary battery of one embodiment of the present invention, which has high discharging capacity and excellent cycle performance, the small and lightweight electronic cigarette 7500 that can be used for a long time over a long period can be provided.

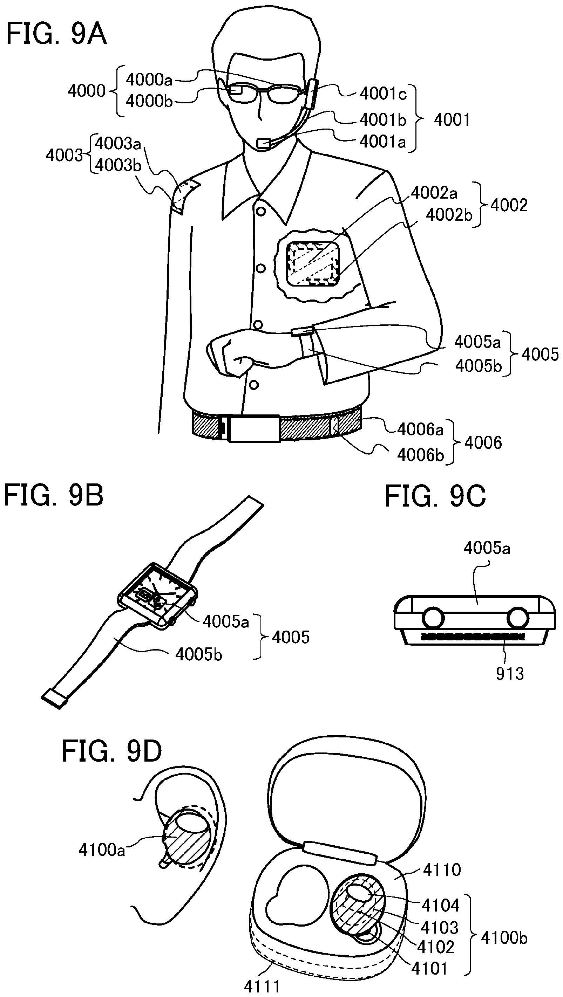

FIG. 9A illustrates examples of wearable devices. A secondary battery is used as a power source of a wearable device. To have improved splash resistance, water resistance, or dust resistance in daily use or outdoor use by a user, a wearable device is desirably capable of being charged with and without a wire whose connector portion for connection is exposed.

For example, the secondary battery of one embodiment of the present invention can be provided in a glasses-type device 4000 illustrated in FIG. 9A. The glasses-type device 4000 includes a frame 4000a and a display portion 4000b. The secondary battery is provided in a temple portion of the frame 4000a having a curved shape, whereby the glasses-type device 4000 can be lightweight, can have a well-balanced weight, and can be used continuously for a long time. With the use of the secondary battery of one embodiment of the present invention, space saving required with downsizing of a housing can be achieved.

The secondary battery of one embodiment of the present invention can be provided in a headset-type device 4001. The headset-type device 4001 includes at least a microphone portion 4001a, a flexible pipe 4001b, and an earphone portion 4001c. The secondary battery can be provided in the flexible pipe 4001b and/or the earphone portion 4001c. With the use of the secondary battery of one embodiment of the present invention, space saving required with downsizing of a housing can be achieved.

The secondary battery of one embodiment of the present invention can be provided in a device 4002 that can be attached directly to a body. A secondary battery 4002b can be provided in a thin housing 4002a of the device 4002. With the use of the secondary battery of one embodiment of the present invention, space saving required with downsizing of a housing can be achieved.

The secondary battery of one embodiment of the present invention can be provided in a device 4003 that can be attached to clothes. A secondary battery 4003b can be provided in a thin housing 4003a of the device 4003. With the use of the secondary battery of one embodiment of the present invention, space saving required with downsizing of a housing can be achieved.

The secondary battery of one embodiment of the present invention can be provided in a belt-type device 4006. The belt-type device 4006 includes a belt portion 4006a and a wireless power feeding and receiving portion 4006b, and the secondary battery can be provided inside the belt portion 4006a. With the use of the secondary battery of one embodiment of the present invention, space saving required with downsizing of a housing can be achieved.

The secondary battery of one embodiment of the present invention can be provided in a watch-type device 4005. The watch-type device 4005 includes a display portion 4005a and a belt portion 4005b, and the secondary battery can be provided in the display portion 4005a or the belt portion 4005b. With the use of the secondary battery of one embodiment of the present invention, space saving required with downsizing of a housing can be achieved.

The display portion 4005a can display various kinds of information such as time and reception information of an e-mail and an incoming call.

The watch-type device 4005 is a wearable device that is wound around an arm directly; thus, a sensor that measures the pulse, the blood pressure, or the like of the user may be incorporated therein. Data on the exercise quantity and health of the user can be stored to be used for health maintenance.

FIG. 9B illustrates a perspective view of the watch-type device 4005 that is detached from an arm.

FIG. 9C illustrates a side view. FIG. 9C illustrates a state where a secondary battery 913 is incorporated in the watch-type device 4005. The secondary battery 913 is the secondary battery described in Embodiment 4. The secondary battery 913 is provided to overlap with the display portion 4005a and is small and lightweight.

FIG. 9D illustrates an example of wireless earphones. The wireless earphones illustrated here include, but are not limited to, a pair of main bodies 4100a and 4100b.

The main bodies 4100a and 4100b each include a driver unit 4101, an antenna 4102, and a secondary battery 4103. A display portion 4104 may also be included. Moreover, a substrate where a circuit such as a wireless IC is provided, a terminal for charge, and the like are preferably included. Furthermore, a microphone may be included.

A case 4110 includes a secondary battery 4111. Moreover, a substrate where a circuit such as a wireless IC or a charge control IC is provided, and a terminal for charge are preferably included. Furthermore, a display portion, a button, and the like may be included.

The main bodies 4100a and 4100b can communicate wirelessly with another electronic device such as a smartphone. Thus, sound data and the like transmitted from another electronic device can be played through the main bodies 4100a and 4100b. When the main bodies 4100a and 4100b include a microphone, sound captured by the microphone is transmitted to another electronic device, and sound data obtained by processing with the electronic device can be transmitted to and played through the main bodies 4100a and 4100b. Hence, the wireless earphones can be used as a translator, for example.

The secondary battery 4103 included in the main body 4100a can be charged by the secondary battery 4111 included in the case 4110. As the secondary battery 4111 and the secondary battery 4103, the coin-type secondary battery or the cylindrical secondary battery of the foregoing embodiment, for example, can be used. A secondary battery whose positive electrode includes the positive electrode active material 100 obtained in Embodiment 1 has a high energy density; thus, with the use of the secondary battery as the secondary battery 4103 and the secondary battery 4111, space saving required with downsizing of the wireless earphones can be achieved.

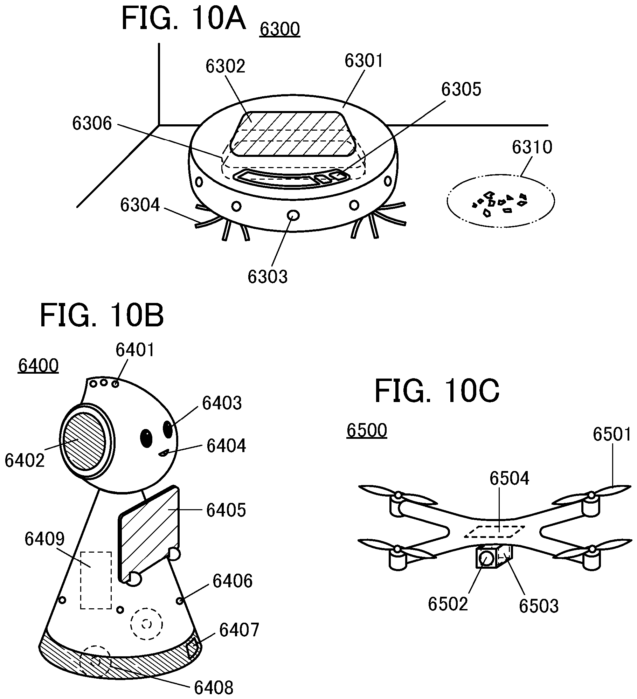

FIG. 10A illustrates an example of a cleaning robot. A cleaning robot 6300 includes a display portion 6302 placed on the top surface of a housing 6301, a plurality of cameras 6303 placed on the side surface of the housing 6301, a brush 6304, operation buttons 6305, a secondary battery 6306, a variety of sensors, and the like. Although not illustrated, the cleaning robot 6300 is provided with a tire, an inlet, and the like. The cleaning robot 6300 is self-propelled, detects dust 6310, and sucks up the dust through the inlet provided on the bottom surface.

For example, the cleaning robot 6300 can determine whether there is an obstacle such as a wall, furniture, or a step by analyzing images taken by the cameras 6303. In the case where the cleaning robot 6300 detects an object, such as a wire, that is likely to be caught in the brush 6304 by image analysis, the rotation of the brush 6304 can be stopped. The cleaning robot 6300 includes the secondary battery 6306 of one embodiment of the present invention and a semiconductor device or an electronic component. The cleaning robot 6300 including the secondary battery 6306 of one embodiment of the present invention can be a highly reliable electronic device that can operate for a long time.

FIG. 10B illustrates an example of a robot. A robot 6400 illustrated in FIG. 10B includes a secondary battery 6409, an illuminance sensor 6401, a microphone 6402, an upper camera 6403, a speaker 6404, a display portion 6405, a lower camera 6406, an obstacle sensor 6407, a moving mechanism 6408, an arithmetic device, and the like.

The microphone 6402 has a function of detecting a speaking voice of a user, an environmental sound, and the like. The speaker 6404 has a function of outputting sound. The robot 6400 can communicate with the user using the microphone 6402 and the speaker 6404.

The display portion 6405 has a function of displaying various kinds of information. The robot 6400 can display information desired by the user on the display portion 6405. The display portion 6405 may be provided with a touch panel. Moreover, the display portion 6405 may be a detachable information terminal, in which case charging and data communication can be performed when the display portion 6405 is set at the home position of the robot 6400.

The upper camera 6403 and the lower camera 6406 each have a function of taking an image of the surroundings of the robot 6400. The obstacle sensor 6407 can detect an obstacle in the direction where the robot 6400 advances with the moving mechanism 6408. The robot 6400 can move safely by recognizing the surroundings with the upper camera 6403, the lower camera 6406, and the obstacle sensor 6407.

The robot 6400 includes the secondary battery 6409 of one embodiment of the present invention and a semiconductor device or an electronic component. The robot 6400 including the secondary battery of one embodiment of the present invention can be a highly reliable electronic device that can operate for a long time.

FIG. 10C illustrates an example of a flying object. A flying object 6500 illustrated in FIG. 10C includes propellers 6501, a camera 6502, a secondary battery 6503, and the like and has a function of flying autonomously.

For example, image data taken by the camera 6502 is stored in an electronic component 6504. The electronic component 6504 can analyze the image data to detect whether there is an obstacle in the way of the movement. Moreover, the electronic component 6504 can estimate the remaining battery level from a change in the power storage capacity of the secondary battery 6503. The flying object 6500 includes the secondary battery 6503 of one embodiment of the present invention. The flying object 6500 including the secondary battery of one embodiment of the present invention can be a highly reliable electronic device that can operate for a long time.

This embodiment can be implemented in appropriate combination with any of the other embodiments.

(Embodiment 5)

In this embodiment, examples of vehicles each including the secondary battery containing a positive electrode active material of one embodiment of the present invention will be described.

The use of secondary batteries in vehicles enables production of next-generation clean energy vehicles such as hybrid electric vehicles (HVs), electric vehicles (EVs), and plug-in hybrid electric vehicles (PHVs).

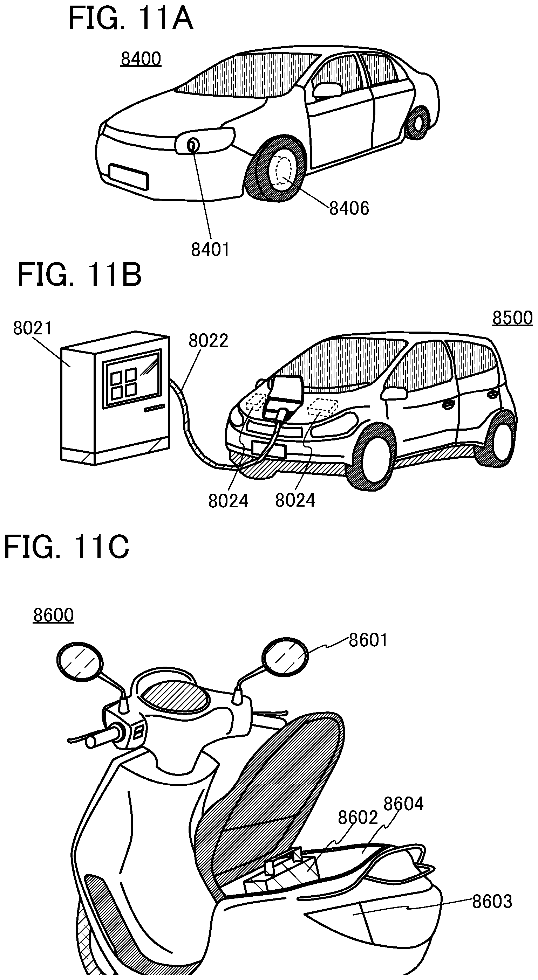

FIG. 11 illustrates examples of a vehicle including the secondary battery of one embodiment of the present invention. An automobile 8400 illustrated in FIG. 11A is an electric vehicle that runs on the power of an electric motor. Alternatively, the automobile 8400 is a hybrid electric vehicle capable of driving using either an electric motor or an engine as appropriate. The use of one embodiment of the present invention achieves a high-mileage vehicle. The automobile 8400 includes a secondary battery. For example, the modules of the secondary batteries can be arranged to be used in a floor portion in the automobile. The secondary battery can be used not only for driving an electric motor 8406, but also for supplying electric power to a light-emitting device such as a headlight 8401 and a room light (not illustrated).

The secondary battery can also supply electric power to a display device included in the automobile 8400, such as a speedometer or a tachometer. Furthermore, the secondary battery can supply electric power to a semiconductor device included in the automobile 8400, such as a navigation system.

An automobile 8500 illustrated in FIG. 11B can be charged when the secondary battery included in the automobile 8500 is supplied with electric power through external charge equipment by a plug-in system, a contactless power feeding system, and/or the like. FIG. 11B shows a state where a secondary battery 8024 included in the automobile 8500 is charged with the use of a ground-based charging device 8021 through a cable 8022. Charging can be performed as appropriate by a given method such as CHAdeMO (registered trademark) or Combined Charging System as a charging method, the standard of a connector, or the like. The charging device 8021 may be a charge station provided in a commerce facility or a power supply in a house. For example, with the use of a plug-in technique, the secondary battery 8024 included in the automobile 8500 can be charged by being supplied with electric power from outside. Charging can be performed by converting AC electric power into DC electric power through a converter such as an ACDC converter.

Although not illustrated, the vehicle may include a power receiving device so that it can be charged by being supplied with electric power from an above-ground power transmitting device in a contactless manner. In the case of the contactless power feeding system, by fitting a power transmitting device in a road and/or an exterior wall, charging can be performed not only when the vehicle is stopped but also when driven. In addition, the contactless power feeding system may be utilized to perform transmission and reception of electric power between vehicles. Furthermore, a solar cell may be provided in the exterior of the vehicle to charge the secondary battery when the vehicle stops and/or moves. To supply electric power in such a contactless manner, an electromagnetic induction method and/or a magnetic resonance method can be used.

FIG. 11C shows an example of a motorcycle including the secondary battery of one embodiment of the present invention. A motor scooter 8600 illustrated in FIG. 11C includes a secondary battery 8602, side mirrors 8601, and direction indicators 8603. The secondary battery 8602 can supply electricity to the direction indicators 8603.

In the motor scooter 8600 illustrated in FIG. 11C, the secondary battery 8602 can be held in an under-seat storage 8604. The secondary battery 8602 can be held in the under-seat storage 8604 even when the under-seat storage 8604 is small. The secondary battery 8602 is detachable; thus, the secondary battery 8602 is carried indoors when charged, and is stored before the motor scooter is driven.

According to one embodiment of the present invention, the secondary battery can have excellent cycle performance and the discharging capacity of the secondary battery can be increased. Thus, the secondary battery itself can be made more compact and lightweight. The compact and lightweight secondary battery contributes to a reduction in the weight of a vehicle, and thus increases the mileage. Furthermore, the secondary battery included in the vehicle can be used as a power supply source for supplying electric power to products other than the vehicle. In such a case, the use of a commercial power supply can be avoided at peak time of electric power demand, for example. Avoiding the use of a commercial power supply at peak time of electric power demand can contribute to energy saving and a reduction in carbon dioxide emissions. Moreover, the secondary battery with excellent cycle performance can be used over a long period; thus, the use amount of rare metals typified by cobalt can be reduced.

This embodiment can be implemented in appropriate combination with the other embodiments.

[Example]

In this example, a positive electrode active material of one embodiment of the present invention was formed, and its crystal structure after charging was analyzed.

<Formation of positive electrode active material>

Samples formed in this example will be described with reference to the formation method shown in FIG. 4.

<Sample 1>

In Step S11 in FIG. 4A, lithium carbonate ($Li_2CO_3$) was prepared as a lithium (Li) source, tetracobalt trioxide

($Co_3O_4$) was prepared as a cobalt (Co) source, and nickel hydroxide ($Ni(OH)_2$) was prepared as a nickel (Ni) source. Each of the sources was weighted such that Li: Co: Ni = 1:0.8:0.2 (atomic ratio).

Next, in Step S12, the lithium source, the cobalt source, and the nickel source were mixed by a wet method using a ball mill. Dehydrated acetone was used as a solvent, and zirconium oxide balls (1 mmφ) were used as a grinding medium. The lithium source, the cobalt source, and the nickel source weighting 10 g in total were put in a 45-mL-capacity of the mixing ball mill together with 20 mL of dehydrated acetone and 22 g of zirconium oxide balls (1 mmφ). The rotational frequency of the ball mill was 300 rpm (the diameter of the ball mill was 40 mm), and the processing time was 20 hours.

Next, in Step S13, the obtained mixture was heated. With the use of a muffle furnace, heating was performed at 900 °C for 10 hours. The atmosphere was dry air with a flow rate of 10 L/min.

Through the above process, a positive electrode active material with a composition of $LiCo_{0.8}Ni_{0.2}O_2$ was obtained. This was Sample 1.

<Sample 2>

In Step S11 to Step S14 in FIG. 4B, the positive electrode active material with a composition of $LiCo_{0.8}Ni_{0.2}O_2$ was obtained in a manner similar to that of Sample 1. Next, as the additive element A source added in Step S20 in FIG. 4B, magnesium and fluorine were selected. In Step S21 in FIG. 4C, magnesium fluoride ($MgF_2$) and lithium fluoride (LiF) were each used as a magnesium (Mg) source, and lithium fluoride was used as a fluorine source. The LiF and $MgF_2$ were weighed such that LiF: $MgF_2$ = 1:3 (molar ratio).

Next, in Step S22 in FIG. 4C, the magnesium source (Mg source) and the fluorine source were mixed to obtain the additive element A source.

Next, in Step S31 in FIG. 4B, $MgF_2$ and LiF were weighed to be 0.5 mol% and 0.17 mol%, respectively, of the transition metal M and mixed with $LiCo_{0.8}Ni_{0.2}O_2$ by a dry method. At this time, stirring was performed at a rotational speed of 150 rpm for 1 hour. These conditions were milder than those of the stirring in the production of the A source. Finally, the mixture was made to pass through a sieve with an aperture of 300 μm, whereby the mixture 903 having a uniform particle diameter was obtained (Step S32).

Next, in Step S33, the mixture 903 was heated. The heating conditions were 850 °C and 2 hours. During the heating, a lid was put on a crucible containing the mixture 903. The atmosphere was an oxygen atmosphere with a flow rate of 10 L/min. By the heating, a positive electrode active material containing Mg and F was obtained (Step S34). This was Sample 2.

<Sample 3>

Sample 3 was formed in a manner similar to that of Sample 2 except that the additive element was not added in Step S20.

<Sample 4>

In Step S11, Sample 4 was formed in a manner similar to that of Sample 1 except that lithium carbonate ($Li_2CO_3$) as the lithium (Li) source, tricobalt tetraoxide ($Co_3O_4$) as the cobalt (Co) source, and nickel hydroxide ($Ni(OH)_2$) as the nickel (Ni) source were weighed such that Li: Co: Ni = 1:0.9:0.1 (atomic ratio).

<Sample 5>

In Step S11, Sample 5 was formed in a manner similar to that of Sample 2 except that lithium carbonate ($Li_2CO_3$) as the lithium (Li) source, tricobalt tetraoxide ($Co_3O_4$) as the cobalt (Co) source, and nickel hydroxide ($Ni(OH)_2$) as the nickel (Ni) source were weighed such that Li: Co: Ni = 1:0.9:0.1 (atomic ratio).

<Sample 6>

In Step S11, Sample 6 was formed in a manner similar to that of Sample 1 except that lithium carbonate ($Li_2CO_3$) as the lithium (Li) source, tricobalt tetraoxide ($Co_3O_4$) as the cobalt (Co) source, and nickel hydroxide ($Ni(OH)_2$) as the nickel (Ni) source were weighed such that Li: Co: Ni = 1:0.95:0.05 (atomic ratio).

<Sample 11>

In Step S11, Sample 11 was formed in a manner similar to that of Sample 1 except that lithium carbonate ($Li_2CO_3$) as the lithium (Li) source, tricobalt tetraoxide ($Co_3O_4$) as the cobalt (Co) source, and nickel hydroxide ($Ni(OH)_2$) as the

nickel (Ni) source were weighed such that Li: Co: Ni = 1:0.99:0.01 (atomic ratio).

<Sample 12>

In Step S11, Sample 12 was formed in a manner similar to that of Sample 2 except that lithium carbonate ($Li_2CO_3$) as the lithium (Li) source, tricobalt tetraoxide ($Co_3O_4$) as the cobalt (Co) source, and nickel hydroxide ($Ni(OH)_2$) as the nickel (Ni) source were weighed such that Li: Co: Ni = 1:0.99:0.01 (atomic ratio).

Table 1 shows the formation conditions of Sample 1 to Sample 6, Sample 11, and Sample 12.

[Table 1]

| | | Composition | \multicolumn{4}{c} Formation conditions |
|---|---|---|---|---|---|---|

| | | Composition | Element sources in Step S11 | Heating condition in Step S13 | Additive element source in Step S20 | Heating condition in Step S33 |
|---|---|---|---|---|---|---|
| | Sample 1 | $LiCo_{0.8}Ni_{0.2}O_2$ | $Li_2CO_3$ $Ni(OH)_2$ $CO_3O_4$ | 900 °C, 10 hr | - | - |
| | Sample 2 | | | | LiF MgF$_2$ | 850 °C, 2 hr |
| | Sample 3 | | | | - | 850 °C, 2 hr |
| | Sample 4 | $LiCo_{0.9}Ni_{0.1}O_2$ | | | - | - |
| | Sample 5 | | | | LiF MgF$_2$ | 850 °C, 2 hr |
| | Sample 6 | $LiCo_{0.95}Ni_{0.03}O_2$ | | | - | - |
| | Sample 11 | $LiCo_{0.99}Ni_{0.01}O_2$ | | | - | - |
| | Sample 12 | | | | LiF MgF$_2$ | 850 °C, 2 hr |

<XRD>

After formation of the positive electrode active materials, Sample 1, Sample 4, and Sample 6 were subjected to crystal structure analysis with XRD before being used in half cells.

The half cells were assembled using Sample 1 to Sample 6, Sample 11, and Sample 12, charged at 4.5 V, 4.6 V, or 4.7 V, and the crystal structures were analyzed with XRD.

The conditions of the half cells are described below. First, the above-described positive electrode active materials were prepared, acetylene black (AB) was prepared as a conductive material, and polyvinylidene fluoride (PVDF) was prepared as a binding agent. Slurry was formed by mixing them at the positive electrode active material: AB: PVDF = 95:3:2 (weight ratio), and the slurry was applied to an aluminum current collector. As a solvent of the slurry, NMP was used.

After the slurry was applied to the current collector, the solvent was volatilized. Through the above process, a positive electrode was obtained. In the positive electrode, the loading amount of the active material was approximately 7 mg/cm$^2$.

As an electrolyte solution, a solution which is obtained by adding vinylene carbonate (VC) at 2 wt% as an additive to a mixture of ethylene carbonate (EC) and diethyl carbonate (DEC) at EC: DEC = 3:7 (volume ratio) was used. As an electrolyte contained in the electrolyte solution, 1 mol/L lithium hexafluorophosphate ($LiPF_6$) was used. As a separator, polypropylene was used.

A lithium metal was prepared as a counter electrode to form coin-type half cells including the above positive electrodes and the like.

The charging conditions were as follows: the charging voltage was 4.5 V, 4.6 V, or 4.7 V; the charging method was CCCV (a constant current was 68.5 mA/g, each voltage was the upper limit voltage, and a termination current was 1.37 mA/g); and the charging temperature was 25 °C.

Immediately after charging is completed, each of the half cells in the charged state was disassembled under an argon atmosphere in a glove box, and each of the positive electrodes was taken out and washed with DMC (dimethyl carbonate) to remove the electrolyte solution. The positive electrodes taken out were attached to a flat substrate with a double-sided adhesive tape and sealed in an airtight sample holder in an argon atmosphere. The position of the positive electrode active material layer was adjusted to the measurement plane required by the apparatus. The XRD measurement was performed at room temperature irrespective of the charging temperature.

The apparatus and conditions of the XRD measurement were as follows.

XRD apparatus: D8 ADVANCE produced by Bruker AXS
X-ray source: Cu
Output: 40 kV, 40 mA
Angle of divergence: Div. Slit, 0.5°
Detector: LynxEye
Scanning method: $2\theta/\theta$ continuous scan
Measurement range ($2\theta$): from 15° to 75°, or from 15° to 70°
Step width ($2\theta$): 0.01°
Counting time: 1 second/step
Rotation of sample stage: 15 rpm

From the obtained XRD patterns, the background and $CuK\alpha_2$ radiation peak were removed using analysis software, DIFFRAC. EVA.

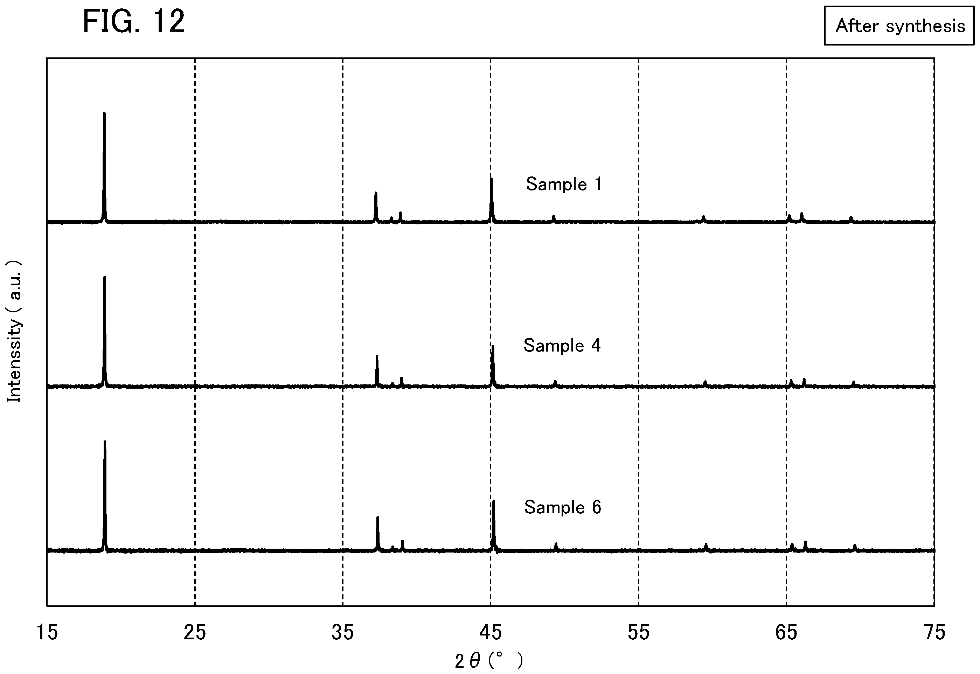

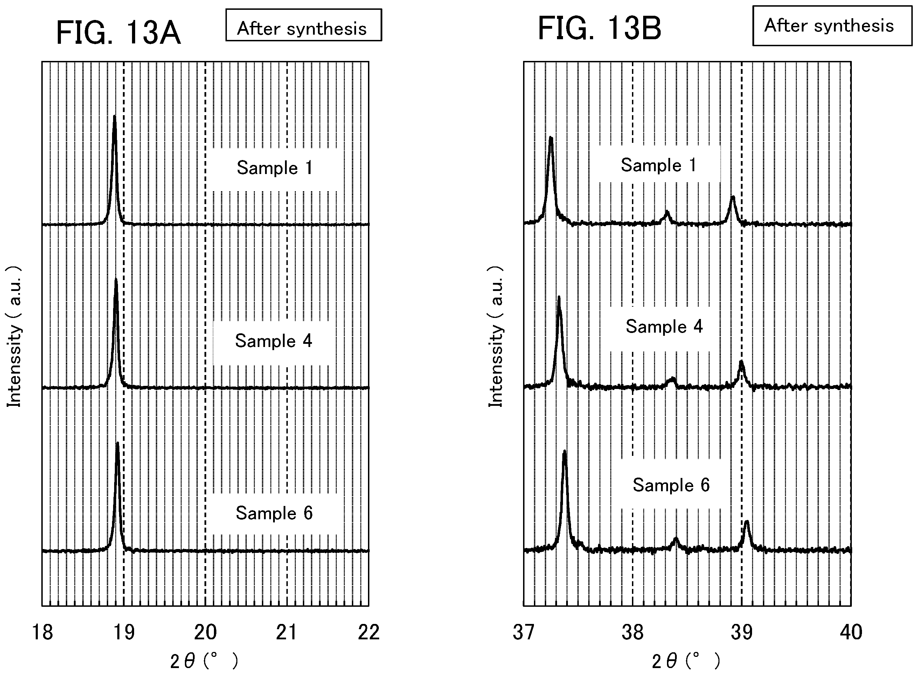

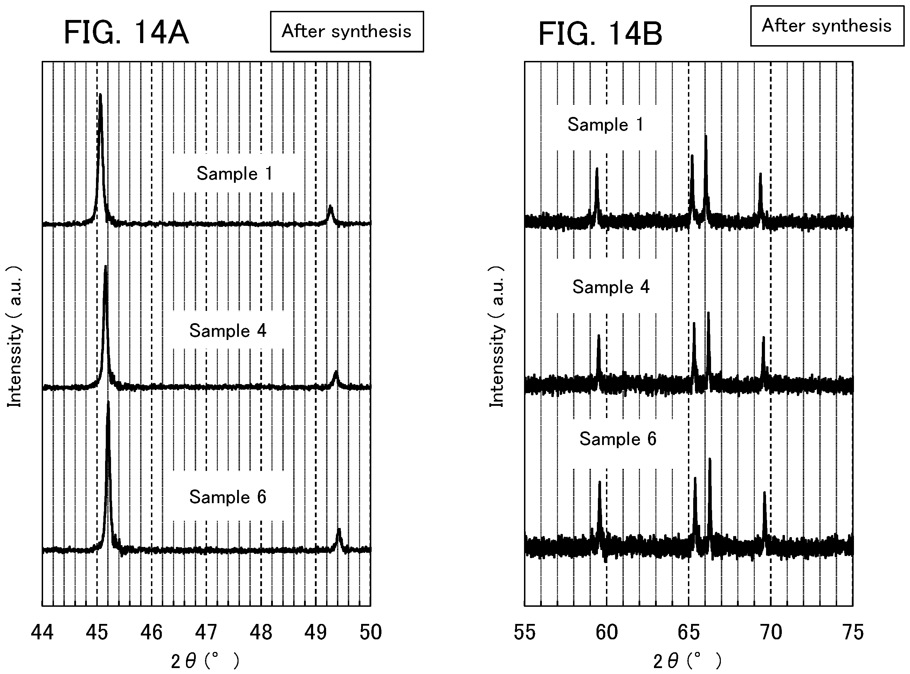

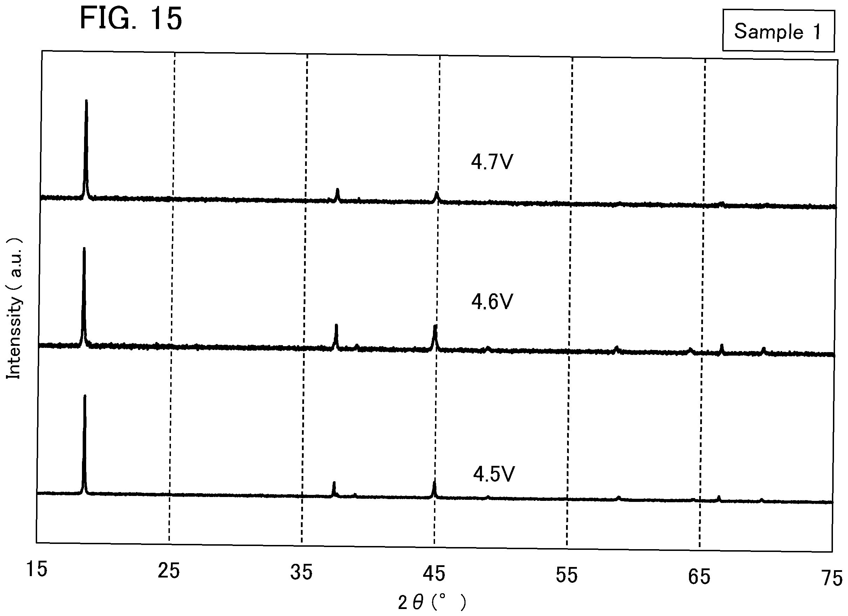

FIG. 12 shows XRD patterns of Sample 1, Sample 4, and Sample 6 after the positive electrode active materials are formed and before the samples are used in the half cells (hereinafter, sometimes referred to as after the synthesis). FIG. 13A to FIG. 14B show enlarged patterns of part of FIG. 15.

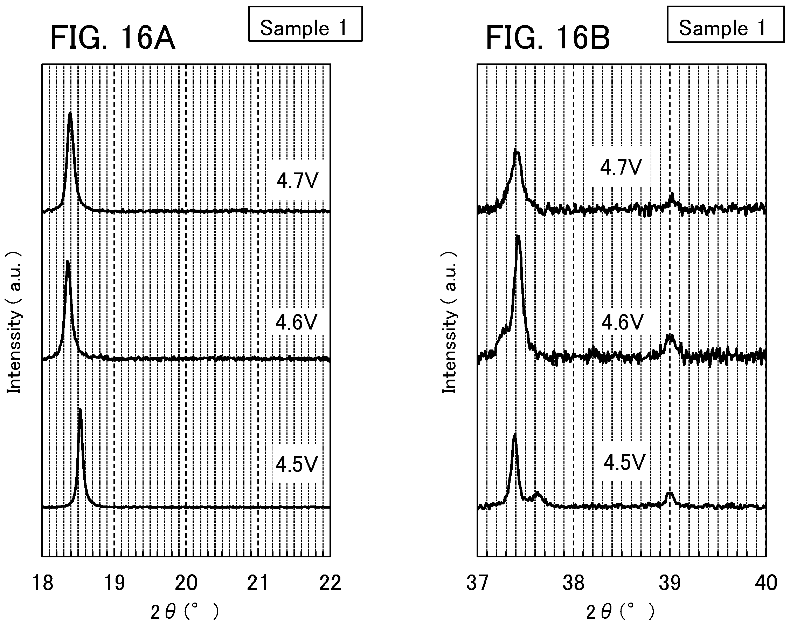

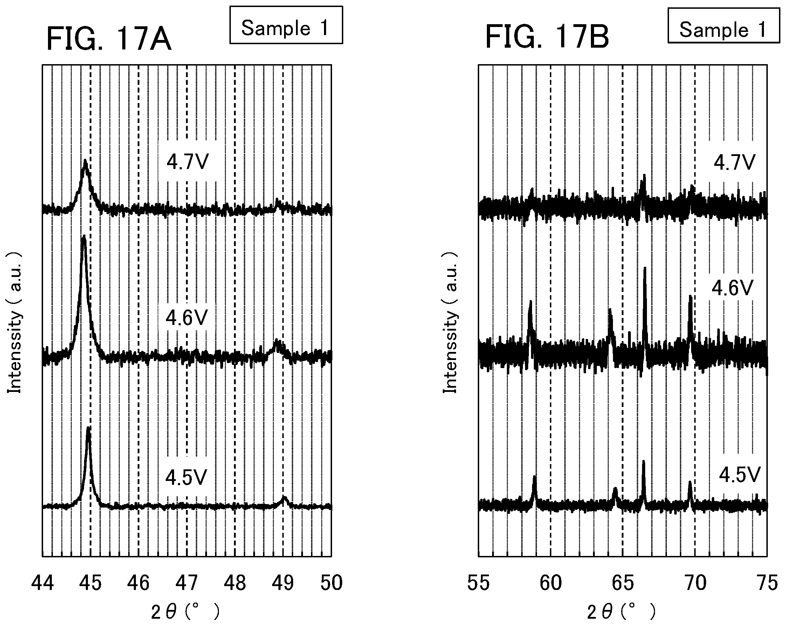

FIG. 15 shows XRD patterns of Sample 1 at charging voltages of 4.5 V, 4.6 V, and 4.7 V. FIG. 16A to FIG. 17B show enlarged patterns of part of FIG. 15.

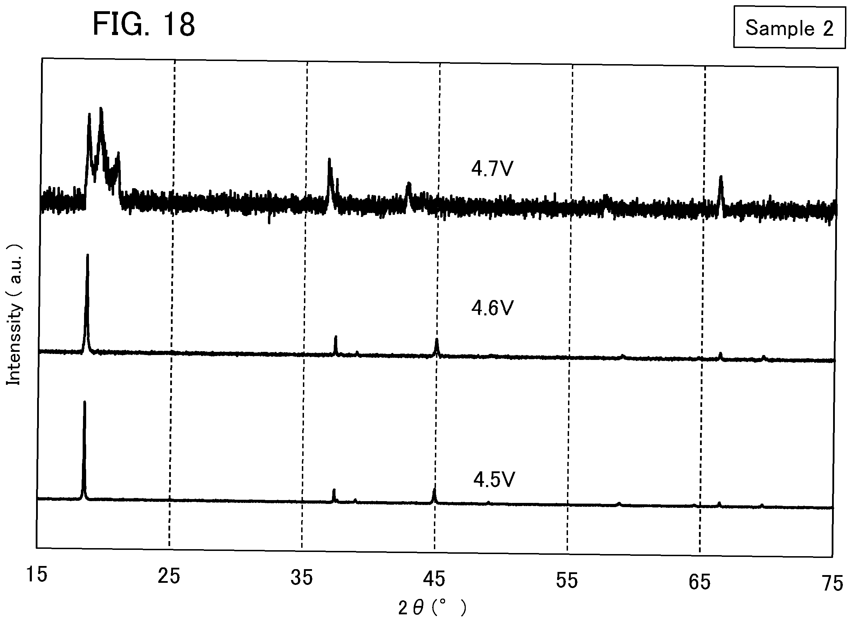

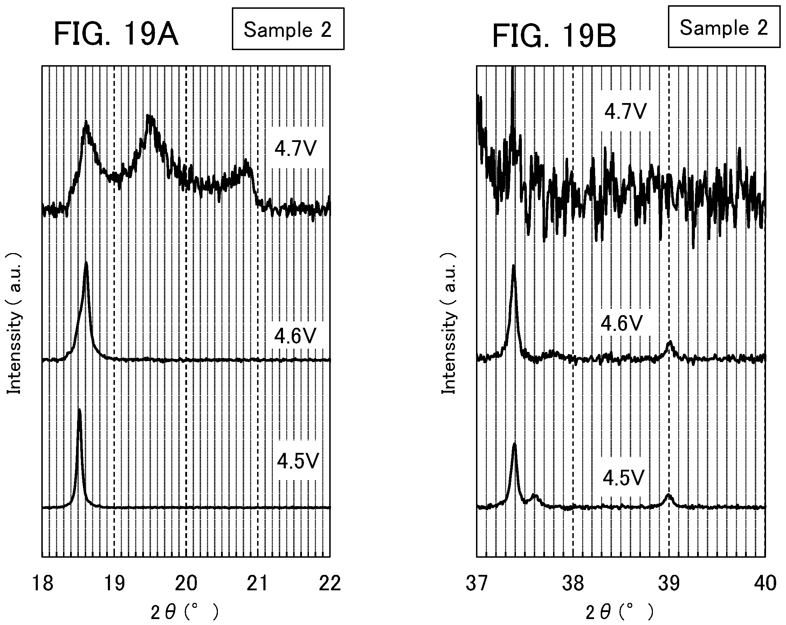

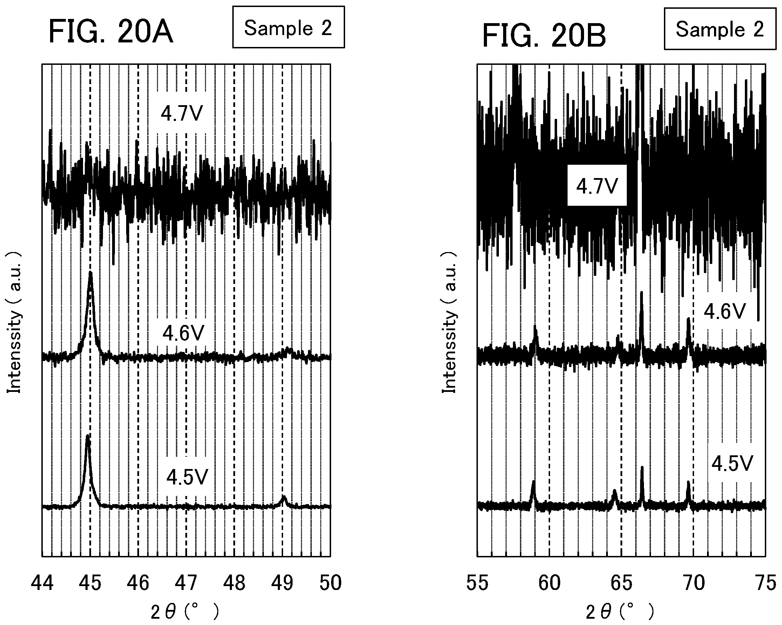

FIG. 18 shows XRD patterns of Sample 2 at charging voltages of 4.5 V, 4.6 V, and 4.7 V. FIG. 19A to FIG. 20B show enlarged patterns of part of FIG. 18.

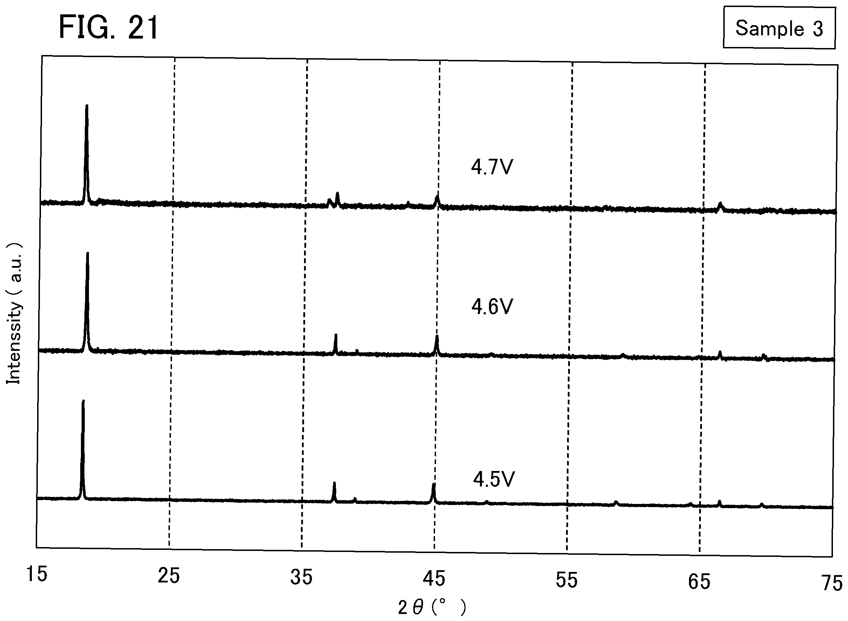

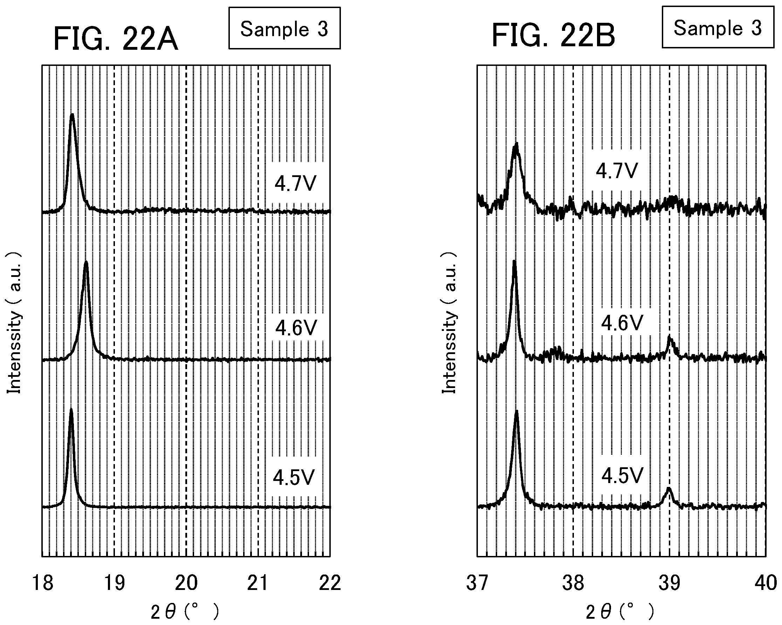

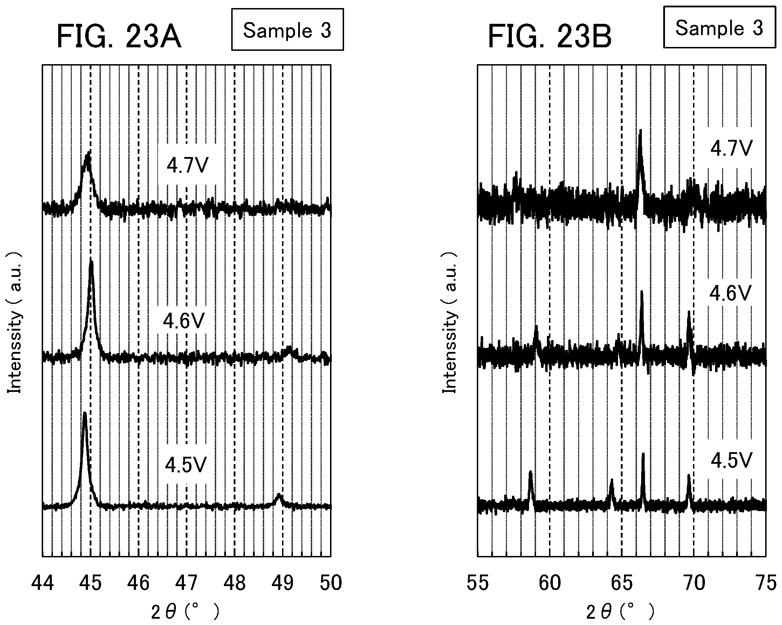

FIG. 21 shows XRD patterns of Sample 3 at charging voltages of 4.5 V, 4.6 V, and 4.7 V. FIG. 22A to FIG. 23B show enlarged patterns of part of FIG. 21.

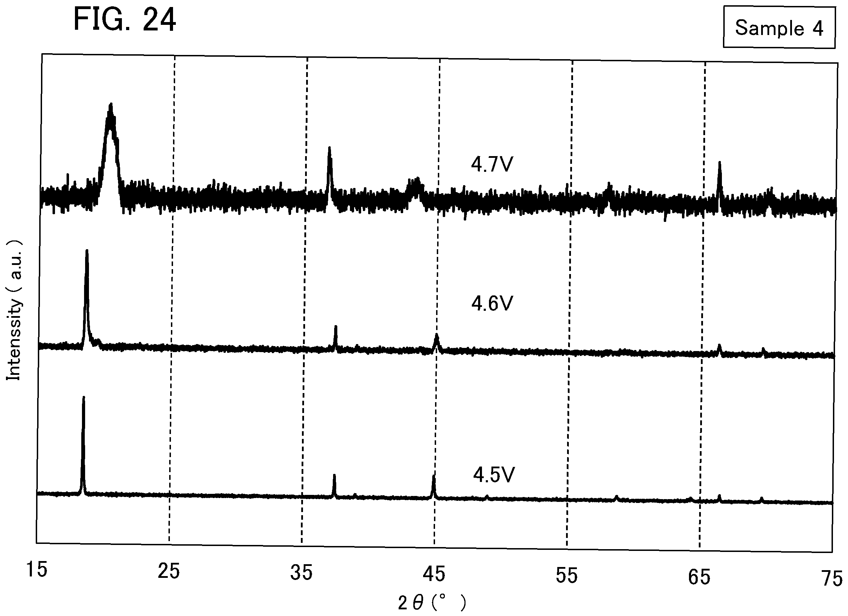

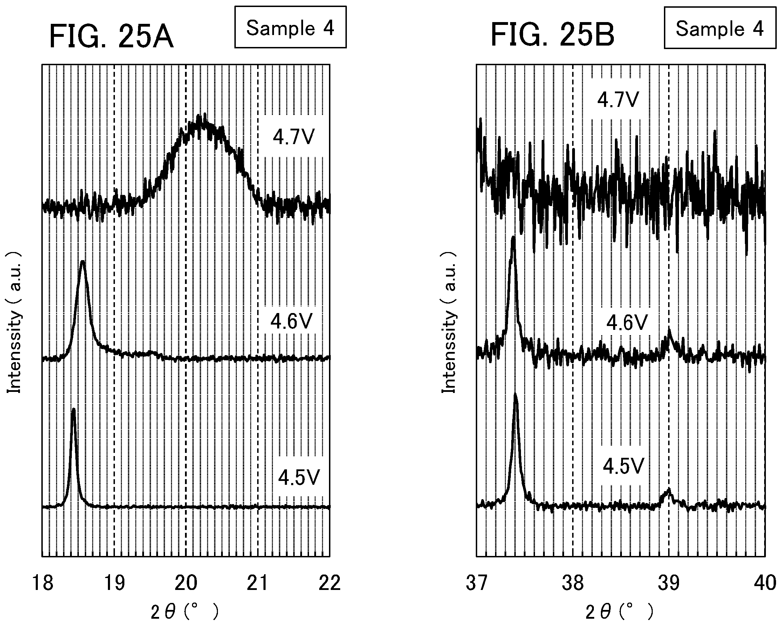

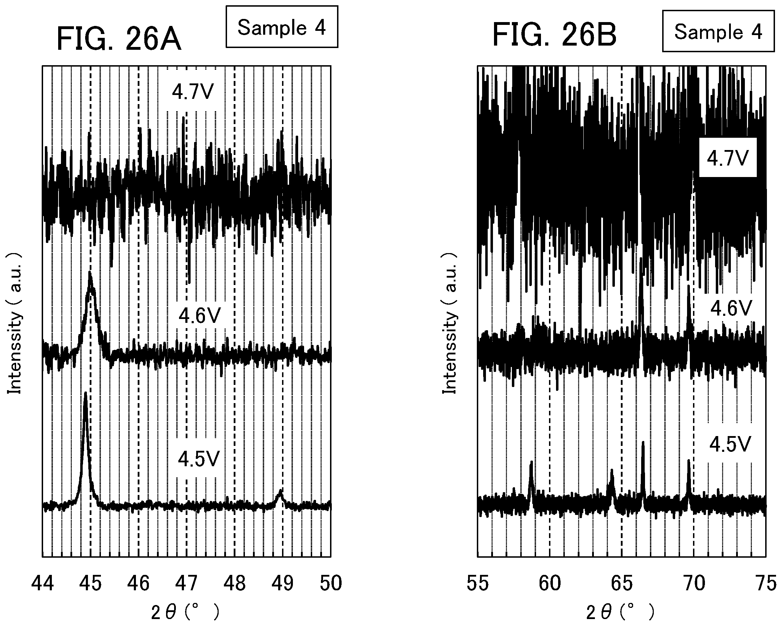

FIG. 24 shows XRD patterns of Sample 4 at charging voltages of 4.5 V, 4.6 V, and 4.7 V. FIG. 25A to FIG. 26B show enlarged patterns of part of FIG. 24.

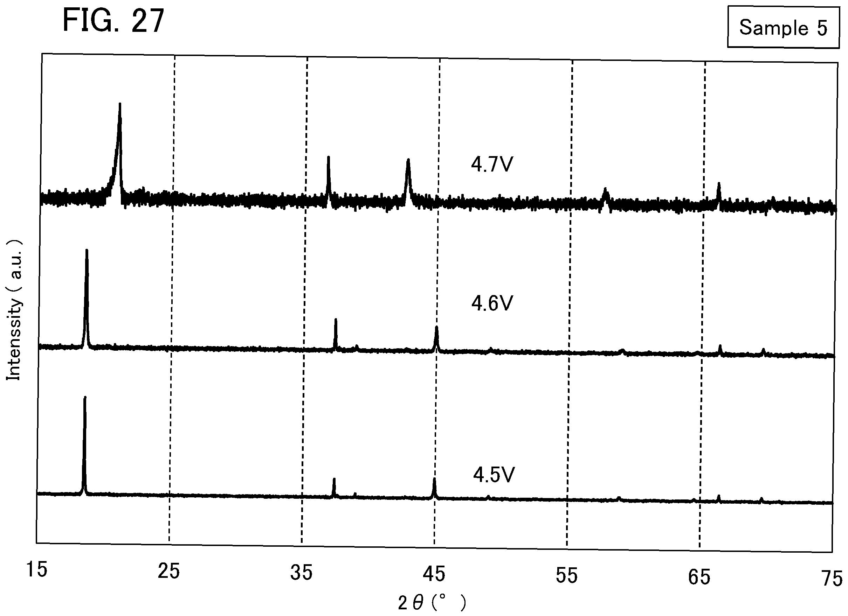

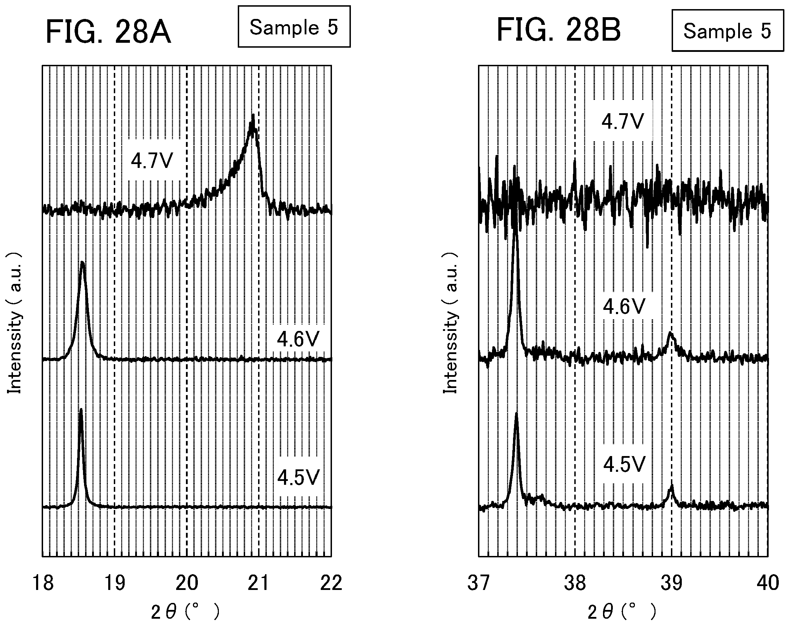

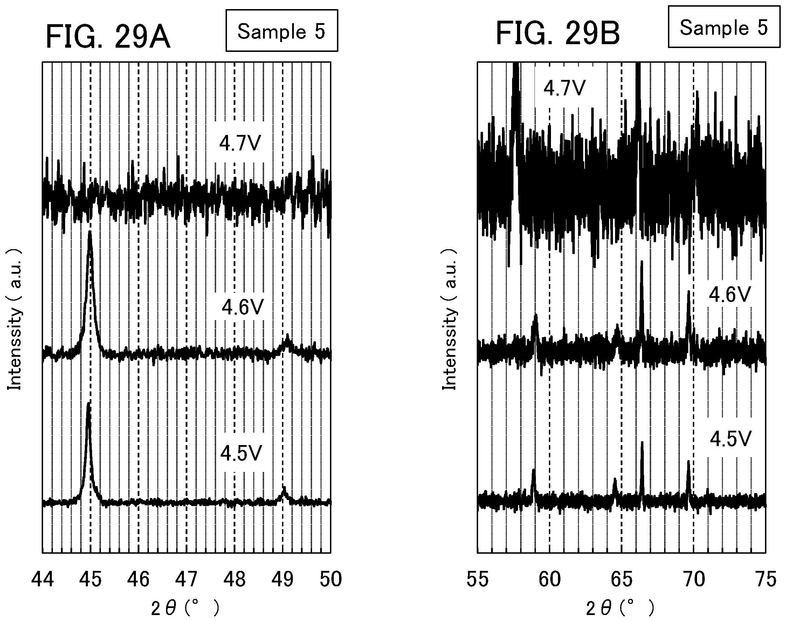

FIG. 27 shows XRD patterns of Sample 5 at charging voltages of 4.5 V, 4.6 V, and 4.7 V. FIG. 28A to FIG. 29B show enlarged patterns of part of FIG. 27.

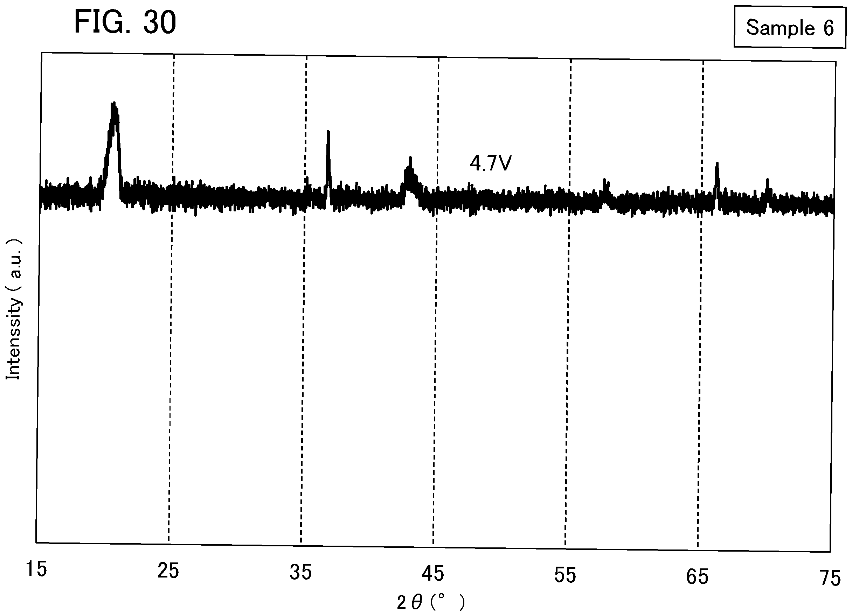

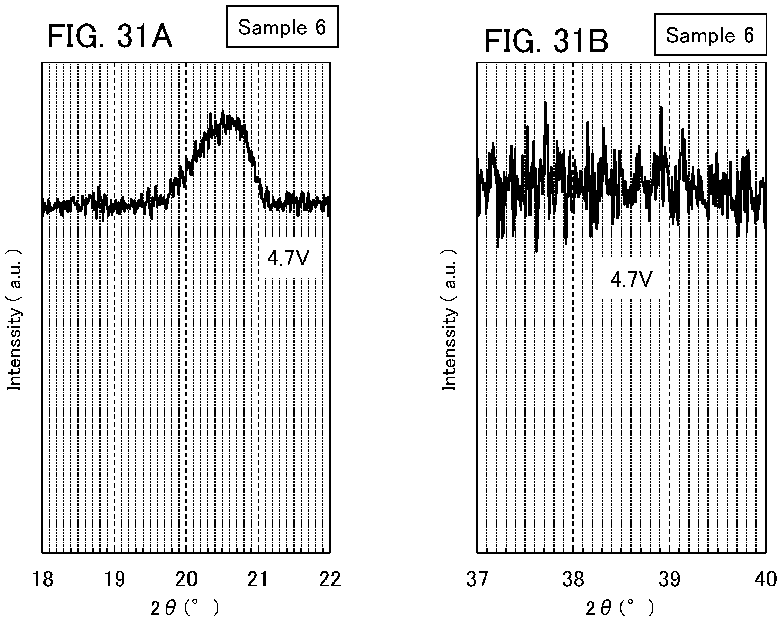

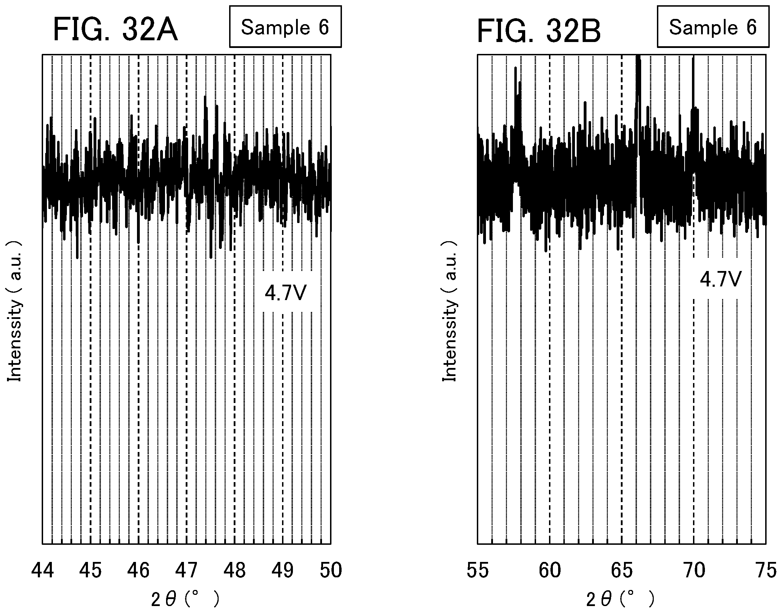

FIG. 30 shows XRD patterns of Sample 6 at a charging voltage of 4.7 V. FIG. 31A to FIG. 32B show enlarged patterns of part of FIG. 30.

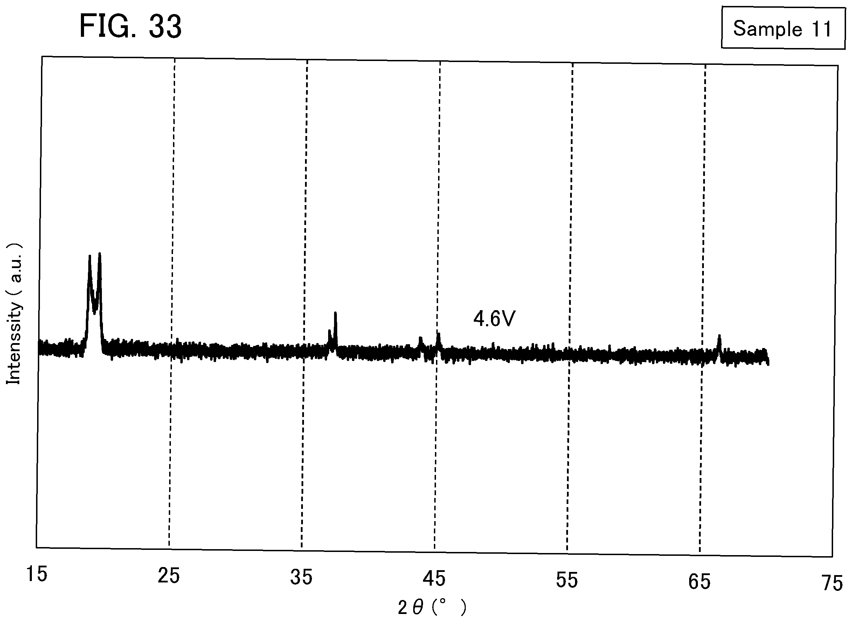

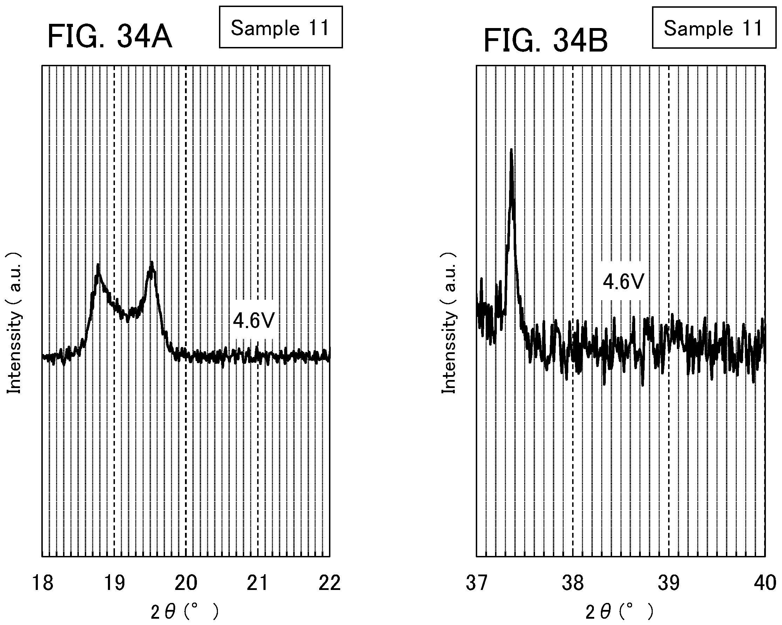

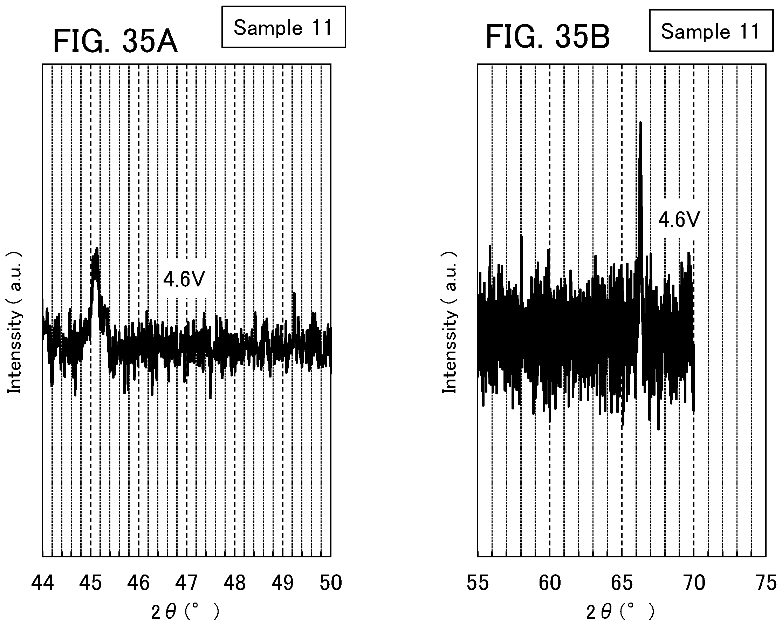

FIG. 33 shows XRD patterns of Sample 11 at a charging voltage of 4.6 V. FIG. 34A to FIG. 35B show enlarged patterns of part of FIG. 33.

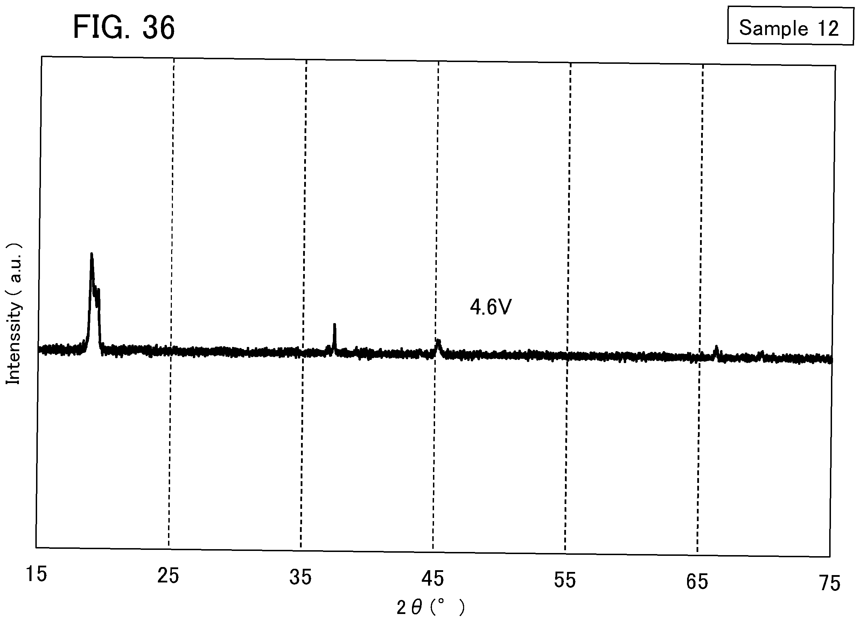

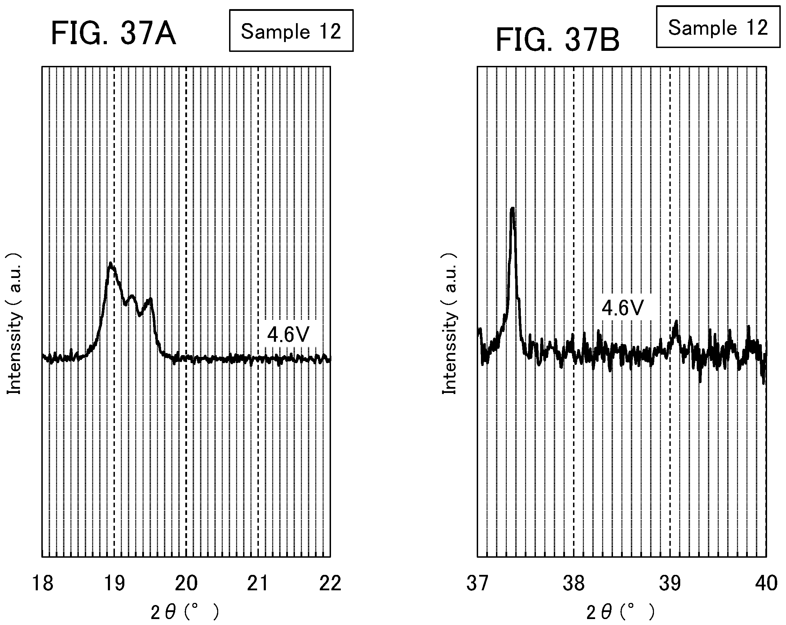

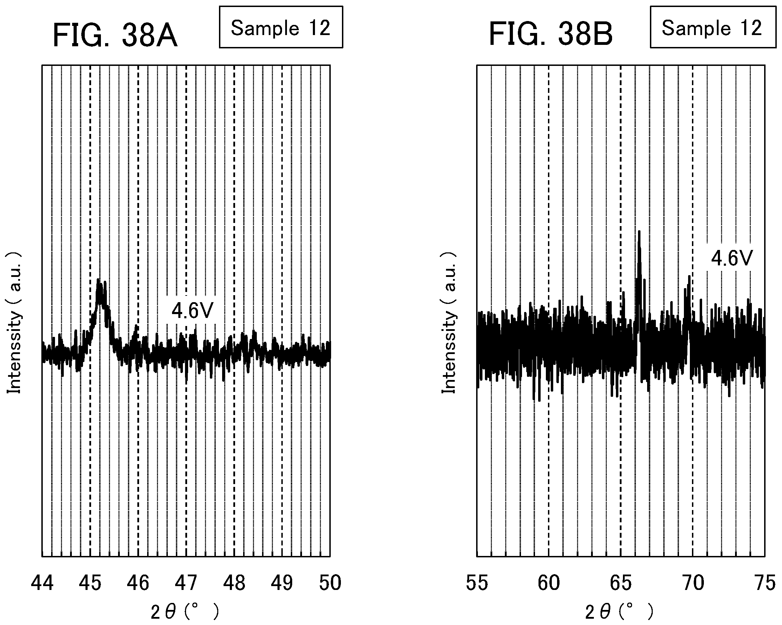

FIG. 36 shows XRD patterns of Sample 12 at a charging voltage of 4.6 V. FIG. 37A to FIG. 38B show enlarged patterns of part of FIG. 36.

Table 2 shows the angles at which the main peaks appear and the intensity ratios of the XRD patterns of Sample 1, Sample 4, and Sample 6 before being used in the half cells and the XRD patterns at the charging voltages of Sample 1 to Sample 6. In Table 2, - (hyphen) indicates that no clear peak was observed. Note that all the values of $2\theta$ shift in some cases depending on the blur of the measurement surface at the time of setting the sample on the XRD analysis apparatus. For example, all the peaks in an XRD pattern are shifted in the same direction at a maximum of approximately 0.1° in some cases. In this case, correction can be performed using analysis software such as DIFFRAC.TOPAS, and the result after the correction can be adopted.

[Table 2]

| | Charging voltage (V) | XRD peaks | | | | | | | | | | | | | Figure |
| | | 1 | | 2 | | 3 | | 4 | | 5 | | 6 | | 7 | | |
| | | $2\theta$ | Intensity ratio | $2\theta$ | Intensity ratio | $2\theta$ | Intensity ratio | $2\theta$ | Intensity ratio | $2\theta$ | Intensity ratio | $2\theta$ | Intensity ratio | $2\theta$ | Intensity ratio | |
|---|---|---|---|---|---|---|---|---|---|---|---|---|---|---|---|---|
| Sample 1 | After synthesis | 18.885 | 1 | 37.261 | 0.266 | 38.314 | 0.043 | 38.907 | 0.086 | 45.061 | 0.4 | 49.262 | 0.059 | 59.419 | 0.052 | 12 to 14 |
| | 4.5 | 18.526 | 1 | 37.391 | 0.148 | 37.628 | 0.031 | 39.015 | 0.029 | 44.947 | 0.163 | 49.029 | 0.021 | 58.857 | 0.032 | 15 to 17 |
| | 4.6 | 18.351 | 1 | 37.412 | 0.251 | - | - | 38.974 | 0.05 | 44.865 | 0.253 | 48.864 | 0.042 | 58.621 | 0.059 | |
| | 4.7 | 18.382 | 1 | - | - | 37.391 | 0.128 | - | - | 44.886 | 0.106 | - | - | - | - | |
| Sample 2 | 4.5 | 18.516 | 1 | 37.391 | 0.131 | 37.586 | 0.027 | 38.995 | 0.028 | 44.947 | 0.146 | 49.039 | 0.022 | 58.898 | 0.026 | 18 to 20 |
| | 4.6 | 18.608 | 1 | 37.381 | 0.194 | 37.792 | 0.02 | 39.015 | 0.039 | 44.999 | 0.178 | 49.101 | 0.024 | 58.991 | 0.034 | |
| | 4.7 | - | - | - | - | - | - | - | - | - | - | - | - | - | - | |
| Sample 3 | 4.5 | 18.403 | 1 | 37.412 | 0.197 | - | - | 38.985 | 004 | 44.875 | 0.192 | 48.916 | 0.027 | 58.662 | 0.037 | 21 to 23 |
| | 4.6 | 18.608 | 1 | 37.381 | 0.201 | 37.854 | 0.027 | 38.995 | 0.048 | 45.009 | 0.201 | - | - | 59.073 | 0.034 | |
| | 4.7 | 18.413 | 1 | 36.774 | 0.073 | 37.412 | 0.141 | - | - | 44.958 | 0.122 | - | - | - | - | |
| Sample 4 | After synthesis | 18.905 | 1 | 37.327 | 0.28 | | | 38.988 | 0.081 | 45.158 | 0.374 | 49.37 | 0.052 | 59.526 | 0.048 | 12 to 14 |
| | 4.5 | 18.434 | 1 | 37.401 | 0.230 | - | - | 39.005 | 0.037 | 44.896 | 0.235 | 48.957 | 0.036 | 58.744 | 0.047 | 24 to 26 |
| | 4.6 | 18.567 | 1 | 37.381 | 0.250 | - | - | 39.005 | 0.061 | 44.978 | 0.181 | - | - | - | - | |
| | 4.7 | - | - | - | - | - | - | - | - | - | - | - | - | - | - | |
| Sample 5 | 4.5 | 18.537 | 1 | 37.391 | 0.192 | 37.658 | 0.026 | 39.005 | 0.045 | 44.958 | 0.205 | 49.039 | 0.034 | 58.898 | 0.035 | 27 to 29 |
| | 4.6 | 18.547 | 1 | 37.381 | 0.320 | - | - | 38.985 | 0.056 | 44.978 | 0.254 | 49.101 | 0.045 | 59.073 | 0.042 | |
| | 4.7 | - | - | - | - | - | - | - | - | - | - | - | - | - | - | |
| Sample 6 | After synthesis | 18.926 | 1 | 37.378 | 0.308 | 38.395 | 0.041 | 39.055 | 0.092 | 45.209 | 0.459 | 49.436 | 0.069 | 59.583 | 0.064 | 12 to 14 |
| | 4.7 | - | - | - | - | - | - | - | - | - | - | - | - | - | - | 30 to 32 |

38

Using the XRD patterns of Sample 1, Sample 4, and Sample 6 after the synthesis and the XRD patterns at the charging voltages of Sample 1 to Sample 6, the crystal structures of the positive electrode active materials were analyzed by DIFFRAC.TOPAS. The space groups were all R-3m. Table 3 shows the lattice constant, the crystallite size, and the unit cell volume. The crystallite size was calculated by Lvol-1B using the Scherrer constant $k = 1$. In addition, several charging capacities at corresponding voltages are shown. For the sample having both the XRD pattern after synthesis and the XRD pattern in the charged state, the change rate $\Delta a$ of the lattice constant of the a-axis, the change rate $\Delta c$ of the lattice constant of the c-axis, and the change rate $\Delta V$ of the unit cell volume are also shown. Note that the change rate is shown as a positive value in the case where the numerical value increases after the synthesis, and the change rate is shown as a negative value in the case where the numerical value decreases after the synthesis.

[Table 3]

| | Charging voltage (V) | Charging capacity (mAh/g) | a (Å) | c (Å) | Crystallite size (nm) | Unit cell volume V (Å³) | $\Delta a$ (Å) | $\Delta c$ (Å) | $\Delta V$ (Å³) |
|---|---|---|---|---|---|---|---|---|---|
| Sample 1 | After synthesis | - | 2.827 | 14.09 | 138.0 | 97.54 | - | - | - |
| | 4.5 | 200.9 | 2.813 | 14.33 | 162.4 | 98.17 | -0.005 | 0.02 | 0.01 |
| | 4.6 | 233.1 | 2.808 | 14.43 | 100.3 | 98.55 | -0.007 | 0.02 | 0.01 |
| | 4.7 | 266.9 | 2.808 | 14.40 | 111.4 | 98.32 | -0.007 | 0.02 | 0.01 |
| Sample 2 | 4.5 | 193.1 | 2.812 | 14.32 | 177.2 | 98.02 | - | - | - |
| | 4.6 | 224.7 | 2.812 | 14.25 | 76.58 | 97.61 | - | - | - |
| | 4.7 | 260.9 | - | - | - | - | - | - | - |
| Sample 3 | 4.5 | 196.7 | 2.809 | 14.39 | 143.3 | 98.35 | - | - | - |
| | 4.6 | 228.4 | 2.812 | 14.24 | 87.75 | 97.52 | - | - | - |
| | 4.7 | 266.2 | 2.809 | 14.36 | 93.4 | 98.13 | - | - | - |
| Sample 4 | After synthesis | - | 2.821 | 14.07 | 147.1 | 96.96 | - | - | - |
| | 4.5 | 198.9 | 2.810 | 14.39 | 146.1 | 98.42 | -0.004 | 0.02 | 0.02 |
| | 4.6 | 231.6 | 2.811 | 14.26 | 53.93 | 97.56 | -0.004 | 0.01 | 0.01 |
| | 4.7 | - | - | - | - | - | - | - | - |
| Sample 5 | 4.5 | 191.0 | 2.812 | 14.31 | 175.3 | 98.02 | - | - | - |
| | 4.6 | 224.9 | 2.810 | 14.26 | 82.3 | 97.58 | - | - | - |
| | 4.7 | 263.2 | - | - | - | - | - | - | - |
| Sample 6 | After synthesis | - | 2.818 | 14.06 | 161.5 | 96.69 | - | - | - |
| | 4.7 | 232.4 | - | - | - | - | - | - | - |

In the unit cell of Sample 1 after the synthesis, the coordinates of cobalt and oxygen were Co (0, 0, 0.5) and O (0, 0, 0.2394).

In the unit cell of Sample 4 after the synthesis, the coordinates of cobalt and oxygen were Co (0, 0, 0.5) and O (0, 0, 0.238).

In the unit cell of Sample 6 after the synthesis, the coordinates of cobalt and oxygen were Co (0, 0, 0.5) and O (0, 0, 0.2391).

According to FIG. 12 to FIG. 38, Table 2, and Table 3, as Ni/(Co+Ni) becomes greater, the lattice constants of the a-axis and the c-axis and the unit cell volumes tend to increase, which are applied to the Vegard's law.

Sample 1 to Sample 6 in which Ni/(Co+Ni) is greater than or equal to 0.05 and less than or equal to 0.2 exhibited relatively clear peaks in the XRD patterns after 4.6 V charging, for example, and Sample 1 to Sample 6 were estimated to have a stable crystal structure. Meanwhile, Sample 11 and Sample 12 in which Ni/(Co+Ni) is 0.01 exhibited unclear peaks in the XRD patterns after 4.6 V charging, and it was estimated that the crystal structures thereof were gradually broken. Thus, Ni/(Co+Ni) was considered to be preferably greater than 0.01.

Furthermore, in Sample 6 in which Ni/(Co+Ni) is 0.05, an XRD pattern that seems to be $CoO_2$ (O1) is observed in 4.7 V charging. Since the $CoO_2$ (O1) structure is formed due to a shift of the $CoO_2$ layers in Li$M$O₂, repeated charging and discharging the structure is formed therein tends to break the crystal structure, which might adversely affect the cycle performance. Therefore, it can be said that Ni/(Co+Ni) is preferably greater than 0.05, further preferably greater than or equal to 0.1.

The greater Ni/(Co+Ni), the smaller the change rate $\Delta V$ of the unit cell volume tends to be. This feature is preferable for an all-solid-state secondary battery or the like having a problem of a volume change due to charging and discharging.

Meanwhile, the lesser Ni/(Co+Ni) is, the smaller the change rate $\Delta a$ of the lattice constant of the a-axis tends to be, and the higher the stability of the crystal structure is expected to be. Therefore, Ni/(Co+Ni) is preferably less than or equal to 0.3, further preferably less than or equal to 0.215.

[Reference Numerals]

100: positive electrode active material, 100a: surface portion, 100b: inner portion, 101: crystal grain boundary, 104: coating portion

**Claims**

1. A positive electrode active material comprising cobalt, nickel, oxygen, and an additive element,

   wherein a proportion of nickel in a sum of the cobalt and the nickel Ni/(Co+Ni) is greater than or equal to 0.1 and less than or equal to 0.3,
   wherein the positive electrode active material comprises a surface portion and an inner portion,
   wherein an average of a detected amount of the additive element at the surface portion is higher than an average of a detected amount of the additive element in the inner portion, and
   wherein the additive element is one or two or more selected from magnesium, fluorine, calcium, aluminum, silicon, vanadium, copper, and gallium.

2. A positive electrode active material comprising cobalt, nickel, and oxygen,

   wherein a proportion of nickel in a sum of the cobalt and the nickel Ni/(Co+Ni) is greater than 0.175 and less than or equal to 0.215, and
   wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.526 \pm 0.1°,$$

$$2\theta = 37.391 \pm 0.1°,$$

$$2\theta = 37.628 \pm 0.1°,$$

$$2\theta = 39.015 \pm 0.1°,$$

$$2\theta = 44.947 \pm 0.1°,$$

$$2\theta = 49.029 \pm 0.1°,$$

   and

$$2\theta = 58.857 \pm 0.1°.$$

3. A positive electrode active material comprising cobalt, nickel, and oxygen,

wherein a proportion of nickel in a sum of the cobalt and the nickel Ni/(Co+Ni) is greater than 0.175 and less than or equal to 0.215, and

wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.351 \pm 0.1°,$$

$$2\theta = 37.412 \pm 0.1°,$$

$$2\theta = 38.974 \pm 0.1°,$$

$$2\theta = 44.865 \pm 0.1°,$$

$$2\theta = 48.864 \pm 0.1°,$$

and

$$2\theta = 58.621 \pm 0.1°.$$

4. A positive electrode active material comprising cobalt, nickel, and oxygen,

wherein a proportion of nickel in a sum of the cobalt and the nickel Ni/(Co+Ni) is greater than 0.175 and less than or equal to 0.215, and

wherein when the positive electrode active material in a state of being charged to 4.7 V (vs. Li/Li$^+$) is analyzed by powder X-ray diffraction using CuK$\alpha_1$ radiation, diffraction peaks are observed at at least two or more of

$$2\theta = 18.382 \pm 0.1°,$$

$$2\theta = 37.391 \pm 0.1°,$$

and

$$2\theta = 44.886 \pm 0.1°.$$

5. A positive electrode active material comprising cobalt, nickel, oxygen, and an additive element,

wherein the additive element is magnesium and fluorine,

wherein a proportion of nickel in a sum of the cobalt and the nickel Ni/(Co+Ni) is greater than 0.175 and less than or equal to 0.215, and

wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.516 \pm 0.1°,$$

$$2\theta = 37.391 \pm 0.1°,$$

$$2\theta = 37.586 \pm 0.1°,$$

$$2\theta = 38.995 \pm 0.1°,$$

$$2\theta = 44.947 \pm 0.1°,$$

$$2\theta = 49.039 \pm 0.1°,$$

and

$$2\theta = 58.898 \pm 0.1°.$$

6. A positive electrode active material comprising cobalt, nickel, oxygen, and an additive element,

wherein the additive element is magnesium and fluorine,
wherein a proportion of nickel in a sum of the cobalt and the nickel Ni/(Co+Ni) is greater than 0.175 and less than or equal to 0.215, and
wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.608 \pm 0.1°,$$

$$2\theta = 37.381 \pm 0.1°,$$

$$2\theta = 37.792 \pm 0.1°,$$

$$2\theta = 39.015 \pm 0.1°,$$

$$2\theta = 44.999 \pm 0.1°,$$

$$2\theta = 49.101 \pm 0.1°,$$

and

$$2\theta = 58.991 \pm 0.1°.$$

7. A positive electrode active material comprising cobalt, nickel, and oxygen,

wherein a proportion of nickel in a sum of the cobalt and the nickel Ni/(Co+Ni) is greater than 0.175 and less than or equal to 0.215, and
wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.403 \pm 0.1°,$$

$$2\theta = 37.412 \pm 0.1°,$$

$$2\theta = 38.985 \pm 0.1°,$$

$$2\theta = 44.875 \pm 0.1°,$$

$$2\theta = 48.916 \pm 0.1°,$$

and

$$2\theta = 58.662 \pm 0.1°.$$

8. A positive electrode active material comprising cobalt, nickel, and oxygen,

wherein a proportion of nickel in a sum of the cobalt and the nickel Ni/(Co+Ni) is greater than 0.175 and less than or equal to 0.215, and

wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.608 \pm 0.1°,$$

$$2\theta = 37.381 \pm 0.1°,$$

$$2\theta = 37.854 \pm 0.1°,$$

$$2\theta = 38.995 \pm 0.1°,$$

$$2\theta = 45.009 \pm 0.1°,$$

and

$$2\theta = 59.073 \pm 0.1°.$$

9. A positive electrode active material comprising cobalt, nickel, and oxygen,

wherein a proportion of nickel in a sum of the cobalt and the nickel Ni/(Co+Ni) is greater than 0.175 and less than or equal to 0.215, and

wherein when the positive electrode active material in a state of being charged to 4.7 V (vs. Li/Li$^+$) is analyzed by powder X-ray diffraction using CuK$\alpha_1$ radiation, diffraction peaks are observed at at least two or more of

$$2\theta = 18.413 \pm 0.1°,$$

$$2\theta = 36.774 \pm 0.1°,$$

$$2\theta = 37.412 \pm 0.1°,$$

and

$$2\theta = 44.958 \pm 0.1°.$$

10. A positive electrode active material comprising cobalt, nickel, oxygen, and an additive element,

wherein a proportion of nickel in a sum of the cobalt and the nickel Ni/(Co+Ni) is greater than 0.075 and less than or equal to 0.125,

wherein the positive electrode active material comprises a surface portion and an inner portion,

wherein an average of a detected amount of the additive element at the surface portion is higher than an average of a detected amount of the additive element in the inner portion, and

wherein the additive element is one or more selected from magnesium, fluorine, calcium, aluminum, silicon, vanadium, copper, and gallium.

**11.** A positive electrode active material comprising cobalt, nickel, and oxygen,

wherein a proportion of nickel in a sum of the cobalt and the nickel Ni/(Co+Ni) is greater than 0.075 and less than or equal to 0.125, and

wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.434 \pm 0.1°,$$

$$2\theta = 37.401 \pm 0.1°,$$

$$2\theta = 39.005 \pm 0.1°,$$

$$2\theta = 44.896 \pm 0.1°,$$

$$2\theta = 48.957 \pm 0.1°,$$

and

$$2\theta = 58.744 \pm 0.1°.$$

**12.** A positive electrode active material comprising cobalt, nickel, and oxygen,

wherein a proportion of nickel in a sum of the cobalt and the nickel Ni/(Co+Ni) is greater than 0.075 and less than or equal to 0.125, and

wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.567 \pm 0.1°,$$

$$2\theta = 37.381 \pm 0.1°,$$

$$2\theta = 39.005 \pm 0.1°,$$

and

$$2\theta = 44.978 \pm 0.1°.$$

**13.** A positive electrode active material comprising cobalt, nickel, oxygen, and an additive element,

wherein the additive element is magnesium and fluorine,

wherein a proportion of nickel in a sum of the cobalt and the nickel Ni/(Co+Ni) is greater than 0.075 and less than or equal to 0.125, and

wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.537 \pm 0.1°,$$

$$2\theta = 37.391 \pm 0.1°,$$

$$2\theta = 37.658 \pm 0.1°,$$

$$2\theta = 39.005 \pm 0.1°,$$

$$2\theta = 44.958 \pm 0.1°,$$

$$2\theta = 49.039 \pm 0.1°,$$

and

$$2\theta = 58.898 \pm 0.1°.$$

**14.** A positive electrode active material comprising cobalt, nickel, oxygen, and an additive element,

wherein the additive element is magnesium and fluorine,
wherein a proportion of nickel in a sum of the cobalt and the nickel Ni/(Co+Ni) is greater than 0.075 and less than or equal to 0.125, and
wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.547 \pm 0.1°,$$

$$2\theta = 37.381 \pm 0.1°,$$

$$2\theta = 38.985 \pm 0.1°,$$

$$2\theta = 44.978 \pm 0.1°,$$

$$2\theta = 49.101 \pm 0.1°,$$

and

$$2\theta = 59.073 \pm 0.1°.$$

**15.** A positive electrode active material comprising cobalt, nickel, oxygen, and an additive element,

wherein a proportion of nickel in a sum of the cobalt and the nickel Ni/(Co+Ni) is greater than 0.025 and less than or equal to 0.075,
wherein the positive electrode active material comprises a surface portion and an inner portion,
wherein an average of a detected amount of the additive element at the surface portion is higher than an average of a detected amount of the additive element in the inner portion, and
wherein the additive element is one or more selected from magnesium, fluorine, calcium, aluminum, silicon, vanadium, copper, and gallium.

**16.** A positive electrode active material comprising cobalt, nickel, and oxygen,

wherein a proportion of nickel in a sum of the cobalt and the nickel Ni/(Co+Ni) is greater than 0.025 and less than or equal to 0.075, and
wherein when the positive electrode active material in a state of being charged to 4.5 V (vs. Li/Li$^+$) is analyzed by powder X-ray diffraction using CuK$\alpha_1$ radiation, diffraction peaks are observed at at least two or more of

$$2\theta = 18.567 \pm 0.1°,$$

$$2\theta = 37.381 \pm 0.1°,$$

$$2\theta = 37.710 \pm 0.1°,$$

$$2\theta = 38.985 \pm 0.1°,$$

$$2\theta = 44.968 \pm 0.1°,$$

$$2\theta = 49.070 \pm 0.1°,$$

and

$$2\theta = 58.980 \pm 0.1°.$$

17. A positive electrode active material comprising cobalt, nickel, and oxygen,

   wherein a proportion of nickel in a sum of the cobalt and the nickel Ni/(Co+Ni) is greater than 0.025 and less than or equal to 0.075, and
   wherein when the positive electrode active material in a state of being charged to 4.6 V (vs. Li/Li$^+$) is analyzed by powder X-ray diffraction using CuK$\alpha_1$ radiation, diffraction peaks are observed at at least two or more of

$$2\theta = 18.866 \pm 0.1°,$$

$$2\theta = 37.319 \pm 0.1°,$$

$$2\theta = 38.337 \pm 0.1°,$$

$$2\theta = 38.985 \pm 0.1°,$$

$$2\theta = 45.143 \pm 0.1°,$$

$$2\theta = 49.368 \pm 0.1°,$$

and

$$2\theta = 59.515 \pm 0.1°.$$

18. A secondary battery comprising the positive electrode active material according to claim 1 to claim 17.

19. An electronic device comprising the secondary battery according to claim 18.

20. A vehicle comprising the secondary battery according to claim 18.

# FIG. 1A

100

# FIG. 1B

100

$LiCo_{1-y}Ni_yO_2$

FIG. 2

## FIG. 3A

RS

LRS

⊢——⊣ 1 nm

## FIG. 3B

CoO(48-1719)

OA:(1 1 -1)⇒d=0.25nm
OB:(2 0 0) ⇒d=0.21nm
OC:(1 -1 1)⇒d=0.25nm
∠AOB=54.7°
∠BOC=54.8°
∠AOC=109.5°
⇒[0 1 1] incidence

11-1

dOA=0.24nm
dOB=0.21nm
dOC=0.25nm
∠AOB=55.0°
∠BOC=54.3°
∠AOC=109.3°

## FIG. 3C

LiCoO$_2$(50-0653)

OA:(0 0 0 3)⇒d=0.47nm
OB:(1 0 -1 4)⇒d=0.20nm
OC:(1 0 -1 1)⇒d=0.24nm
∠AOB=55.2°
∠BOC=24.9°
∠AOC=80.1°
⇒[1 -2 1 0] incidence

0003

dOA=0.28nm
dOB=0.20nm
dOC=0.25nm
∠AOB=53.5°
∠BOC=24.0°
∠AOC=77.5°

# FIG. 4A

Li source   Co source   Ni source

S11 ▽ ▽ ▽

S12 Grinding·Mixing ◯

S13 Heating ◯

S14 $LiCo_{1-y}Ni_yO_2$ ▽

Positive electrode active material 100

# FIG. 4B

Li source  Co source  Ni source

S11 ▽ ▽ ▽

S12 Grinding·Mixing ◯

S13 Heating ◯

S14 $LiCo_{1-y}Ni_yO_2$ ▽

[A source] S20

S31 Mixing ◯

S32 Mixture 903 ▽

S33 Heating ◯

S34 Positive electrode active material 100 ▽

# FIG. 4C

S20

Mg source  F source

S21 ▽ ▽

S22 Grinding·Mixing ◯

S23 A source ▽

FIG. 5A
100

104  100a  100b

FIG. 5B
100

100a  104

100b

101

# FIG. 6

## FIG. 7A

503

502

504

505

501

506

## FIG. 7B

511

510

506

507

503

## FIG. 7C

509

# FIG. 8A

7401 7405 7402
7400
7403
7406 7407
7404 7403

# FIG. 8B

7401 7405 7402
7400
7403
7406 7407
7404 7403

# FIG. 8C

7407

# FIG. 8D

7100
7102
7101
7104
7103

# FIG. 8E

7104

# FIG. 8F

7200
7202 19:34
7207
7201
7205
7206
7203
7204

# FIG. 8G

7300
7304

# FIG. 8H

7500 7501
7504
7502

FIG. 9A

4000 { 4000a
        4000b

4001c
4001b     } 4001
4001a

4003 { 4003a
        4003b

4002a } 4002
4002b

4005a } 4005
4005b

4006a } 4006
4006b

FIG. 9B

4005a } 4005
4005b

FIG. 9C

4005a

913

FIG. 9D

4100a

4110
4104
4103     } 4100b
4102
4101

4111

## FIG. 10A <u>6300</u>

6302     6301

6305

6306

6310

6304

6303

## FIG. 10B

<u>6400</u>     6401

6403

6404

6402

6405

6409

6406

6407

6408

## FIG. 10C

<u>6500</u>     6501

6504

6502    6503

## FIG. 11A

## FIG. 11B

## FIG. 11C

FIG. 12

EP 4 546 463 A1

FIG. 13A

After synthesis

Sample 1

Sample 4

Sample 6

Intensity (a.u.)

2θ(°)

18　19　20　21　22

FIG. 13B

After synthesis

Sample 1

Sample 4

Sample 6

Intensity (a.u.)

2θ(°)

37　38　39　40

FIG. 14A | After synthesis

Sample 1

Sample 4

Sample 6

Intensity ( a.u. )

44　45　46　47　48　49　50

2θ (°)

FIG. 14B | After synthesis

Sample 1

Sample 4

Sample 6

Intensity ( a.u. )

55　60　65　70　75

2θ (°)

EP 4 546 463 A1

FIG. 15

FIG. 16A    Sample 1

FIG. 16B    Sample 1

FIG. 17A

Sample 1

FIG. 17B

Sample 1

EP 4 546 463 A1

FIG. 18

Sample 2

4.7V

4.6V

4.5V

Intensity ( a.u. )

15　　　25　　　35　　　45　　　55　　　65　　　75

$2\theta$ (° )

EP 4 546 463 A1

FIG. 19A

Sample 2

FIG. 19B

Sample 2

FIG. 20A    Sample 2

4.7V

4.6V

4.5V

Intensity ( a.u. )

44   45   46   47   48   49   50

$2\theta$ (° )

FIG. 20B    Sample 2

4.7V

4.6V

4.5V

Intensity ( a.u. )

55   60   65   70   75

$2\theta$ (° )

EP 4 546 463 A1

FIG. 21

Sample 3

Intensity ( a.u. )

4.7V

4.6V

4.5V

15    25    35    45    55    65    75

2θ (°)

FIG. 22A  Sample 3

FIG. 22B  Sample 3

EP 4 546 463 A1

FIG. 23A    Sample 3

FIG. 23B    Sample 3

FIG. 24

Sample 4

4.7V

4.6V

4.5V

Intensity ( a.u. )

2θ (°)

15　25　35　45　55　65　75

Sample 4

EP 4 546 463 A1

FIG. 25A Sample 4

FIG. 25B Sample 4

FIG. 26A — Sample 4

FIG. 26B — Sample 4

EP 4 546 463 A1

FIG. 27

Sample 5

4.7V

4.6V

4.5V

Intensity ( a.u. )

15    25    35    45    55    65    75

$2\theta$ (° )

EP 4 546 463 A1

FIG. 28A

FIG. 28B

FIG. 29A  Sample 5

FIG. 29B  Sample 5

FIG. 30

Sample 6

4.7V

Intensity ( a.u. )

2θ (° )

EP 4 546 463 A1

EP 4 546 463 A1

FIG. 31A

Sample 6

4.7V

Intensity (a.u.)

2θ(°)

18    19    20    21    22

FIG. 31B

Sample 6

4.7V

Intensity (a.u.)

2θ(°)

37    38    39    40

FIG. 32B — Sample 6

FIG. 32A — Sample 6

EP 4 546 463 A1

## FIG. 33

Sample 11

4.6V

Intensity ( a.u. )

15    25    35    45    55    65    75

$2\theta$ (° )

FIG. 34A — Sample 11

FIG. 34B — Sample 11

EP 4 546 463 A1

FIG. 35A

Sample 11

FIG. 35B

Sample 11

EP 4 546 463 A1

FIG. 36

Sample 12

## FIG. 37A

Sample 12

Intensity ( a.u. )

4.6V

2θ (°)

## FIG. 37B

Sample 12

Intensity ( a.u. )

4.6V

2θ (°)

EP 4 546 463 A1

EP 4 546 463 A1

FIG. 38A

Sample 12

FIG. 38B

Sample 12

## INTERNATIONAL SEARCH REPORT

International application No.

**PCT/IB2023/055955**

### A. CLASSIFICATION OF SUBJECT MATTER

*H01M 4/525*(2010.01)i; *C01G 53/00*(2006.01)i; *H01M 4/36*(2006.01)i
FI:   H01M4/525; C01G53/00 A; H01M4/36 C

According to International Patent Classification (IPC) or to both national classification and IPC

### B. FIELDS SEARCHED

Minimum documentation searched (classification system followed by classification symbols)

H01M4/525; C01G53/00; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-220261 A (SONY CORP.) 20 November 2014 (2014-11-20) claims, paragraph [0096] | 1, 10, 18-20 |
| A | | 2-9, 11-17 |
| X | CN 111613782 A (ZHEJIANG FENGLI NEW ENERGY TECHNOLOGY CO., LTD.) 01 September 2020 (2020-09-01) claims, paragraph [0034] | 1, 18-20 |
| A | | 2-17 |
| X | JP 2021-007100 A (SEMICONDUCTOR ENERGY LAB. CO., LTD.) 21 January 2021 (2021-01-21) claims, paragraphs [0474]-[0483] | 1, 10, 15, 18-20 |
| A | | 2-9, 11-14, 16, 17 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 September 2023** | **19 September 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
Information on patent family members

International application No.

**PCT/IB2023/055955**

| Patent document cited in search report | | | Publication date (day/month/year) | Patent family member(s) | | | Publication date (day/month/year) |
|---|---|---|---|---|---|---|---|
| JP | 2014-220261 | A | 20 November 2014 | US | 2010/0173197 | A1 | |
| | | | | claims, paragraph [0093] | | | |
| | | | | KR | 10-2008-0007469 | A | |
| | | | | CN | 101223660 | A | |
| CN | 111613782 | A | 01 September 2020 | (Family: none) | | | |
| JP | 2021-007100 | A | 21 January 2021 | US | 2020/0176770 | A1 | |
| | | | | claims, paragraphs [0532]-[0543] | | | |
| | | | | EP | 3646402 | A1 | |
| | | | | CN | 110337744 | A | |
| | | | | KR | 10-2020-0023409 | A | |
| | | | | CN | 111933906 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019179758 A
- WO 2020026078 A
- JP 2020140954 A

**Non-patent literature cited in the description**

- **TOYOKI OKUMURA et al.** Correlation of lithium ion distribution and X-ray absorption near-edge structure in O3- and O2-lithium cobalt oxides from first-principle calculation. *Journal of Materials Chemistry*, 2012, vol. 22, 17340-17348
- **MOTOHASHI, T. et al.** Electronic phase diagram of the layered cobalt oxide system LixCoO2 (0.0 ≤ x ≤ 1.0). *Physical Review B*, vol. 80 (16), 165114
- **ZHAOHUI CHEN et al.** Staging Phase Transitions in LixCoO. *Journal of The Electrochemical Society*, 2002, vol. 149 (12), A1604-A1609
- **G. G. AMATUCCI et al.** CoO2, The End Member of the LixCoO2 Solid Solution. *J. Electrochem. Soc.*, 1996, vol. 143 (3), 1114
- **ATSUSHI UEDA** ; **TSUTOMU OHZUKU**. Solid-State Redox Reactions of LiNi1/2Co1/2O2 (R3m) for 4 Volt Secondary Lithium Cells. *Journal of The Electrochemical Society*, August 1994, vol. 141 (8)
- **BELSKY, A. et al.** New developments in the Inorganic Crystal Structure Database (ICSD): accessibility in support of materials research and design. *Acta Cryst.*, 2002, vol. B58, 364-369
- **AKIMOTO, J.** ; **GOTOH, Y.** ; **OOSAWA, Y**. Synthesis and structure refinement of LiCoO2 single crystals. *Journal of Solid State Chemistry*, 1998, vol. 141, 298-302
- **F. IZUMI** ; **K. MOMMA**. *Solid State Phenom.*, 2007, vol. 130, 15-20
- **RASBAND, W. S.** ; **IMAGEJ**. *U. S. National Institutes of Health*, 1997, http://rsb.info.nih.gov/ij
- **SCHNEIDER, C. A** ; **RASBAND, W. S.** ; **ELICEIRI K. W.** NIH Image to ImageJ: 25 years of image analysis. *Nature Methods*, 2012, vol. 9, 671-675
- **ABRAMOFF, M. D.** ; **MAGELHAES, P. J.** ; **RAM, S. J.** Image Processing with ImageJ. *Biophotonics International*, 2004, vol. 11 (7), 36-42
- **SETO, Y.** ; **OHTSUKA, M**. ReciPro: free and open-source multipurpose crystallographic software integrating a crystal model database and viewer, diffraction and microscopy simulators, and diffraction data analysis tools. *J. Appl. Cryst.*, 2022, vol. 55
- **W. E. COUNTS** ; **R. ROY** ; **E. F. OSBORN**. Fluoride Model Systems: II, The Binary Systems CaF2-BeF2, MgF2-BeF2, and LiF-MgF. *Journal of the American Ceramic Society*, 1953, vol. 36 (1), 12-17
- **SHINYA KITANO et al.** *GS Yuasa Technical Report*, December 2015, vol. 2 (2), 18-24